# EUROPEAN PATENT APPLICATION

(11) **EP 4 365 212 A1**
(43) Date of publication of application: **08.05.2024**
(21) Application number: 22833285.4
(22) Date of filing: 30.06.2022
(51) Int. Cl.: C08F 8/06, B29C 48/00, C08F 2/44, C08F 6/22, C08F 261/06

(54) **METHOD FOR PRODUCING FLUOROPOLYMER COMPOSITION, AND FLUOROPOLYMER COMPOSITION**

(30) Priority: 30.06.2021 JP 2021109123
(71) Applicant: DAIKIN INDUSTRIES, LTD., Osaka-Shi, Osaka 530-0001 (JP)
(72) Inventor: NANBA, Yoshinori, Osaka-shi, Osaka 530-0001 (JP); ICHIKAWA, Kenji, Osaka-shi, Osaka 530-0001 (JP); KATO, Taketo, Osaka-shi, Osaka 530-0001 (JP); YAMANAKA, Taku, Osaka-shi, Osaka 530-0001 (JP)
(74) Representative: Hoffmann Eitle
(86) International application number: PCT/JP2022/026262
(87) International publication number: WO 2023/277139

(57) **Abstract**

Provided is a method for producing a fluoropolymer composition, comprising bringing a fluoropolymer raw material into contact with an oxidizing agent, wherein the fluoropolymer raw material is obtained by polymerizing a fluoromonomer in an aqueous medium in the presence of a polymer (I) containing a polymerization unit (I) derived from a monomer (I) represented by the general formula (I).

CX¹X³=CX²R(-CZ¹Z²-A⁰)ₘ (I)

wherein X¹ and X³ are each independently F, Cl, H, or CF₃; X² is H, F, an alkyl group, or a fluorine-containing alkyl group; A° is an anionic group; R is a linking group; Z¹ and Z² are each independently H, F, an alkyl group, or a fluorine-containing alkyl group; and m is an integer of 1 or more.

## Description

### TECHNICAL FIELD

The present disclosure relates to a method for producing a fluoropolymer composition, and a fluoropolymer composition.

### BACKGROUND ART

Patent Document 1 discloses that if PTFE fine power produced from dispersion containing the hydrocarbon surfactant sodium dodecyl sulfate (SDS) is converted into paste-extruded shapes or films and subsequently sintered, an undesirable gray or brown color will typically arise.

Accordingly, Patent Document 1 proposes a process for reducing thermally induced discoloration of fluoropolymer resin, said fluoropolymer resin produced by polymerizing fluoromonomer in an aqueous dispersion medium to form aqueous fluoropolymer dispersion and isolating said fluoropolymer from said aqueous medium to obtain said fluoropolymer resin, said process comprising exposing the aqueous fluoropolymer dispersion to oxidizing agent.

Patent Document 2 discloses a method for producing a fluoropolymer, comprising polymerizing a fluoromonomer in an aqueous medium in the presence of a polymer (1) containing a polymerization unit (1) derived from a monomer represented by the following general formula (1):

CX₂=CY(-CZ₂-O-Rf-A) (1)

wherein X is the same or different and is -H or -F; Y is -H, -F, an alkyl group, or a fluorine-containing alkyl group; Z is the same or different and is -H, -F, an alkyl group, or a fluoroalkyl group; Rf is a fluorine-containing alkylene group having 1 to 40 carbon atoms or a fluorine-containing alkylene group having 2 to 100 carbon atoms and having an ether bond; and A is -COOM, -SO₃M, or -OSO₃M, wherein M is -H, a metal atom,-NR⁷₄, optionally substituted imidazolium, optionally substituted pyridinium, or optionally substituted phosphonium, and R⁷ is H or an organic group; provided that at least one of X, Y, and Z contains a fluorine atom.

### RELATED ART

### PATENT DOCUMENTS

Patent Document 1: Japanese Translation of PCT International Application Publication No. 2015-516028
Patent Document 2: International Publication No. WO 2019/168183

### SUMMARY OF THE INVENTION

### PROBLEM TO BE SOLVED BY THE INVENTION

An object of the present disclosure is to provide a method for producing a fluoropolymer composition, when the fluoropolymer composition obtained by polymerizing a fluoromonomer in the presence of a polymer (I) containing a polymerization unit (I) derived from a monomer (I) represented by the general formula (I) is extrusion-formed using an extruder, which is capable of suppressing an increase in extrusion pressure even when extrusion forming is repeated using the same extruder.

CX¹X³=CX²R(-CZ¹Z²-A⁰)ₘ (I)

wherein X¹ and X³ are each independently F, Cl, H, or CF₃; X² is H, F, an alkyl group, or a fluorine-containing alkyl group; A° is an anionic group; R is a linking group; Z¹ and Z² are each independently H, F, an alkyl group, or a fluorine-containing alkyl group; and m is an integer of 1 or more.

### MEANS FOR SOLVING THE PROBLEM

The present disclosure provides a method for producing a fluoropolymer composition, comprising bringing a fluoropolymer raw material into contact with an oxidizing agent, wherein the fluoropolymer raw material is obtained by polymerizing a fluoromonomer in an aqueous medium in the presence of a polymer (I) containing a polymerization unit (I) derived from a monomer (I) represented by the general formula (I):

CX¹X³=CX²R(-CZ¹Z²-A⁰)ₘ (I)

wherein X¹ and X³ are each independently F, Cl, H, or CF₃; X² is H, F, an alkyl group, or a fluorine-containing alkyl group; A° is an anionic group; R is a linking group; Z¹ and Z² are each independently H, F, an alkyl group, or a fluorine-containing alkyl group; and m is an integer of 1 or more.

The oxidizing agent is preferably at least one selected from the group consisting of an inorganic acid and a salt thereof.

The oxidizing agent is preferably at least one selected from the group consisting of nitric acid and a salt thereof as well as perchloric acid and a salt thereof.

The amount of the oxidizing agent is preferably 0.01 to 20% by mass based on the fluoropolymer in the fluoropolymer raw material.

The temperature at which the fluoropolymer raw material is brought into contact with the oxidizing agent is preferably 5 to 90°C.

In the production method of the present disclosure, the fluoropolymer composition is preferably obtained by polymerizing the fluoromonomer in the aqueous medium in the presence of the polymer (I) to give the fluoropolymer raw material, adding an oxidizing agent to the fluoropolymer raw material to bring the fluoropolymer raw material into contact with the oxidizing agent, and heat-treating the fluoropolymer composition containing the oxidizing agent.

The fluoropolymer raw material is preferably a fluoropolymer raw material dispersion or a fluoropolymer raw material slurry.

Preferably, the fluoropolymer raw material is a fluoropolymer raw material dispersion, and the fluoropolymer in the fluoropolymer raw material dispersion is coagulated while bringing the fluoropolymer raw material dispersion into contact with the oxidizing agent.

In addition to the oxidizing agent, further a coagulating agent is preferably added.

The fluoropolymer composition is preferably a fluoropolymer fine powder.

The fluoropolymer composition is preferably a molding material to be used to obtain a formed article by paste extrusion forming.

Preferably, the fluoropolymer raw material is a polytetrafluoroethylene raw material, and the fluoropolymer composition is a polytetrafluoroethylene composition.

Moreover, the present disclosure provides a fluoropolymer composition containing at least a fluoropolymer, wherein when forming to obtain a bead having a length of 5 m by subjecting the fluoropolymer composition to paste extrusion forming using an extrusion forming machine equipped with a thoroughly washed extrusion forming die is repeated multiple times, a rate of increase in paste extrusion pressure in the fourth forming based on the paste extrusion pressure in the first forming is 3.0% or less.

### EFFECT OF INVENTION

The present disclosure can provide a method for producing a fluoropolymer composition, when the fluoropolymer composition obtained by polymerizing a fluoromonomer in the presence of a polymer (I) containing a polymerization unit (I) derived from a monomer (I) represented by the general formula (I) is extrusion-formed using an extruder, which is capable of suppressing an increase in extrusion pressure even when extrusion forming is repeated using the same extruder.

### DESCRIPTION OF EMBODIMENTS

Before specifically describing the present disclosure, some terms used herein are defined or explained.

The fluororesin as used herein means a partially crystalline fluoropolymer which is a fluoroplastic. The fluororesin has a melting point and has thermoplasticity, and may be either melt-fabricable or non melt-processible.

The melt-fabricable as used herein means that a polymer has an ability to be processed in a molten state using a conventional processing device such as an extruder or an injection molding machine. Accordingly, a melt-processable fluororesin usually has a melt flow rate of 0.01 to 500 g/10 min as measured by the measurement method described below.

Polytetrafluoroethylene (PTFE) as used herein is preferably a fluoropolymer having a tetrafluoroethylene content of 99 mol% or more based on all polymerization units.

The fluororesin excluding polytetrafluoroethylene as used herein is preferably a fluoropolymer having a tetrafluoroethylene content of less than 99 mol% based on all polymerization units.

Herein, the content of each monomer constituting the fluoropolymer can be calculated by any suitable combination of NMR, FT-IR, elemental analysis, and X-ray fluorescence analysis according to the type of monomer.

The term "organic group" as used herein means a group containing one or more carbon atoms or a group formed by removing one hydrogen atom from an organic compound.

Examples of the "organic group" include:
an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents,
a non-aromatic heterocyclic group optionally having one or more substituents,
a heteroaryl group optionally having one or more substituents,
a cyano group,
a formyl group,
RaO-,
RaCO-,
RaSO₂-,
RaCOO-,
RaNRaCO-,
RaCONRa-,
RaOCO-,
RaOSO₂-, and
RaNRbSO₂-
wherein each Ra is independently
an alkyl group optionally having one or more substituents,
an alkenyl group optionally having one or more substituents,
an alkynyl group optionally having one or more substituents,
a cycloalkyl group optionally having one or more substituents,
a cycloalkenyl group optionally having one or more substituents,
a cycloalkadienyl group optionally having one or more substituents,
an aryl group optionally having one or more substituents,
an aralkyl group optionally having one or more substituents,
a non-aromatic heterocyclic group optionally having one or more substituents, or
a heteroaryl group optionally having one or more substituents, and
Rb is independently H or an alkyl group optionally having one or more substituents.

The organic group is preferably an alkyl group optionally having one or more substituents.

The term "substituent" as used herein means a group capable of replacing another atom or group. Examples of the "substituent" include an aliphatic group, an aromatic group, a heterocyclic group, an acyl group, an acyloxy group, an acylamino group, an aliphatic oxy group, an aromatic oxy group, a heterocyclic oxy group, an aliphatic oxycarbonyl group, an aromatic oxycarbonyl group, a heterocyclic oxycarbonyl group, a carbamoyl group, an aliphatic sulfonyl group, an aromatic sulfonyl group, a heterocyclic sulfonyl group, an aliphatic sulfonyloxy group, an aromatic sulfonyloxy group, a heterocyclic sulfonyloxy group, a sulfamoyl group, an aliphatic sulfonamide group, an aromatic sulfonamide group, a heterocyclic sulfonamide group, an amino group, an aliphatic amino group, an aromatic amino group, a heterocyclic amino group, an aliphatic oxycarbonylamino group, an aromatic oxycarbonylamino group, a heterocyclic oxycarbonylamino group, an aliphatic sulfinyl group, an aromatic sulfinyl group, an aliphatic thio group, an aromatic thio group, a hydroxy group, a cyano group, a sulfo group, a carboxy group, an aliphatic oxyamino group, an aromatic oxy amino group, a carbamoylamino group, a sulfamoylamino group, a halogen atom, a sulfamoylcarbamoyl group, a carbamoyl sulfamoyl group, a dialiphatic oxyphosphinyl group, and a diaromatic oxyphosphinyl group.

The aliphatic group may be saturated or unsaturated, and may have a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic group include alkyl groups having 1 to 8, and preferably 1 to 4 carbon atoms in total, such as a methyl group, an ethyl group, a vinyl group, a cyclohexyl group, and a carbamoylmethyl group.

The aromatic group may have, for example, a nitro group, a halogen atom, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic group include aryl groups having 6 to 12 carbon atoms, and preferably 6 to 10 carbon atoms in total, such as a phenyl group, a 4-nitrophenyl group, a 4-acetylaminophenyl group, and a 4-methanesulfonylphenyl group.

The heterocyclic group may have a halogen atom, a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the heterocyclic group include 5- or 6-membered heterocyclic groups having 2 to 12, and preferably 2 to 10 carbon atoms in total, such as a 2-tetrahydrofuryl group and a 2-pyrimidyl group.

The acyl group may have an aliphatic carbonyl group, an arylcarbonyl group, a heterocyclic carbonyl group, a hydroxy group, a halogen atom, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the acyl group include acyl groups having 2 to 8 and preferably 2 to 4 carbon atoms in total, such as an acetyl group, a propanoyl group, a benzoyl group, and a 3-pyridinecarbonyl group.

The acylamino group may have an aliphatic group, an aromatic group, a heterocyclic group, or the like, and may have, for example, an acetylamino group, a benzoylamino group, a 2-pyridinecarbonylamino group, a propanoylamino group, or the like. Examples of the acylamino group include acylamino groups having 2 to 12 and preferably 2 to 8 carbon atoms in total and alkylcarbonylamino groups having 2 to 8 carbon atoms in total, such as an acetylamino group, a benzoylamino group, a 2-pyridinecarbonylamino group, and a propanoylamino group.

The aliphatic oxycarbonyl group may be saturated or unsaturated, and may have a hydroxy group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic oxycarbonyl group include alkoxycarbonyl groups having 2 to 8 and preferably 2 to 4 carbon atoms in total, such as a methoxycarbonyl group, an ethoxycarbonyl group, and a (t)-butoxycarbonyl group.

The carbamoyl group may have an aliphatic group, an aromatic group, a heterocyclic group, or the like. Examples of the carbamoyl group include an unsubstituted carbamoyl group and alkylcarbamoyl groups having 2 to 9 carbon atoms in total, and preferably an unsubstituted carbamoyl group and alkylcarbamoyl groups having 2 to 5 carbon atoms in total, such as a N-methylcarbamoyl group, a N,N-dimethylcarbamoyl group, and a N-phenylcarbamoyl group.

The aliphatic sulfonyl group may be saturated or unsaturated, and may have a hydroxy group, an aromatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aliphatic sulfonyl group include alkylsulfonyl groups having 1 to 6 carbon atoms in total and preferably 1 to 4 carbon atoms in total, such as a methanesulfonyl group.

The aromatic sulfonyl group may have a hydroxy group, an aliphatic group, an aliphatic oxy group, a carbamoyl group, an aliphatic oxycarbonyl group, an aliphatic thio group, an amino group, an aliphatic amino group, an acylamino group, a carbamoylamino group, or the like. Examples of the aromatic sulfonyl group include arylsulfonyl groups having 6 to 10 carbon atoms in total, such as a benzenesulfonyl.

The amino group may have an aliphatic group, an aromatic group, a heterocyclic group, or the like.

The acylamino group may have, for example, an acetylamino group, a benzoylamino group, a 2-pyridinecarbonylamino group, a propanoylamino group, or the like. Examples of the acylamino group include acylamino groups having 2 to 12 carbon atoms in total and preferably 2 to 8 carbon atoms in total, and more preferably alkylcarbonylamino groups having 2 to 8 carbon atoms in total, such as an acetylamino group, a benzoylamino group, a 2-pyridinecarbonylamino group, and a propanoylamino group.

The aliphatic sulfonamide group, the aromatic sulfonamide group, and the heterocyclic sulfonamide group may be, for example, a methanesulfonamide group, a benzenesulfonamide group, and a 2-pyridinesulfonamide group, respectively.

The sulfamoyl group may have an aliphatic group, an aromatic group, a heterocyclic group, or the like. Examples of the sulfamoyl group include a sulfamoyl group, alkylsulfamoyl groups having 1 to 9 carbon atoms in total, dialkylsulfamoyl groups having 2 to 10 carbon atoms in total, arylsulfamoyl groups having 7 to 13 carbon atoms in total, and heterocyclic sulfamoyl groups having 2 to 12 carbon atoms in total, more preferably a sulfamoyl group, alkylsulfamoyl groups having 1 to 7 carbon atoms in total, dialkylsulfamoyl groups having 3 to 6 carbon atoms in total, arylsulfamoyl groups having 6 to 11 carbon atoms in total, and heterocyclic sulfamoyl groups having 2 to 10 carbon atoms in total, such as a sulfamoyl group, a methylsulfamoyl group, a N,N-dimethylsulfamoyl group, a phenylsulfamoyl group, and a 4-pyridinesulfamoyl group.

The aliphatic oxy group may be saturated or unsaturated, and may have a methoxy group, an ethoxy group, an i-propyloxy group, a cyclohexyloxy group, a methoxyethoxy group, or the like. Examples of the aliphatic oxy group include alkoxy groups having 1 to 8 and preferably 1 to 6 carbon atoms in total, such as a methoxy group, an ethoxy group, an i-propyloxy group, a cyclohexyloxy group, and a methoxyethoxy group.

The aromatic amino group and the heterocyclic amino group may have an aliphatic group, an aliphatic oxy group, a halogen atom, a carbamoyl group, a heterocyclic group having a ring condensed with the aryl group, or an aliphatic oxycarbonyl group, and preferably an aliphatic group having 1 to 4 carbon atoms in total, an aliphatic oxy group having 1 to 4 carbon atoms in total, a halogen atom, a carbamoyl group having 1 to 4 carbon atoms in total, a nitro group, or an aliphatic oxycarbonyl group having 2 to 4 carbon atoms in total.

The aliphatic thio group may be saturated or unsaturated, and examples include alkylthio groups having 1 to 8 carbon atoms in total and more preferably 1 to 6 carbon atoms in total, such as a methylthio group, an ethylthio group, a carbamoylmethylthio group, and a t-butylthio group.

The carbamoylamino group may have an aliphatic group, an aryl group, a heterocyclic group, or the like. Examples of the carbamoylamino group include a carbamoylamino group, alkylcarbamoylamino groups having 2 to 9 carbon atoms in total, dialkylcarbamoylamino groups having 3 to 10 carbon atoms in total, arylcarbamoylamino groups having 7 to 13 carbon atoms in total, and heterocyclic carbamoylamino groups having 3 to 12 carbon atoms in total, and preferably a carbamoylamino group, alkylcarbamoylamino groups having 2 to 7 carbon atoms in total, dialkylcarbamoylamino groups having 3 to 6 carbon atoms in total, arylcarbamoylamino groups having 7 to 11 carbon atoms in total, and heterocyclic carbamoylamino groups having 3 to 10 carbon atoms in total, such as a carbamoylamino group, a methylcarbamoylamino group, a N,N-dimethylcarbamoylamino group, a phenylcarbamoylamino group, and a 4-pyridinecarbamoylamino group.

A range specified by the endpoints as used herein includes all numerical values within the range (for example, the range of 1 to 10 includes 1.4, 1.9, 2.33, 5.75, 9.98, and the like).

The phrase "at least one" as used herein includes all numerical values equal to or greater than 1 (such as at least 2, at least 4, at least 6, at least 8, at least 10, at least 25, at least 50, and at least 100).

Below, specific embodiments of the present disclosure will now be described in detail, but the present disclosure is not limited to the following embodiments.

The production method of the present disclosure comprises bringing a fluoropolymer raw material into contact with an oxidizing agent, wherein the fluoropolymer raw material is obtained by polymerizing a fluoromonomer in an aqueous medium in the presence of a polymer (I) containing a polymerization unit (I) derived from a monomer (I) represented by the general formula (I).

An example of the method for producing a fluoropolymer may be a method involving polymerizing a fluoromonomer in an aqueous medium using a polymer (I). According to such a production method, a fluoropolymer raw material dispersion containing the fluoropolymer, the polymer (I), and the aqueous medium can be obtained as the fluoropolymer raw material. Moreover, by causing the fluoropolymer in the resulting fluoropolymer raw material dispersion to coagulate and separating the coagulated fluoropolymer from the raw material dispersion, a fluoropolymer raw material slurry (a wet fluoropolymer) containing the fluoropolymer, the polymer (I), and the aqueous medium can be obtained as a fluoropolymer raw material. Moreover, by heat-treating (drying) the fluoropolymer raw material slurry, a fluoropolymer raw material powder containing the fluoropolymer and the polymer (I) can be obtained.

A molding material obtained from these fluoropolymer raw materials is formed into a formed article having a desired shape by, for example, extrusion forming involving an extruder. However, it has been found that when the fluoropolymer raw material containing the polymer (I) is repeatedly extrusion-formed, the extrusion pressure tends to increase as the number of times the extrusion forming is performed is increased. An increased extrusion pressure makes continuous production of extrusion-formed articles difficult and significantly impairs productivity. Accordingly, demand exists for a method for producing a fluoropolymer composition, wherein the fluoropolymer composition is obtained by polymerizing a fluoromonomer in the presence of a polymer (I), and the fluoropolymer composition when extrusion-formed using an extruder is capable of suppressing an increase in extrusion pressure even when extrusion forming is repeated using the same extruder.

In the method for producing a fluoropolymer composition of the present disclosure, a fluoropolymer raw material obtained by polymerizing a fluoromonomer in an aqueous medium is brought into contact with an oxidizing agent in the presence of a polymer (I). Surprisingly, the fluoropolymer composition obtained by bringing a fluoropolymer raw material into contact with an oxidizing agent barely exhibits an increase, or exhibits completely no increase, in extrusion pressure even when extrusion forming is repeated using the same extruder. Moreover, when the fluoropolymer composition obtained by bringing a fluoropolymer raw material into contact with an oxidizing agent is thermally formed into a desired shape, surprisingly, a formed article with little coloration can be obtained.

### <Oxidizing agent>

The oxidizing agent to be brought into contact with the fluoropolymer raw material is preferably at least one selected from the group consisting of inorganic acids and salts thereof.

Examples of inorganic acids include nitrous acid, nitric acid, sulfurous acid, sulfuric acid, persulfuric acid, hydrochloric acid, hypochlorous acid, chlorous acid, chloric acid, perchloric acid, hydrofluoric acid, bromic acid, iodic acid, phosphoric acid, boric acid, chromic acid, dichromic acid, and permanganic acid.

Examples of inorganic acid salts include sodium salts, potassium salts, ammonium salts, magnesium salts, calcium salts, aluminum salts, and silver salts.

The oxidizing agent is more preferably at least one selected from the group consisting of nitric acid and salts thereof as well as perchloric acid and salts thereof, even more preferably at least one selected from the group consisting of nitric acid salts and perchloric acid salts, and particularly preferably at least one selected from the group consisting of sodium nitrate, potassium nitrate, ammonium nitrate, and ammonium perchlorate because a fluoropolymer composition with which an increase in extrusion pressure is further suppressed is obtained. Two or more oxidizing agents may be used in combination. For example, an inorganic acid and an inorganic acid salt may be used in combination, and nitric acid and a nitric acid salt (such as sodium nitrate or ammonium nitrate) may be used in combination.

The amount of the oxidizing agent to be brought into contact with the fluoropolymer raw material is preferably 0.01 to 20% by mass, more preferably 0.1% by mass or more, and even more preferably 0.3% by mass or more, and is more preferably 10% by mass or less and even more preferably 5% by mass or less, based on the fluoropolymer in the fluoropolymer raw material because a fluoropolymer composition with which an increase in extrusion pressure is further suppressed is obtained.

The temperature when bringing the fluoropolymer raw material into contact with the oxidizing agent is preferably 5 to 90°C, more preferably 10°C or higher, and even more preferably 15°C or higher, and is more preferably 70°C or lower and even more preferably 60°C or lower because a fluoropolymer composition with which an increase in extrusion pressure is further suppressed is obtained. The temperature when bringing the fluoropolymer raw material into contact with the oxidizing agent, in the case of bringing the fluoropolymer raw material into contact with the oxidizing agent in an aqueous medium, may be the temperature of the aqueous medium. The temperature when bringing the fluoropolymer raw material into contact with a gaseous oxidizing agent may be the temperature of the fluoropolymer raw material.

The time when bringing the fluoropolymer raw material into contact with the oxidizing agent is not limited, and may be, for example, 1 minute to 24 hours. When the fluoropolymer coagulates due to contact between the fluoropolymer raw material and the oxidizing agent, the completion of coagulation of the fluoropolymer can give a rough guide as to the contact time.

The fluoropolymer raw material is obtained by polymerizing the fluoromonomer in the aqueous medium in the presence of the polymer (I). Accordingly, the fluoropolymer raw material prior to contact with the oxidizing agent usually contains the fluoropolymer and the polymer (I). The fluoropolymer raw material is preferably a PTFE raw material containing polytetrafluoroethylene (PTFE) as the fluoropolymer. The content of the polymer (I) in the fluoropolymer raw material is usually the same as the amount of the polymer (I) used in the polymerization.

By polymerizing the fluoromonomer in the aqueous medium, a fluoropolymer raw material dispersion is usually obtained as the fluoropolymer raw material. As described above, a fluoropolymer raw material slurry or a fluoropolymer raw material powder can also be obtained by using the fluoropolymer raw material dispersion. In the production method of the present disclosure, the fluoropolymer raw material may be any of a fluoropolymer raw material dispersion, a fluoropolymer raw material slurry, and a fluoropolymer raw material powder. The fluoropolymer raw material to be used is preferably a fluoropolymer raw material dispersion or a fluoropolymer raw material slurry, and is more preferably a fluoropolymer raw material dispersion because the fluoropolymer raw material can be sufficiently brought into contact with the oxidizing agent, and a fluoropolymer composition with which an increase in extrusion pressure is further suppressed is obtained.

The fluoropolymer raw material dispersion is obtained by, for example, polymerizing the fluoromonomer in the aqueous medium in the presence of the polymer (I). A concentrated dispersion obtained by concentrating the dispersion as polymerized that is obtained by polymerization may be used as the fluoropolymer raw material dispersion. The fluoropolymer raw material dispersion usually contains the fluoropolymer, the polymer (I), and the aqueous medium. The content (the solid concentration) of the fluoropolymer in the fluoropolymer raw material dispersion is preferably 1.0 to 70% by mass, more preferably 5% by mass or more, and even more preferably 8% by mass or more, and is more preferably 65% by mass or less and even more preferably 65% by mass or less. The content of the fluoropolymer in the fluoropolymer raw material dispersion is determined by drying 1 g of the dispersion in an air dryer at 150°C for 60 minutes, measuring the mass of non-volatile matter, and calculating the proportion (percentage) of the mass of the non-volatile matter based on the mass (1 g) of the dispersion.

A fluoropolymer raw material slurry (a wet fluoropolymer) can be obtained by, for example, coagulating the fluoropolymer in the fluoropolymer raw material dispersion and separating the coagulated fluoropolymer from the raw material dispersion. The fluoropolymer raw material slurry usually contains the fluoropolymer, the polymer (I), and the aqueous medium. The content of the fluoropolymer in the fluoropolymer raw material slurry is preferably 70% by mass or less, more preferably 65% by mass or less, and even more preferably 60% by mass or less, and is preferably 30% by mass or more. The content of the fluoropolymer in the fluoropolymer raw material slurry is determined by drying 1 g of the slurry in an air dryer at 150°C for 60 minutes, measuring the mass of non-volatile matter, and calculating the proportion (percentage) of the mass of the non-volatile matter based on the mass (1 g) of the slurry.

The fluoropolymer raw material powder is obtained by, for example, drying the fluoropolymer raw material slurry. The fluoropolymer raw material powder usually contains the fluoropolymer and the polymer (I). The water content of the fluoropolymer raw material powder is preferably less than 0.1% by mass, and preferably 0% by mass or more. The water content of the fluoropolymer raw material powder is determined by drying 1 g of the powder in an air dryer at 150°C for 60 minutes, measuring the mass of non-volatile matter, and calculating the proportion (percentage) of the amount reduced by heating (the mass (1 g) of the powder - the mass of the non-volatile matter) based on the mass (1 g) of the powder.

Examples of the method for bringing the fluoropolymer raw material containing the polymer (I) into contact with the oxidizing agent include, but are not limited to, a method involving adding the oxidizing agent to the fluoropolymer raw material, a method involving spraying the oxidizing agent onto the fluoropolymer raw material, and a method involving exposing the fluoropolymer raw material to the oxidizing agent. The method for bringing the fluoropolymer raw material into contact with the oxidizing agent is suitably a method involving adding the oxidizing agent to the fluoropolymer raw material because a fluoropolymer composition with which an increase in extrusion pressure is further suppressed is obtained. In particular, when the fluoropolymer raw material is a fluoropolymer raw material dispersion or a fluoropolymer raw material slurry, a method involving adding the oxidizing agent to the fluoropolymer raw material is suitable. A method involving adding the oxidizing agent to the fluoropolymer raw material and stirring the mixture is also suitable.

When adding the oxidizing agent to the fluoropolymer raw material, the oxidizing agent may be directly added to the fluoropolymer raw material, or the oxidizing agent may be dissolved in water to prepare an aqueous oxidizing agent solution and then the aqueous oxidizing agent solution may be added to the fluoropolymer raw material.

By bringing the fluoropolymer raw material and oxidizing agent into contact, a fluoropolymer composition is obtained. When the fluoropolymer raw material is a fluoropolymer raw material dispersion, the fluoropolymer in the fluoropolymer raw material dispersion may be coagulated while bringing the fluoropolymer raw material dispersion into contact with the oxidizing agent. At this time, in addition to the oxidizing agent, further a coagulating agent may be added to the fluoropolymer raw material (the fluoropolymer raw material dispersion). By adding a coagulating agent in addition to the oxidizing agent, coagulation of the fluoropolymer can proceed more efficiently. Moreover, when the oxidizing agent does not have a coagulating effect, a coagulating agent is preferably added in addition to the oxidizing agent.

The fluoropolymer composition may be produced by adding the oxidizing agent to the fluoropolymer raw material such as a fluoropolymer raw material dispersion or a fluoropolymer raw material slurry and optionally stirring the mixture to thereby bring the fluoropolymer raw material and the oxidizing agent into contact, and then heat-treating the oxidizing agent-containing fluoropolymer raw material. The fluoropolymer raw material may be dried by heat treatment. By sufficient heat treatment, a fluoropolymer composition suitable as a molding material to be used to obtain a formed article by extrusion forming can be obtained.

The temperature of heat treatment is preferably 10 to 300°C, and more preferably 100 to 300°C. By heat-treating the fluoropolymer raw material such as a fluoropolymer raw material dispersion and a fluoropolymer raw material slurry, the fluoropolymer raw material is dried, and a dry powder of the fluoropolymer such as a fine fluoropolymer powder is obtained as the fluoropolymer composition.

The fluoropolymer composition contains at least the fluoropolymer. The fluoropolymer composition is preferably a PTFE composition containing PTFE as the fluoropolymer. The fluoropolymer composition can contain the fluoropolymer and trifluoroacetic acid. Trifluoroacetic acid may be obtained by decomposition of the polymer (1) contained in the fluoropolymer raw material when the fluoropolymer raw material is brought into contact with the oxidizing agent.

The fluoropolymer composition may contain the polymer (I). The content of the polymer (I) in the fluoropolymer composition is usually smaller than the content of the polymer (I) in the fluoropolymer raw material. The content of the polymer (I) in the fluoropolymer composition is preferably 0.001% by mass or more, more preferably 0.005% by mass or more, even more preferably 0.01% by mass or more, particularly preferably 0.05% by mass or more, and most preferably 0.10% by mass or more based on the fluoropolymer in the fluoropolymer composition because an increase in extrusion pressure can be further suppressed. Also, the content of the polymer (I) in the fluoropolymer composition is preferably 10% by mass or less, more preferably 5.0% by mass or less, even more preferably 2.0% by mass or less, particularly preferably 1.0% by mass or less, and most preferably 0.50% by mass or less based on the fluoropolymer.

The content of the polymer (I) in the fluoropolymer composition is determined by solid state NMR measurement or liquid state NMR measurement. When the polymer (I) contains a carbonyl group, the content can be also determined with a Fourier transform infrared spectrometer.

Also, International Publication No. WO 2014/099453, International Publication No. WO 2010/075497, International Publication No. WO 2010/075496, International Publication No. WO 2011/008381, International Publication No. WO 2009/055521, International Publication No. WO 1987/007619, Japanese Patent Laid-Open No. 61-293476, International Publication No. WO 2010/075494, International Publication No. WO 2010/075359, International Publication No. WO 2012/082454, International Publication No. WO 2006/119224, International Publication No. WO 2013/085864, International Publication No. WO 2012/082707, International Publication No. WO 2012/082703, International Publication No. WO 2012/082451, International Publication No. WO 2006/135825, International Publication No. WO 2004/067588, International Publication No. WO 2009/068528, Japanese Patent Laid-Open No. 2004-075978, Japanese Patent Laid-Open No. 2001-226436, International Publication No. WO 1992/017635, International Publication No. WO 2014/069165, Japanese Patent Laid-Open No. 11-181009, and the like disclose measurement methods for their respective polymers. The method for measuring the content of the polymer (I) may be any of the polymer measurement methods respectively described in these documents.

The fluoropolymer composition may contain a fluorine-containing surfactant. However, preferably the fluoropolymer composition is substantially free from a fluorine-containing surfactant. Herein, the phrase "being substantially free from a fluorine-containing surfactant" means that the content of the fluorine-containing surfactant is 10 mass ppm or less based on the fluoropolymer. The content of the fluorine-containing surfactant is preferably 1 mass ppm or less, more preferably 100 mass ppb or less, even more preferably 10 mass ppb or less, yet more preferably 1 mass ppb or less, and particularly preferably less than or equal to the detection limit of measurement by liquid chromatography-mass spectrometry (LC/MS).

The content of the fluorine-containing surfactant can be measured by, for example, adding methanol to the fluoropolymer composition to carry out extraction and subjecting the resulting extracted liquid to LC/MS analysis.

To further increase extraction efficiency, treatment by Soxhlet extraction, ultrasonic treatment, or the like may be performed.

From the resulting LC/MS spectrum, molecular weight information is extracted, and a match with the structural formula of a candidate fluorine-containing surfactant is checked.

Thereafter, aqueous solutions having five or more different content levels of the confirmed fluorine-containing surfactant are prepared, and LC/MS analysis of the aqueous solution of each content is performed, and the relationship between the content and the area for the content is plotted, and a calibration curve is drawn.

Then, using the calibration curve, the area of the LC/MS chromatogram of the fluorine-containing surfactant in the extract can be converted into the content of the fluorine-containing surfactant.

The fluorine-containing surfactant is described in detail below.

With the fluoropolymer composition, the extrusion pressure is barely increased or is not increased at all even when extrusion forming is repeated using the same extruder. For example, when forming to obtain a bead having a length of 5 m by subjecting the fluoropolymer composition to paste extrusion forming using an extrusion forming machine equipped with a thoroughly washed extrusion forming die is repeated multiple times, the rate of increase in paste extrusion pressure in the fourth forming based on the paste extrusion pressure in the first forming can be regulated to 3.0% or less. The rate of increase in paste extrusion pressure is preferably 2.5% or less, and more preferably 2.0% or less.

The paste extrusion pressure is a cylinder extrusion pressure at a reduction ratio of 100 when preparing a mixture by adding 21.7 parts by mass of hydrocarbon oil (trade name: Isopar H(R), manufactured by Exxon) to 100 parts by mass of the fluoropolymer composition, and extruding the mixture using an extruder at 25°C. The rate of increase in paste extrusion pressure can be determined as the proportion of the difference between the paste extrusion pressure in the fourth forming and the paste extrusion pressure in the first forming to the paste extrusion pressure in the first forming.

The fluoropolymer composition can be used not only in paste extrusion forming but also as a molding material for use in melt extrusion forming. The fluoropolymer composition, for example, barely exhibits an increase or exhibits completely no increase in extrusion pressure even when melt extrusion forming is repeated using the same extruder. Variations in extrusion pressure when melt extrusion forming is repeated can be verified by, for example, repeatedly measuring the melt flow rate of the fluoropolymer composition in accordance with ASTM D-1238. Having little variation in melt flow rate means that the extrusion pressure is barely increased even when melt extrusion forming is repeated.

The fluoropolymer composition such as a fine fluoropolymer powder obtained by the production method of the present disclosure can be suitably used as a molding material used to obtain a formed article by extrusion forming, in particular a molding material used to obtain a formed article by paste extrusion forming.

### <Polymer (I)>

The polymer (I) used in the production method of the present disclosure is a polymer containing a polymer unit (I) derived from a monomer (I). The monomer (I) is represented by the following general formula (I):

CX¹X³=CX²R(-CZ¹Z²-A⁰)ₘ (I)

wherein X¹ and X³ are each independently F, Cl, H, or CF₃; X² is H, F, an alkyl group, or a fluorine-containing alkyl group; A° is an anionic group; R is a linking group; Z¹ and Z² are each independently H, F, an alkyl group, or a fluorine-containing alkyl group; and m is an integer of 1 or more.

X² is preferably F, Cl, H, or CF₃. Z¹ and Z² are preferably F or CF₃.

In the present disclosure, the anionic group includes a functional group that imparts an anionic group, e.g., an acid group such as -COOH and an acid base such as -COONH₄, in addition to anionic groups such as a sulfate group and a carboxylate group. The anionic group is preferably a sulfate group, a carboxylate group, a phosphate group, a phosphonate group, a sulfonate group, or -C(CF₃)₂OM, wherein M is -H, a metal atom, -NR⁷₄, optionally substituted imidazolium, optionally substituted pyridinium, or optionally substituted phosphonium, and R⁷ is H or an organic group.

In the production method of the present disclosure, one monomer (I) represented by the general formula (I) can be used singly, and two or more monomers (I) can be used as well.

R is a linking group. The "linking group" as used herein is a (m+1)-valent linking group, and refers to a divalent group when m is 1. The linking group may be a single bond and preferably contains at least one carbon atom, and the number of carbon atoms may be 2 or more, 4 or more, 8 or more, 10 or more, or 20 or more. The upper limit is not limited, and, for example, may be 100 or less, and may be 50 or less.

The linking group may be linear or branched, cyclic or acyclic, saturated or unsaturated, substituted or unsubstituted, and optionally contains one or more heteroatoms selected from the group consisting of sulfur, oxygen, and nitrogen, and optionally contains one or more functional groups selected from the group consisting of ester, amide, sulfonamide, carbonyl, carbonate, urethane, urea, and carbamate. The linking group may be free from carbon atoms and may be a catenary heteroatom such as oxygen, sulfur, or nitrogen.

m is an integer of 1 or more, and is preferably 1 or 2 and more preferably 1. When m is an integer of 2 or more, Z¹, Z², and A⁰ may be the same or different.

Next, a suitable configuration wherein m is 1 in the general formula (I) will now be described.

R is preferably a catenary heteroatom such as oxygen, sulfur, or nitrogen, or a divalent organic group.

When R is a divalent organic group, a hydrogen atom bonded to a carbon atom may be replaced with a halogen other than fluorine, such as chlorine, and a double bond may be or may not be contained. R may be linear or branched, and may be cyclic or acyclic. R may also contain a functional group (e.g., ester, ether, ketone, amine, halide, etc.).

R may also be a fluorine-free divalent organic group or a partially fluorinated or perfluorinated divalent organic group.

R may be, for example, a hydrocarbon group in which a fluorine atom is not bonded to a carbon atom, a hydrocarbon group in which some of the hydrogen atoms bonded to carbon atoms are replaced with fluorine atoms, or a hydrocarbon group in which all of the hydrogen atoms bonded to carbon atoms are replaced with fluorine atoms, and these groups optionally contain an oxygen atom, optionally contain a double bond, and optionally contain a functional group.

R is preferably a hydrocarbon group having 1 to 100 carbon atoms that optionally contains an ether bond, wherein some or all of the hydrogen atoms bonded to carbon atoms in the hydrocarbon group may be replaced with fluorine.

R is preferably at least one selected from -(CH₂)ₐ-, - (CF₂)ₐ-, - (CF₂)ₐ-O-, -O- (CF₂)ₐ-, - (CF₂)ₐ-O-(CF₂)_{b}-, -O(CF₂)ₐ-O-(CF₂)_{b}-, -(CF₂)ₐ-O-(CF₂)_{b}]_{c}-, -O(CF₂)ₐ-[O-(CF₂)_{b}]_{c}-, -[(CF₂)ₐ-O]_{b}-[(CF₂)_{c}-O]_{d}-, -O[(CF₂)ₐ-O]_{b}-, -O[(CF₂)ₐ-O]_{b}-[(CF₂)_{c}-O]_{d}-, -O-[CF₂CF(CF₃)O]ₐ-(CF₂)_{b}-, -O-(CF₂)ₐ-O-[CF(CF₃)CF₂O]_{b}-O-, -O-[CF₂CF(CF₃)O]ₐ-(CF₂)_{b}-O-, -O-[CF₂CF(CF₃)O]ₐ-(CF₂)_{b}-O-[CF(CF₃)CF₂O]_{c}-O-, -[CF₂CF(CF₃)O]ₐ-, -[CF(CF₃)CF₂O]ₐ-, -(CF₂)ₐ-O-[CF(CF₃)CF₂O]ₐ-, -(CF₂)ₐ-O-[CF(CF₃)CF₂O]ₐ-(CF₂)_{b}-, -[CF₂CF(CF₃)]ₐ-CO-(CF₂)_{b}-, and combinations thereof.

In the formulas, a, b, c, and d are independently at least 1 or more. a, b, c, and d may independently be 2 or more, 3 or more, 4 or more, 10 or more, or 20 or more. The upper limits of a, b, c, and d are, for example, 100.

R is more preferably at least one selected from -O-CF₂-, - O-CF₂CF₂-, -O-CF₂CF₂-O-, -O-CF₂CF₂CF₂-, -O-CF₂CF₂CF₂-O-, -O-CF₂CF(CF₃)-O-, -O-CF₂CF₂-O-CF(CF₃)CF₂-O-, -O-CF₂CF(CF₃)-O-CF₂CF₂-O-, and -O-CF₂CF(CF₃)-O-CF₂-.

R is preferably a divalent group represented by the general formula (r1):

-CF₂-O-(CX⁶₂)ₑ-{O-CF(CF₃)}_{f}-(O)_{g}- (r1)

(wherein X⁶ is each independently H, F, or CF₃; e is an integer of 0 to 3; f is an integer of 0 to 3; and g is 0 or 1), and more preferably a divalent group represented by the general formula (r2) :

-CF₂-O-(CX⁷₂)ₑ-(O)_{g}- (r2)

(wherein X⁷ is each independently H, F, or CF₃; e is an integer of 0 to 3; and g is 0 or 1).

Specific suitable examples of R include -CF₂-O-, -CF₂-O-CF₂-, -CF₂-O-CH₂-, -CF₂-O-CH₂CF₂-, -O-CF₂-, -O-CF₂CF₂-, -O-CF₂CF₂CF₂-, -O-CF₂CF₂CF₂CF₂-, -O-CF₂CF(CF₃)-O-CF₂-, -O-CF₂CF(CF₃)-O-CF₂CF₂-, -CF₂-O-CF₂CF₂-, -CF₂-O-CF₂CH₂-, -CF₂-O-CF₂CF₂CH₂-, -CF₂-O-CF(CF₃)-, -CF₂-O-CF(CF₃)CF₂-, -CF₂-O-CF(CF₃)CF₂-O-, -CF₂-O-CF(CF₃)CF₂-O-CF₂-, and -CF₂-O-CF(CF₃)CH₂-. In particular, R is preferably a perfluoroalkylene group optionally containing an oxygen atom, and, specifically, -CF₂-O-, -CF₂-O-CF₂-, -O-CF₂-, - O-CF₂CF₂-, -O-CF₂CF(CF₃)-O-CF₂-, -O-CF₂CF(CF₃)-O-CF₂CF₂-, -CF₂-O-CF₂CF₂-, -CF₂-O-CF(CF₃)-, -CF₂-O-CF(CF₃)CF₂-, or -CF₂-O-CF(CF₃)CF₂-O- is preferable.

-R-CZ¹Z²- in the general formula (I) is preferably represented by the general formula (s1):

-CF₂-O-(CX⁶₂)ₑ-{O-CF(CF₃)}_{f}-(O)_{g}-CZ¹Z²- (s1)

(wherein X⁶ is each independently H, F, or CF₃; e is an integer of 0 to 3; f is an integer of 0 to 3; g is 0 or 1; and Z¹ and Z² are each independently H, F, an alkyl group, or a fluorine-containing alkyl group), and more preferably, in the formula (s1), Z¹ and Z² are F or CF₃, and yet more preferably one is F, and the other is CF₃.

Also, -R-CZ¹Z²- in the general formula (I) is preferably represented by the general formula (s2):

-CF₂-O-(CX⁷₂)ₑ-(O)_{g}-CZ¹Z²- (s2)

(wherein X⁷ is each independently H, F, or CF₃; e is an integer of 0 to 3; g is 0 or 1; and Z¹ and Z² are each independently H, F, an alkyl group, or a fluorine-containing alkyl group), and more preferably, in the formula (s2), Z¹ and Z² are F or CF₃, and yet more preferably one is F, and the other is CF₃.

-R-CZ¹Z²- in the general formula (I) is preferably - CF₂-O-CF₂-, -O-CF₂CF₂-, -O-CF₂CF₂CF₂-, -O-CF₂CF₂CF₂CF₂-, -O-CF₂CF(CF₃)-O-CF₂-, -O-CF₂CF(CF₃)-O-CF₂CF₂-, -O-CF₂CF(CF₃)-O-CF₂CF₂CF₂-, -CF₂-O-CF(CF₃)-, -CF₂-O-C(CF₃)₂-, -CF₂-O-CF₂-CF₂-, -CF₂-O-CF₂-CF(CF₃)-, -CF₂-O-CF₂-C(CF₃)₂-, -CF₂-O-CF₂CF₂-CF₂-, -CF₂-O-CF₂CF₂-CF(CF₃)-, -CF₂-O-CF₂CF₂-C(CF₃)₂-, -CF₂-O-CF(CF₃)-CF₂-, -CF₂-O-CF(CF₃)-CF(CF₃)-, -CF₂-O-CF(CF₃)-C(CF₃)₂-, -CF₂-O-CF(CF₃)CF₂-CF₂-, -CF₂-O-CF(CF₃)CF₂-CF(CF₃)-, -CF₂-O-CF(CF₃)CF₂-C(CF₃)₂-, -CF₂-O-CF(CF₃)CF₂-O-CF₂-, -CF₂-O-CF(CF₃)CF₂-O-CF(CF₃)-, or -CF₂-O-CF(CF₃)CF₂-O-C(CF₃)₂-, -O-CF₂CF₂-, -O-CF₂CF₂CF₂-, -O-CF₂CF₂CF₂CF₂-, -O-CF₂CF(CF₃)-O-CF₂-, -O-CF₂CF(CF₃)-O-CF₂CF₂-, -CF₂-O-CF(CF₃)-, - CF₂-O-CF₂-CF(CF₃)-, -CF₂-O-CF₂CF₂-CF(CF₃)-, -CF₂-O-CF(CF₃)-CF(CF₃)-, -CF₂-O-CF(CF₃)CF₂-CF(CF₃)-, or -CF₂-O-CF(CF₃)CF₂-O-CF(CF₃)- is more preferable, and -O-CF₂CF₂- or -O-CF₂CF(CF₃)-O-CF₂CF₂- is even more preferable.

It is also preferable that the polymer (I) is highly fluorinated. Except for the anionic group (A⁰) such as a phosphate group moiety (such as CH₂OP(O)(OM)₂) or a sulfate group moiety (such as CH₂OS(O)₂OM), 80% or more, 90% or more, 95% or more, or 100% of the C-H bonds in the polymer (I) are preferably replaced with C-F bonds.

Preferably, the monomer (I) and the polymer (I) also have a C-F bond and do not have a C-H bond in the portion excluding the anionic group (A⁰). In other words, in the general formula (I), preferably, X¹, X², and X³ are all F, and R is a perfluoroalkylene group having one or more carbon atoms; the perfluoroalkylene group may be either linear or branched, may be either cyclic or acyclic, and may contain at least one catenary heteroatom. The perfluoroalkylene group may have 2 to 20 carbon atoms or 4 to 18 carbon atoms.

The monomer (I) and the polymer (I) may be partially fluorinated. That is to say, the polymer (I) also preferably has at least one hydrogen atom bonded to a carbon atom and at least one fluorine atom bonded to a carbon atom in the portion excluding the anionic group (A⁰).

The anionic group (A⁰) may be -SO₂M, -SO₃M, -OSO₃M, - COOM, -SO₂NR'CH₂COOM, -CH₂OP(O)(OM)₂, [-CH₂O]₂P(O)(OM), - CH₂CH₂OP(O)(OM)₂, [-CH₂CH₂O]₂P(O)(OM), -CH₂CH₂OSO₃M, -P(O)(OM)₂, - SO₂NR' CH₂CH₂OP(O)(OM)₂, [-SO₂NR'CH₂CH₂O]₂P(O)(OM), -CH₂OSO₃M, - SO₂NR'CH₂CH₂OSO₃M, or -C(CF₃)₂OM. In particular, it is preferably -SO₃M, -COOM, or -P(O)(OM)₂; more preferably -SO₃M or -COOM; and even more preferably -COOM.

M is H, a metal atom, NR⁷₄, optionally substituted imidazolium, optionally substituted pyridinium, or optionally substituted phosphonium, wherein R⁷ is H or an organic group.

Examples of the metal atom include alkali metals (Group 1) and alkaline earth metals (Group 2), and Na, K, or Li is preferable.

M is preferably -H, a metal atom, or -NR⁷₄, more preferably -H, an alkali metal (Group 1), an alkaline earth metal (Group 2), or NR⁷₄, even more preferably -H, -Na, -K, -Li, or NH₄, yet more preferably -Na, -K, or NH₄, particularly preferably -Na or NH₄, and most preferably -NH₄.

In the polymer (I), each polymerization unit (I) may have a different anionic group or may have the same anionic group.

It is also preferable that the monomer (I) is a monomer represented by the general formula (Ia).

The polymer (I) is also preferably a polymer containing a polymerization unit (Ia) derived from a monomer represented by the general formula (Ia):

CF₂=CF-O-Rf⁰-A⁰ (Ia)

wherein A⁰ is an anionic group; and Rf⁰ is a perfluorinated divalent linking group that is perfluorinated, may be a linear or branched, cyclic or acyclic, saturated or unsaturated, substituted or unsubstituted, and optionally contains one or more heteroatoms selected from the group consisting of sulfur, oxygen, and nitrogen.

The monomer (I) is also preferably a monomer represented by the general formula (Ib).

The polymer (I) is also preferably a polymer comprising a polymerization unit (Ib) derived from a monomer represented by the following formula (Ib):

CH₂=CH-O-Rf⁰-A⁰ (Ib)

wherein A⁰ is an anionic group, and Rf⁰ is a perfluorinated divalent linking group as defined by the formula (Ia).

In a preferable embodiment, A⁰ in the general formula (I) is a sulfate group. A⁰ is, for example, -CH₂OSO₃M, - CH₂CH₂OSO₃M, or -SO₂NR'CH₂CH₂OSO₃M, wherein R' is H or an alkyl group having 1 to 4 carbon atoms, and M is as described above.

Examples of the monomer represented by the general formula (I) when A⁰ is a sulfate group include CF₂=CF(OCF₂CF₂CH₂OSO₃M), CF₂=CF(O(CF₂)₄CH₂OSO₃M), CF₂=CF(OCF₂CF(CF₃)CH₂OSO₃M), CF₂=CF(OCF₂CF(CF₃)OCF₂CF₂CH₂OSO₃M), CH₂=CH((CF₂)₄CH₂OSO₃M), CF₂=CF(OCF₂CF₂SO₂N(CH₃)CH₂CH₂OSO₃M), CH₂=CH(CF₂CF₂CH₂OSO₃M), CF₂=CF(OCF₂CF₂CF₂CF₂SO₂N(CH₃)CH₂CH₂OSO₃M), and CH₂=CH(CF₂CF₂CF₂CH₂OSO₃M). In the formulas, M is as described above.

In a preferable embodiment, A⁰ in the general formula (I) is a sulfonate group. A⁰ is, for example, -SO₃M, wherein M is as described above.

When A⁰ is a sulfonate group, examples of the monomer represented by the general formula (I) include CF₂=CF(OCF₂CF₂SO₃M), CF₂=CF(O(CF₂)₃SO₃M), CF₂=CF(O(CF₂)₄SO₃M), CF₂=CF(OCF₂CF(CF₃)SO₃M), CF₂=CF(OCF₂CF(CF₃)OCF₂CF₂SO₃M), CH₂=CH(CF₂CF₂SO₃M), CF₂=CF(OCF₂CF(CF₃)OCF₂CF₂CF₂CF₂SO₃M), CH₂=CH((CF₂)₄SO₃M), and CH₂=CH((CF₂)₃SO₃M). In the formulae, M is as described above.

In a preferable embodiment, A⁰ in the general formula (I) is a carboxylate group. A⁰ is, for example, COOM or SO₂NR'CH₂COOM, wherein R' is H or an alkyl group having 1 to 4 carbon atoms, and M is as described above. When A⁰ is a carboxylate group, examples of the monomer represented by the general formula (I) include CF₂=CF(OCF₂CF₂COOM), CF₂=CF(O(CF₂)₃COOM), CF₂=CF(O(CF₂)₅COOM), CF₂=CF(OCF₂CF(CF₃)COOM), CF₂=CF(OCF₂CF(CF₃)O(CF₂)ₙCOOM) (n is greater than 1), CH₂=CH(CF₂CF₂COOM), CH₂=CH((CF₂)₄COOM), CH₂=CH((CF₂)₃COOM), CF₂=CF(OCF₂CF₂SO₂NR'CH₂COOM), CF₂=CF(O(CF₂)₄SO₂NR'CH₂COOM), CF₂=CF(OCF₂CF(CF₃)SO₂NR'CH₂COOM), CF₂=CF(OCF₂CF(CF₃)OCF₂CF₂SO₂NR'CH₂COOM), CH₂=CH(CF₂CF₂SO₂NR'CH₂COOM), CF₂=CF(OCF₂CF(CF₃)OCF₂CF₂CF₂CF₂SO₂NR'CH₂COOM), CH₂=CH((CF₂)₄SO₂NR'CH₂COOM), and CH₂=CH((CF₂)₃SO₂NR'CH₂COOM). In the formulas, R' is H or an alkyl group having 1 to 4 carbon atoms, and M is as described above.

In a preferable embodiment, A⁰ in the general formula (I) is a phosphate group. A⁰ is, for example, -CH₂OP(O)(OM)₂, [-CH₂O]₂P(O)(OM), -CH₂CH₂O(O)(OM)₂, [-CH₂CH₂O]₂P(O)(OM), [-SO₂NR'CH₂CH₂O]₂P(O)(OM), or SO₂NR'CH₂CH₂OP(O)(OM)₂, wherein R' is an alkyl group having 1 to 4 carbon atoms, and M is as described above.

When A⁰ is a phosphate group, examples of the monomer represented by the general formula (I) include CF₂=CF(OCF₂CF₂CH₂OP(O)(OM)₂), CF₂=CF(O(CF₂)₄CH₂OP(O)(OM)₂), CF₂=CF(OCF₂CF(CF₃)CH₂OP(O)(OM)₂), CF₂=CF(OCF₂CF(CF₃)OCF₂CF₂CH₂OP(O)(OM)₂), CF₂=CF(OCF₂CF₂SO₂N(CH₃)CH₂CH₂OP(O)(OM)₂), CF₂=CF(OCF₂CF₂CF₂CF₂SO₂N(CH₃)CH₂CH₂OP(O)(OM)₂), CH₂=CH(CF₂CF₂CH₂OP(O)(OM)₂), CH₂=CH((CF₂)₄CH₂OP(O)(OM)₂), and CH₂=CH((CF₂)₃CH₂OP(O)(OM)₂). In the formulas, M is as described above.

In a preferable embodiment, A⁰ in the general formula (I) is a phosphonate group. When A⁰ is a phosphonate group, examples of the monomer represented by the general formula (I) include CF₂=CF(OCF₂CF₂P(O)(OM)₂), CF₂=CF(O(CF₂)₄P(O)(OM)₂), CF₂=CF(OCF₂CF(CF₃)P(O)(OM)₂), CF₂=CF(OCF₂CF(CF₃)OCF₂CF₂P(O)(OM)₂), CH₂=CH(CF₂CF₂P(O)(OM)₂), CH₂=CH((CF₂)₄P(O)(OM)₂), and CH₂=CH((CF₂)₃P(O)(OM)₂), wherein M is as described above.

The monomer (I) is preferably a monomer (1) represented by the general formula (1).

The polymer (I) is preferably a polymer (1) containing a polymerization unit (1) derived from a monomer represented by the general formula (1):

CX₂=CY(-CZ₂-O-Rf-A) (1)

wherein X is the same or different and is -H or F; Y is -H, -F, an alkyl group, or a fluorine-containing alkyl group; Z is the same or different and is -H, -F, an alkyl group, or a fluoroalkyl group; Rf is a fluorine-containing alkylene group having 1 to 40 carbon atoms or a fluorine-containing alkylene group having 2 to 100 carbon atoms and having an ether bond; and A is -COOM, -SO₃M, -OSO₃M, or -C(CF₃)₂OM, where M is -H, a metal atom, -NR⁷₄, optionally substituted imidazolium, optionally substituted pyridinium, or optionally substituted phosphonium, and R⁷ is H or an organic group, provided that at least one of X, Y, and Z contains a fluorine atom.

In the production method of the present disclosure, the monomer (1) represented by the general formula (1) and a further monomer may be copolymerized.

The polymer (1) may be a homopolymer of the monomer (1) represented by the general formula (1), or may be a copolymer with a further monomer.

The fluorine-containing alkylene group having 2 to 100 carbon atoms and having an ether bond is an alkylene group that does not include a structure in which an oxygen atom is an end and that contains an ether bond between carbon atoms.

In the general formula (1), X is -H or F. Both X may be -F, or at least one may be -H. For example, one may be -F and the other may be -H, or both may be -H.

In the general formula (1), Y is -H, -F, an alkyl group, or a fluorine-containing alkyl group. The alkyl group is an alkyl group not containing a fluorine atom, and has one or more carbon atoms. The number of carbon atoms of the alkyl group is preferably 6 or less, more preferably 4 or less, and even more preferably 3 or less. The fluorine-containing alkyl group is an alkyl group containing at least one fluorine atom, and may have one or more carbon atoms. The number of carbon atoms of the fluorine-containing alkyl group is preferably 6 or less, more preferably 4 or less, and even more preferably 3 or less. Y is preferably -H, -F, or CF₃, and more preferably -F.

In the general formula (1), Z is the same or different, and is -H, -F, an alkyl group, or a fluoroalkyl group. The alkyl group is an alkyl group not containing a fluorine atom, and has one or more carbon atoms. The number of carbon atoms of the alkyl group is preferably 6 or less, more preferably 4 or less, and even more preferably 3 or less. The fluorine-containing alkyl group is an alkyl group containing at least one fluorine atom, and may have one or more carbon atoms. The number of carbon atoms of the fluorine-containing alkyl group is preferably 6 or less, more preferably 4 or less, and even more preferably 3 or less. Z is preferably -H, -F, or CF₃, and more preferably -F.

In the general formula (1), at least one of X, Y, and Z contains a fluorine atom. For example, X may be -H, and Y and Z may be -F.

In the general formula (1), Rf is a fluorine-containing alkylene group having 1 to 40 carbon atoms or a fluorine-containing alkylene group having 2 to 100 carbon atoms and having an ether bond.

The fluorine-containing alkylene group preferably has 2 or more carbon atoms. The fluorine-containing alkylene group preferably has 30 or less carbon atoms, more preferably 20 or less carbon atoms, even more preferably 10 or less carbon atoms, particularly preferably 6 or less carbon atoms, and most preferably 3 or less carbon atoms. Examples of the fluorine-containing alkylene group include -CF₂-, -CH₂CF₂-, -CF₂CF₂-, - CF₂CH₂-, -CF₂CF₂CH₂-, -CF(CF₃)-, -CF(CF₃)CF₂-, and -CF(CF₃)CH₂-. The fluorine-containing alkylene group is preferably a perfluoroalkylene group.

The fluorine-containing alkylene group having an ether bond preferably has 3 or more carbon atoms. The number of carbon atoms of the fluorine-containing alkylene group having an ether bond is preferably 60 or less, more preferably 30 or less, even more preferably 12 or less, particularly preferably 9 or less, and most preferably 6 or less. The fluorine-containing alkylene group having an ether bond is also preferably a divalent group represented by the general formula: 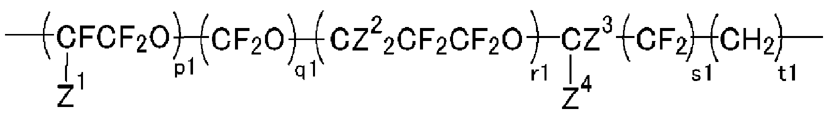 wherein Z¹ is F or CF₃; Z² and Z³ are each H or F; Z⁴ is H, F, or CF₃; p1 + q1 + r1 is an integer of 1 to 10; s1 is 0 or 1; and t1 is an integer of 0 to 5.

Specific examples of the fluorine-containing alkylene group having an ether bond include -CF₂CF(CF₃)OCF₂-, -CF(CF₃)CF₂-O-CF(CF₃)-, -(CF(CF₃)CF₂-O)ₙ-CF(CF₃)- (wherein n is an integer of 1 to 10), -CF(CF₃)CF₂-O-CF(CF₃)CH₂-, -(CF(CF₃)CF₂-O)ₙ-CF(CF₃)CH₂-(wherein n is an integer of 1 to 10), -CH₂CF₂CF₂O-CH₂CF₂CH₂-, - CF₂CF₂CF₂O-CF₂-, -CF₂CF₂CF₂O-CF₂CF₂-, -CF₂CF₂CF₂O-CF₂CF₂CF₂-, - CF₂CF₂CF₂O-CF₂CF₂CH₂-, -CF₂CF₂O-CF₂-, and -CF₂CF₂O-CF₂CH₂-. The fluorine-containing alkylene group having an ether bond is preferably a perfluoroalkylene group.

In the general formula (1), A is -COOM, -SO₃M, -OSO₃M, or -C(CF₃)₂OM, wherein M is H, a metal atom, NR⁷₄, optionally substituted imidazolium, optionally substituted pyridinium, or optionally substituted phosphonium, and R⁷ is H or an organic group.

R⁷ is preferably H or a C₁₋₁₀ organic group, more preferably H or a C₁₋₄ organic group, and even more preferably H or a C₁₋₄ alkyl group.

Examples of the metal atom include alkali metals (Group 1) and alkaline earth metals (Group 2), and Na, K, or Li is preferable.

M is preferably H, a metal atom, or NR⁷₄, more preferably H, an alkali metal (Group 1), an alkaline earth metal (Group 2), or NR⁷₄, even more preferably H, Na, K, Li, or NH₄, yet more preferably H, Na, K, or NH₄, particularly preferably H, Na or NH₄, and most preferably H or NH₄.

A is preferably -COOM or -SO₃M, and more preferably - COOM.

Examples of the monomer represented by the general formula (1) include the monomer represented by the general formula (1a):

CX₂=CFCF₂-O-(CF(CF₃)CF₂O)ₙ₅-CF(CF₃)-A (1a)

wherein each X is the same and represents F or H; n5 represents an integer of 1 to 10; and A is as defined above.

In the general formula (1a), n5 is preferably 0 or an integer of 1 to 5, more preferably 0, 1, or 2, and even more preferably 0 or 1.

In the production method of the present disclosure, the monomer represented by the general formula (1a) and a further monomer may be copolymerized.

The polymer (1) may be a homopolymer of the monomer represented by the general formula (1a) or a copolymer with a further monomer.

The monomer (1) is preferably a monomer represented by the general formula (1A) below.

The polymerization unit (1) is preferably a polymerization unit (1A) derived from a monomer represented by the general formula (1A):

CH₂=CF(-CF₂-O-Rf-A) (1A)

wherein Rf and A are as described above.

In the production method of the present disclosure, the monomer represented by the general formula (1A) and a further monomer may be copolymerized.

The polymer (1) may be a homopolymer of the monomer represented by the general formula (1A), or may be a copolymer with a further monomer.

Specific examples of the monomer represented by the formula (1A) include a monomer represented by the following formula: [0127] 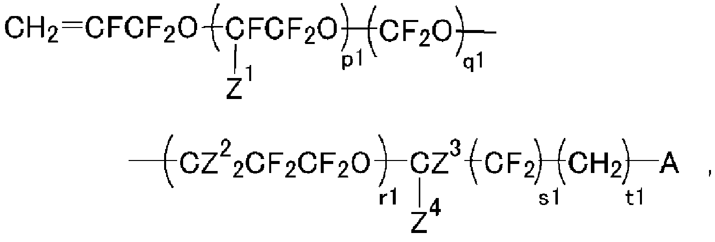
wherein Z¹ is F or CF₃; Z² and Z³ are each H or F; Z⁴ is H, F, or CF₃; p1+q1+r1 is an integer of 0 to 10; s1 is 0 or 1; t1 is an integer of 0 to 5, provided that when Z³ and Z⁴ are both H, p1+q1+r1+s1 is not 0; and A is as defined above. More specific examples preferably include: 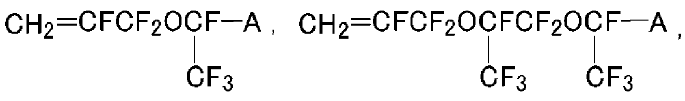 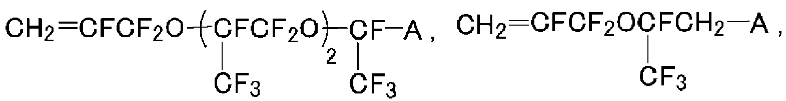 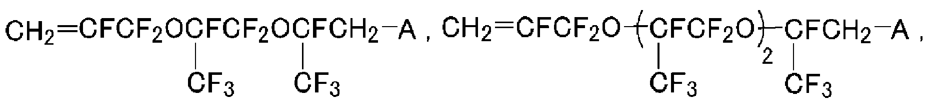 CH₂=CFCF₂OCH₂CF₂-A, CH₂=CFCF₂O(CH₂CF₂CF₂O)CH₂CF₂-A, CH₂=CFCF₂OCH₂CF₂CH₂-A, CH₂=CFCF₂O(CH₂CF₂CF₂O)CH₂CF₂CH₂-A, CH₂=CFCF₂OCF₂CF₂-A, CH₂=CFCF₂O(CF₂CF₂CF₂O)CF₂CF₂-A, CH₂=CFCF₂OCF₂CF₂CH₂-A, CH₂=CFCF₂O(CF₂CF₂CF₂O)CF₂OF₂CH₂-A, CH₂=CFCF₂OCF₂-A, CH₂=CFCF₂O(CF₂CF₂O)CF₂-A, CH₂=CFCF₂OCF₂CH₂-A, CH₂=CFCF₂O(CF₂CF₂O)CF₂CH₂-A,
and, in particular, 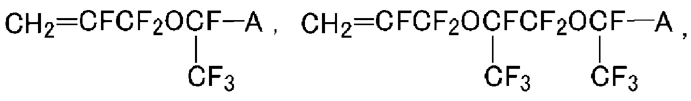 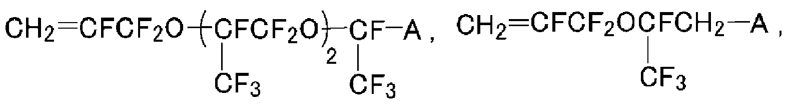 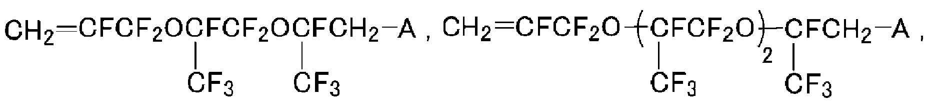
are preferable.

In the monomer represented by the general formula (1A), A in the formula (1A) is preferably -COOM, and, in particular, at least one selected from the group consisting of CH₂=CFCF₂OCF(CF₃)COOM and CH₂=CFCF₂OCF(CF₃)CF₂OCF(CF₃)COOM (wherein M is as defined above) is preferable, and CH₂=CFCF₂OCF(CF₃)COOM is more preferable.

Examples of the monomer represented by the general formula (1) further include monomers represented by the following formula:

CF₂=CFCF₂-O-Rf-A

wherein Rf and A are as described above.

More specific examples include:

CF₂=CFCF₂OCF₂CF₂CF₂-A,

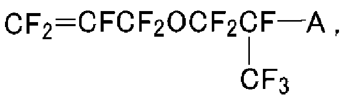

CF₂=CFCF₂OCF₂CF₂CF₂CH₂-A,

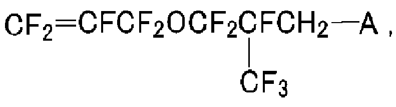

The monomer (I) is also preferably a monomer (2) represented by the general formula (2).

The polymer (I) is also preferably a polymer (2) containing a polymerization unit (2) derived from a monomer represented by the general formula (2):

CX₂=CY(-O-Rf-A) (2)

wherein X is the same or different and is -H or F; Y is -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond or a keto group; and A is as described above.

In the production method of the present disclosure, the monomer (2) represented by the general formula (2) and a further monomer may be copolymerized.

The polymer (2) may be a homopolymer of the monomer represented by the general formula (2) or may be a copolymer with a further monomer.

In the general formula (2), X is -H or -F. Both X may be -F, or at least one may be -H. For example, one may be -F and the other may be -H, or both may be -H.

In the general formula (2), Y is -H, -F, an alkyl group, or a fluorine-containing alkyl group. The alkyl group is an alkyl group not containing a fluorine atom, and has one or more carbon atoms. The number of carbon atoms of the alkyl group is preferably 6 or less, more preferably 4 or less, and even more preferably 3 or less. The fluorine-containing alkyl group is an alkyl group containing at least one fluorine atom, and has one or more carbon atoms. The number of carbon atoms of the fluorine-containing alkyl group is preferably 6 or less, more preferably 4 or less, and even more preferably 3 or less. Y is preferably -H, -F, or -CF₃, and more preferably -F.

In the general formula (2), at least one of X and Y preferably contains a fluorine atom. For example, X may be -H, and Y and Z may be -F.

In the general formula (2), Rf is a fluorine-containing alkylene group having 1 to 40 carbon atoms, a fluorine-containing alkylene group having 2 to 100 carbon atoms and having an ether bond, or a fluorine-containing alkylene group having 2 to 100 carbon atoms and having a keto group. The fluorine-containing alkylene group having 2 to 100 carbon atoms and having an ether bond is an alkylene group that does not include a structure in which an oxygen atom is an end and that contains an ether bond between carbon atoms.

The number of carbon atoms of the fluorine-containing alkylene group of Rf is preferably 2 or more. The number of carbon atoms is preferably 30 or less, more preferably 20 or less, even more preferably 10 or less, and particularly preferably 5 or less. Examples of the fluorine-containing alkylene group include -CF₂-, -CH₂CF₂-, -CF₂CF₂-, -CF₂CH₂-, - CF₂CF₂CH₂-, -CF(CF₃)-, -CF(CF₃)CF₂-, -CF (CF₃)CH₂-, -CF₂CF₂CF₂-, and -CF₂CF₂CF₂CF₂-. The fluorine-containing alkylene group is preferably a perfluoroalkylene group, and more preferably an unbranched linear perfluoroalkylene group.

The number of carbon atoms of the fluorine-containing alkylene group having an ether bond is preferably 3 or more. The number of carbon atoms of the fluorine-containing alkylene group having an ether bond is preferably 60 or less, more preferably 30 or less, even more preferably 12 or less, and particularly preferably 5 or less. The fluorine-containing alkylene group having an ether bond is also preferably a divalent group represented by the general formula: 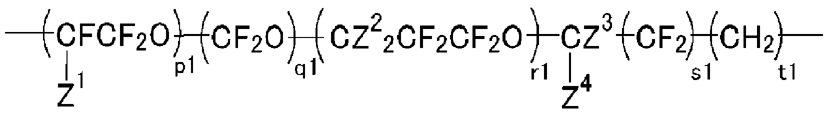 wherein Z¹ is F or CF₃; Z² and Z³ are each H or F; Z⁴ is H, F, or CF₃; p1 + q1 + r1 is an integer of 1 to 10; s1 is 0 or 1; and t1 is an integer of 0 to 5.

Specific examples of the fluorine-containing alkylene group having an ether bond include -CF₂CF(CF₃)OCF₂-, - CF₂CF(CF₃)OCF₂CF₂-, -CF₂CF(CF₃)OCF₂CF₂CF₂-, -CF (CF₃)CF₂-O-CF(CF₃)-, -(CF(CF₃)CF₂-O)ₙ-CF(CF₃)- (wherein n is an integer of 1 to 10), - CF(CF₃)CF₂-O-CF(CF₃)CH₂-, - (CF(CF₃)CF₂-O)ₙ-CF(CF₃)CH₂- (wherein n is an integer of 1 to 10), -CH₂CF₂CF₂O-CH₂CF₂CH₂-, -CF₂CF₂CF₂O-CF₂-, -CF₂CF₂CF₂O-CF₂CF₂-, -CF₂CF₂CF₂O-CF₂CF₂CF₂-, -CF₂CF₂CF₂O-CF₂CF₂CH₂-, -CF₂CF₂O-CF₂-, and -CF₂CF₂O-CF₂CH₂-. The fluorine-containing alkylene group having an ether bond is preferably a perfluoroalkylene group.

The number of carbon atoms of the fluorine-containing alkylene group having a keto group is preferably 3 or more. The number of carbon atoms of the fluorine-containing alkylene group having a keto group is preferably 60 or less, more preferably 30 or less, even more preferably 12 or less, and particularly preferably 5 or less.

Examples of the fluorine-containing alkylene group having a keto group include -CF₂CF(CF₃)CO-CF₂-, -CF₂CF(CF₃)CO-CF₂CF₂-, -CF₂CF(CF₃)CO-CF₂CF₂CF₂-, and -CF₂CF(CF₃)CO-CF₂CF₂CF₂CF₂-. The fluorine-containing alkylene group having a keto group is preferably a perfluoroalkylene group.

Water may be added to the keto group in the fluorine-containing alkylene group. Accordingly, the monomer (2) may be a hydrate. Examples of the fluorine-containing alkylene group in which water is added to the keto group include - CF₂CF(CF₃)C(OH)₂-CF₂-, -CF₂CF(CF₃)C(OH)₂-CF₂CF₂-, -CF₂CF(CF₃)C(OH)₂-CF₂CF₂CF₂-, and -CF₂CF(CF₃)C(OH)₂-CF₂CF₂CF₂CF₂-.

The monomer represented by the general formula (2) is preferably at least one selected from the group consisting of monomers represented by the following general formulas (2a), (2b), (2c), (2d), and (2e) :

CF₂=CF-O-(CF₂)ₙ₁-A (2a)

wherein n1 represents an integer of 1 to 10, and A is as defined above;

CF₂=CF-O-(CF₂C(CF₃)F)ₙ₂-A (2b)

wherein n2 represents an integer of 1 to 5, and A is as defined above;

CF₂=CF-O-(CFX¹)ₙ₃-A (2c)

wherein X¹ represents F or CF₃, n3 represents an integer of 1 to 10, and A is as defined above;

CF₂=CF-O-(CF₂CFX¹O)ₙ₄-(CF₂)ₙ₆-A (2d)

wherein n4 represents an integer of 1 to 10, n6 represents an integer of 1 to 3, and A and X¹ are as defined above;

CF₂=CF-O-(CF₂CF₂CFX¹O)ₙ₅-CF₂CF₂CF₂-A (2e)

wherein n5 represents an integer of 0 to 10, and A and X¹ are as defined above.

In the general formula (2a), n1 is preferably an integer of 5 or less, and more preferably an integer of 2 or less.

Examples of the monomer represented by the general formula (2a) include CF₂=CF-O-CF₂COOM, CF₂=CF(OCF₂CF₂COOM), CF₂=CF(O(CF₂)₃COOM), CF₂=CF(OCF₂CF₂SO₃M), CF₂=CFOCF₂SO₃M, CF₂=CFOCF₂CF₂CF₂SO₃M, wherein M is as defined above.

In the general formula (2b), n2 is preferably an integer of 3 or less from the viewpoint of dispersion stability of the resulting composition.

In the general formula (2c), n3 is preferably an integer of 5 or less from the viewpoint of water solubility, A is preferably -COOM, and M is preferably H, Na, or NH₄.

In the general formula (2d), X¹ is preferably -CF₃ from the viewpoint of dispersion stability of the composition, n4 is preferably an integer of 5 or less from the viewpoint of water solubility, A is preferably -COOM, and M is preferably H, Na, or NH₄.

Examples of the monomer represented by the general formula (2d) include CF₂=CFOCF₂CF(CF₃)OCF₂CF₂COOM, CF₂=CFOCF₂CF(CF₃)OCF₂COOM, CF₂=CFOCF₂CF(CF₃)OCF₂CF₂CF₂COOM, CF₂=CFOCF₂CF(CF₃)OCF₂SO₃M, CF₂=CFOCF₂CF(CF₃)OCF₂CF₂SO₃M, and CF₂=CFOCF₂CF(CF₃)OCF₂CF₂CF₂SO₃M, wherein M represents H, NH₄, or an alkali metal.

In the general formula (2e), n5 is preferably an integer of 5 or less from the viewpoint of water solubility, A is preferably -COOM, and M is preferably H, Na, or NH₄.

An example of the monomer represented by the general formula (2e) is CF₂=CFOCF₂CF₂CF₂COOM, wherein M represents H, NH₄, or an alkali metal.

The monomer (I) is also preferably a monomer (3) represented by the general formula (3).

The polymer (I) is also preferably a polymer (3) containing a polymerization unit (3) derived from a monomer represented by the general formula (3):

CX₂=CY(-Rf-A) (3)

wherein X is the same or different and is -H or -F; Y is -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and A is as described above.

In the production method of the present disclosure, the monomer (3) represented by the general formula (3) and a further monomer may be copolymerized.

The polymer (3) may be a homopolymer of the monomer represented by the general formula (3) or may be a copolymer with a further monomer.

The fluorine-containing alkylene group having 2 to 100 carbon atoms and having an ether bond is an alkylene group that does not include a structure in which an oxygen atom is an end and that contains an ether bond between carbon atoms.

In the general formula (3), Rf is preferably a fluorine-containing alkylene group having 1 to 40 carbon atoms. In the general formula (3), at least one of X and Y preferably contains a fluorine atom.

The monomer represented by the general formula (3) is preferably at least one selected from the group consisting of a monomer represented by the general formula (3a):

CF₂=CF-(CF₂)ₙ₁-A (3a)

wherein n1 represents an integer of 1 to 10, and A is as defined above; and a monomer represented by the general formula (3b):

CF₂=CF-(CF₂C(CF₃)F)ₙ₂-A (3b)

wherein n2 represents an integer of 1 to 5, and A is as defined above.

In the general formula (3a) and the general formula (3b), A is preferably -SO₃M or COOM, and M is preferably H, a metal atom, NR⁷₄, optionally substituted imidazolium, optionally substituted pyridinium, or optionally substituted phosphonium. R⁷ represents H or an organic group.

In the general formula (3a), n1 is preferably an integer of 5 or less, and more preferably an integer of 2 or less. A is preferably -COOM, and M is preferably H or NH₄.

Examples of the monomer represented by the general formula (3a) include CF₂=CFCF₂COOM, wherein M is as defined above.

In the general formula (3b), n2 is preferably an integer of 3 or less from the viewpoint of dispersion stability of the resulting composition, A is preferably -COOM, and M is preferably H or NH₄.

Next, a suitable configuration wherein m is an integer of 2 or more in the general formula (I) will now be described.

It is also preferable that the monomer (I) is at least one selected from the group consisting of monomers represented by the general formula (4a) and the general formula (4b).

The polymer (I) is also preferably a polymer (4) containing a polymerization unit (4) derived from at least one monomer selected from the group consisting of monomers represented by the general formulas (4a) and (4b):

CF₂=CF-CF₂-O-Q^{F1}-CF(-Q^{F2}-CZ^{F}Z²-A)₂ (4a)

wherein Z¹, Z², and A are as defined above, and Q^{F1} and Q^{F2} are the same or different and are a single bond, a fluorine-containing alkylene group optionally containing an ether bond between carbon atoms, or a fluorine-containing oxyalkylene group optionally containing an ether bond between carbon atoms; and

CF₂=CF-O-Q^{F1}-CF(-Q^{F2}-CZ¹Z²-A)₂ (4b)

wherein Z¹, Z², A, Q^{F1}, and Q^{F2} are as defined above.

Examples of the monomers represented by the general formulas (4a) and (4b) include: 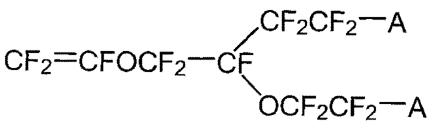 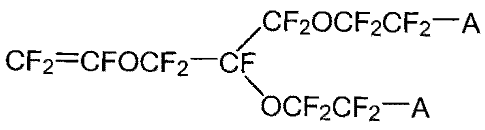 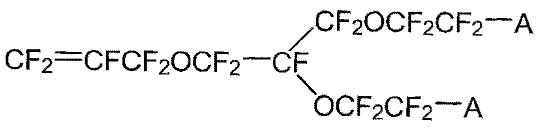 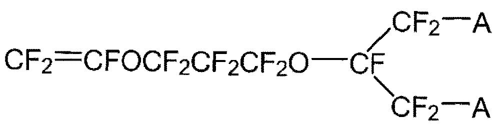 and the like.

The polymer (I) is preferably at least one selected from the group consisting of the polymer (1), the polymer (2), and the polymer (3), more preferably the polymer (1), and even more preferably the monomer (1A).

The polymer (I) is preferably at least one selected from the group consisting of the polymer (1), the polymer (2), and the polymer (3), and the polymer (1) is more preferable.

In the production method of the present disclosure, the monomer (I) and a further monomer may be copolymerized.

The polymer (I) may be a homopolymer composed solely of the polymerization unit (I), or may be a copolymer containing the polymerization unit (I) and a polymerization unit derived from a further monomer copolymerizable with the monomer represented by the general formula (I). From the viewpoint of solubility in an aqueous medium, a homopolymer composed solely of the polymerization unit (I) is preferable. The polymerization unit (I) may be the same or different at each occurrence, and may contain the polymerization unit (I) derived from two or more different monomers (I) represented by the general formula (I).

The further monomer is preferably a monomer represented by the general formula CFR=CR₂, wherein R is independently H, F, or a perfluoroalkyl group having 1 to 4 carbon atoms. Also, the further monomer is preferably a fluorine-containing ethylenic monomer having 2 or 3 carbon atoms. Examples of the further monomer include CF₂=CF₂, CF₂=CFCl, CH₂=CF₂, CFH=CH₂, CFH=CF₂, CF₂=CFCF₃, CH₂=CFCF₃, CH₂=CHCF₃, CHF=CHCF₃ (E-form), CHF=CHCF₃ (Z-form), and CHF=CHF.

In particular, from the viewpoint of good copolymerizability, at least one selected from the group consisting of tetrafluoroethylene (CF₂=CF₂), chlorotrifluoroethylene (CF₂=CFCl), and vinylidene fluoride (CH₂=CF₂) is preferable, and tetrafluoroethylene is more preferable. Accordingly, the polymerization unit derived from the further monomer is preferably a polymerization unit derived from tetrafluoroethylene. The polymerization unit derived from the further monomer may be the same or different at each occurrence, and the polymer (I) may contain a polymerization unit derived from two or more different further monomers.

Examples of the further monomer also include a monomer represented by the general formula (n1-2): 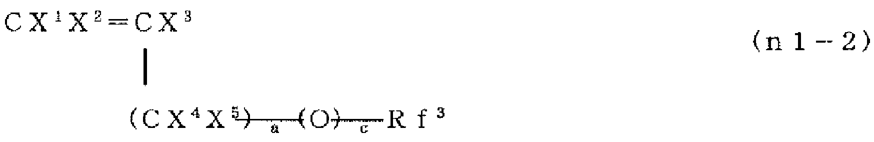 wherein X¹ and X² are the same or different and H or F; X³ is H, F, Cl, CH₃, or CF₃; X⁴ and X⁵ are the same or different and H or F; a and c are the same or different and 0 or 1; and Rf³ is a fluorine-containing alkyl group having 1 to 40 carbon atoms or a fluorine-containing alkyl group having 2 to 100 carbon atoms and having an ether bond.

Specifically, preferable examples include CH₂=CFCF₂-O-Rf³, CF₂=CF-O-Rf³, CF₂=CFCF₂-O-Rf³, CF₂=CF-Rf³, CH₂=CH-Rf³, and CH₂=CH-O-Rf³, wherein Rf³ is as in the above formula (n1-2).

Another example of the further monomer is a fluorine-containing acrylate monomer represented by the formula (n2-1): 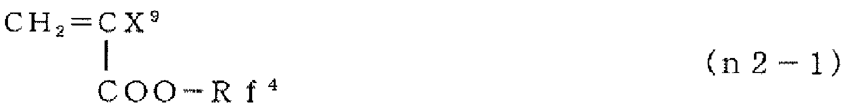
wherein X⁹ is H, F, or CH₃; and Rf⁴ is a fluorine-containing alkyl group having 1 to 40 carbon atoms or a fluorine-containing alkyl group having 2 to 100 carbon atoms and having an ether bond. Examples of the Rf⁴ group include: 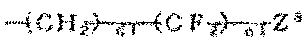
wherein Z⁸ is H, F, or Cl; dl is an integer of 1 to 4; and e1 is an integer of 1 to 10,

   -CH(CF₃)₂. 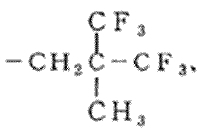 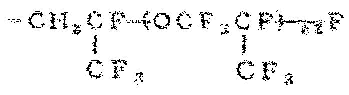
wherein e2 is an integer of 1 to 5, 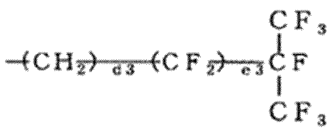
wherein d3 is an integer of 1 to 4; and e3 is an integer of 1 to 10.

Examples of the further monomer also include fluorine-containing vinyl ether represented by the formula (n2-2):

CH₂=CHO-Rf⁵ (n2-2)

wherein Rf⁵ is a fluorine-containing alkyl group having 1 to 40 carbon atoms or a fluorine-containing alkyl group having 2 to 100 carbon atoms and having an ether bond.

Specific preferable examples of the monomer of the general formula (n2-2) include: 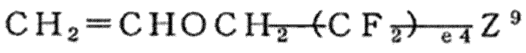
wherein Z⁹ is H or F; and e4 is an integer of 1 to 10, 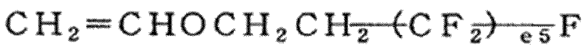
wherein e5 is an integer of 1 to 10, 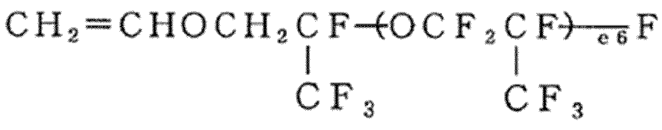
wherein e6 is an integer of 1 to 10.

More specific examples include:

CH₂=CHOCH₂CF₂CF₂H.

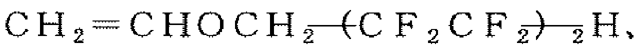

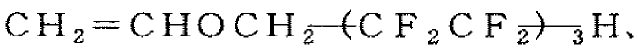

CH₂=CHOCH₂CF₂CF₃,

CH₂=CHOCH₂CF₃,

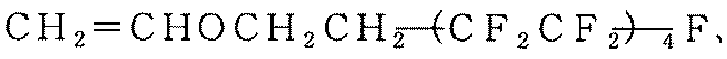

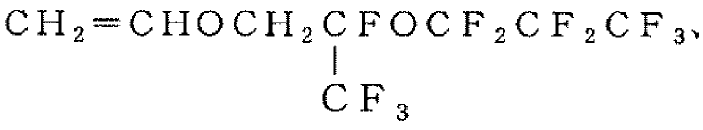

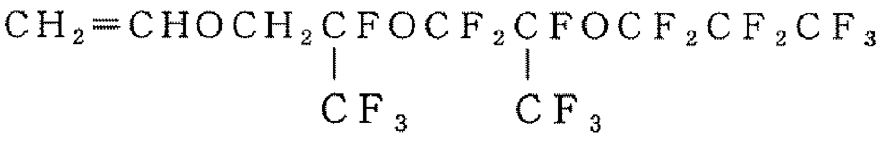

and the like.

In addition, examples also include fluorine-containing allyl ether represented by the general formula (n2-3):

CH₂=CHCH₂O-Rf⁶ (n2-3)

wherein Rf⁶ is a fluorine-containing alkyl group having 1 to 40 carbon atoms or a fluorine-containing alkyl group having 2 to 100 carbon atoms and having an ether bond; and fluorine-containing vinyl monomers represented by the general formula (n2-4) :

CH₂=CH-Rf⁷ (n2-4)

wherein Rf⁷ is a fluorine-containing alkyl group having 1 to 40 carbon atoms or a fluorine-containing alkyl group having 2 to 100 carbon atoms and having an ether bond.

Specific examples of the monomers represented by the general formulas (n2-3) and (n2-4) include:

CH₂=CHCH₂OCH₂CF₂CF₂H,

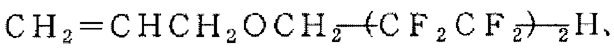

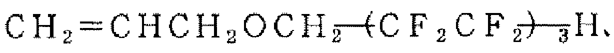

CH₂=CHCH₂OCH₂CF₂CF₃.

CH₂=CHCH₃OCH₃CF₃,

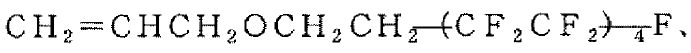

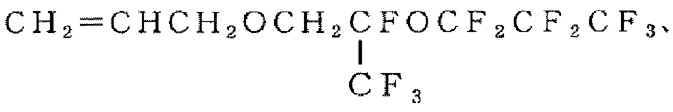

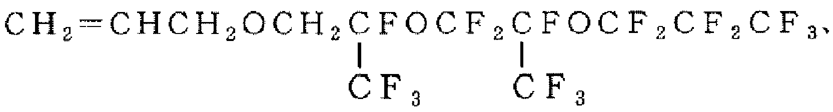

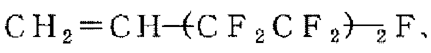

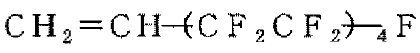

and the like.

In the polymer (I), the content of the polymerization unit (I) is, in ascending order of preference, 1.0 mol% or more, 3.0 mol% or more, 5.0 mol% or more, 10 mol% or more, 20 mol% or more, 30 mol% or more, 40 mol% or more, 50 mol% or more, 60 mol% or more, 70 mol% or more, 80 mol% or more, or 90 mol% or more based on all polymerization units. It is particularly preferable that the content of the polymerization unit (I) is substantially 100 mol%, and it is most preferable that the polymer (I) is composed solely of the polymerization unit (I).

In the polymer (I), the content of the polymerization unit derived from the further monomer copolymerizable with the monomer represented by the general formula (I) is, in ascending order of preference, 99.0 mol% or less, 97.0 mol% or less, 95.0 mol% or less, 90 mol% or less, 80 mol% or less, 70 mol% or less, 60 mol% or less, 50 mol% or less, 40 mol% or less, 30 mol% or less, 20 mol% or less, or 10 mol% or less based on all polymerization units. It is particularly preferable that the content of the polymerization unit derived from the further monomer copolymerizable with the monomer represented by the general formula (I) is substantially 0 mol%, and it is most preferable that the polymer (I) contains no polymerization unit derived from the further monomer.

The lower limit of the weight average molecular weight (Mw) of the polymer (I) is, in ascending order of preference, 0.2 × 10⁴ or more, 0.4 × 10⁴ or more, 0.6 × 10⁴ or more, 0.8 × 10⁴ or more, 1.0 × 10⁴ or more, 1.3 × 10⁴ or more, 1.4 × 10⁴ or more, 1.5 × 10⁴ or more, 1.7 × 10⁴ or more, 1.9 × 10⁴ or more, 2.1 × 10⁴ or more, 2.3 × 10⁴ or more, 2.7 × 10⁴ or more, 3.1 × 10⁴ or more, 3.5 × 10⁴ or more, 3.9 × 10⁴ or more, or 4.3 × 10⁴ or more. The upper limit of the weight average molecular weight (Mw) of the polymer (I) is, in ascending order of preference, 150.0 × 10⁴ or less, 100.0 × 10⁴ or less, 60.0 × 10⁴ or less, 50.0 × 10⁴ or less, or 40.0 × 10⁴ or less.

The lower limit of the number average molecular weight (Mn) of the polymer (I) is, in ascending order of preference, 0.1 × 10⁴ or more, 0.2 × 10⁴ or more, 0.3 × 10⁴ or more, 0.4 × 10⁴ or more, 0.5 × 10⁴ or more, 1.0 × 10⁴ or more, 1.2 × 10⁴ or more, 1.4 × 10⁴ or more, 1.6 × 10⁴ or more, or 1.8 × 10⁴ or more. The upper limit of the number average molecular weight (Mn) of the polymer (I) is, in ascending order of preference, 75.0 × 10⁴ or less, 50.0 × 10⁴ or less, 40.0 × 10⁴ or less, 30.0 × 10⁴ or less, or 20.0 × 10⁴ or less.

The molecular weight distribution (Mw/Mn) of the polymer (I) is, in ascending order of preference, 3.0 or less, 2.4 or less, 2.2 or less, 2.0 or less, 1.9 or less, 1.7 or less, 1.5 or less, 1.4 or less, or 1.3 or less.

The number average molecular weight and the weight average molecular weight are molecular weight values calculated by gel permeation chromatography (GPC) using monodisperse polystyrene as a standard. Also, when measurement by GPC is not possible, the number average molecular weight of the polymer (I) can be determined by the correlation between the number average molecular weight calculated from the number of terminal groups obtained by NMR, FT-IR, or the like, and the melt flow rate. The melt flow rate can be measured in accordance with JIS K 7210.

The polymer (I) usually has a terminal group. The terminal group is a terminal group produced during polymerization, and a representative terminal group is independently selected from hydrogen, iodine, bromine, a linear or branched alkyl group, and a linear or branched fluoroalkyl group, and may optionally contain at least one catenary heteroatom. The alkyl group or fluoroalkyl group preferably has 1 to 20 carbon atoms. These terminal groups are, in general, produced from an initiator or a chain transfer agent used to form the polymer (I) or produced during a chain transfer reaction.

The polymer (I) preferably has an ion exchange rate (IXR) of 53 or less. The IXR is defined as the number of carbon atoms in the polymer backbone relative to the ionic groups. A precursor group that becomes ionic by hydrolysis (such as -SO₂F) is not regarded as an ionic group for the purpose of determining the IXR.

The IXR is preferably 0.5 or more, more preferably 1 or more, even more preferably 3 or more, yet more preferably 4 or more, further preferably 5 or more, and particularly preferably 8 or more. The IXR is more preferably 43 or less, even more preferably 33 or less, and particularly preferably 23 or less.

The ion exchange capacity of the polymer (I) is, in ascending order of preference, 0.80 meq/g or more, 1.50 meq/g or more, 1.75 meq/g or more, 2.00 meq/g or more, 2.50 meq/g or more, 2.60 meq/g or more, 3.00 meq/g or more, or 3.50 meq/g or more. The ion exchange capacity is the content of ionic groups (anionic groups) in the polymer (I), and can be calculated from the composition of the polymer (I).

In the polymer (I), the ionic groups (anionic groups) are typically distributed along the polymer backbone. The polymer (I) contains the polymer backbone together with a repeating side chain bonded to this backbone, and this side chain preferably has an ionic group.

The polymer (I) preferably contains an ionic group having a pKa of less than 10, and more preferably less than 7. The ionic group of the polymer (I) is preferably selected from the group consisting of sulfonate, carboxylate, phosphonate, and phosphate.

The terms "sulfonate, carboxylate, phosphonate, and phosphate" are intended to refer to the respective salts or the respective acids that can form salts. A salt when used is preferably an alkali metal salt or an ammonium salt. A preferable ionic group is a sulfonate group.

The polymer (I) preferably has water solubility. Water solubility means the property of being readily dissolved or dispersed in an aqueous medium. When the polymer (I) has water solubility, the particle size cannot be measured, or a particle size of 10 nm or less is indicated, by, for example, dynamic light scattering (DLS).

The polymer (I) preferably has sufficient water solubility. In general, the higher the content of the polymer (I) in an aqueous solution is, the more difficult it is to sufficiently dissolve or disperse the polymer (I) in an aqueous medium. Accordingly, even when the content of the polymer (I) in an aqueous solution is high, it can be said that the polymer (I) whose particle size cannot be measured by dynamic light scattering (DLS) has high water solubility. Preferably, the particle size of the polymer (I) cannot be measured even when the polymer (I) is contained in an aqueous solution in a content of 1.0% by mass. More preferably, the particle size cannot be measured even when the polymer (I) is contained in an aqueous solution in a content of 1.5% by mass, and even more preferably 2.0% by mass.

The viscosity of the aqueous solution of the polymer (I) is preferably 5.0 mPa.s or more, more preferably 8.0 mPa.s or more, even more preferably 10.0 mPa.s or more, particularly preferably 12.0 mPa.s or more, and most preferably 14.0 mPa.s or more, and is preferably 100.0 mPa.s or less, more preferably 50.0 mPa.s or less, even more preferably 25.0 mPa.s or less, and yet more preferably 20.0 mPa.s or less.

The viscosity of the aqueous solution of the polymer (I) can be determined by regulating the content of the polymer (I) in the aqueous solution to be 33% by mass based on the aqueous solution, and measuring the viscosity of the resulting aqueous solution at 20°C using a tuning fork vibration viscometer (model number: SV-10) manufactured by A&D Company Limited.

The critical micelle concentration (CMC) of the polymer (I) is preferably 0.1% by mass or more, more preferably 0.5% by mass or more, and even more preferably 1% by mass or more, and is preferably 20% by mass or less, more preferably 10% by mass or less, and even more preferably 5% by mass or less.

The critical micelle concentration of the polymer (I) can be determined by measuring surface tension. Surface tension can be measured with, for example, a surface tensiometer CBVP-A3 manufactured by Kyowa Interface Science Co., Ltd.

The acid value of the polymer (I) is preferably 60 or more, more preferably 90 or more, even more preferably 120 or more, particularly preferably 150 or more, and most preferably 180 or more, and while the upper limit is not specified, it is preferably 300 or less.

When the polymer (I) has an anionic group such as - COOM, -SO₃M, -OSO₃M, or -C(CF₃)₂OM (M is a metal atom, NR⁷₄, optionally substituted imidazolium, optionally substituted pyridinium, or optionally substituted phosphonium, and R⁷ is H or an organic group) other than an acid-type functional group, the acid value of the polymer (I) can be determined by acid-base titration after converting the anionic group into an acid-type group.

The polymer (I) may also be a polymer (11) of a monomer (11) represented by the general formula (11) wherein the content of a polymerization unit (11) derived from the monomer (11) is 50 mol% or more based on all polymerization units constituting the polymer (11), and the weight average molecular weight (Mw) is 38.0 × 10⁴ or more. The polymer (11) is a novel polymer.

General formula (11): CX₂=CY-CF₂-O-Rf-A

wherein X and Y are independently H, F, CH₃, or CF₃, and at least one of X and Y is F. Rf is a fluorine-containing alkylene group having 1 to 40 carbon atoms or a fluorine-containing alkylene group having 2 to 100 carbon atoms and having an ether bond; and A is -COOM, -SO₃M, -OSO₃M, or -C(CF₃)₂OM, wherein M is H, a metal atom, NR⁷₄, optionally substituted imidazolium, optionally substituted pyridinium, or optionally substituted phosphonium, and R⁷ is H or an organic group.

In the general formula (11), X and Y are independently H, F, CH₃, or CF₃, and at least one of X and Y is F. X is preferably H or F, and more preferably H. Y is preferably H or F, and more preferably F.

Rf and A in the general formula (11) are the same as Rf and A in the general formula (1), respectively, which represents the monomer constituting the polymer (1).

The polymer (11) may be a homopolymer composed solely of the polymerization unit (11) derived from the monomer (11), or may be a copolymer containing the polymerization unit (11) and a polymerization unit derived from a further monomer copolymerizable with the monomer (11). The further monomer is as described above. The polymerization unit (11) may be the same or different at each occurrence, and the polymer (11) may contain polymerization units (11) derived from two or more different monomers represented by the general formula (11).

The content of the polymerization unit (11) in the polymer (11) is, in ascending order of preference, 50 mol% or more, 60 mol% or more, 70 mol% or more, 80 mol% or more, 90 mol% or more, or 99 mol% or more based on all polymerization units constituting the polymer (11). The content of the polymerization unit (11) is, particularly preferably, substantially 100 mol%, and the polymer (11) is most preferably composed solely of the polymerization unit (11).

In the polymer (11), the content of the polymerization unit derived from the further monomer copolymerizable with the monomer (11) is, in ascending order of preference, 99.0 mol% or less, 97.0 mol% or less, 95.0 mol% or less, 90 mol% or less, 80 mol% or less, 70 mol% or less, 60 mol% or less, or 50 mol% or less based on all polymerization units constituting the polymer (11). The content of the polymerization unit derived from the further monomer copolymerizable with the monomer (11) is, particularly preferably, substantially 0 mol%, and most preferably the polymer (11) does not contain the polymerization unit derived from the further monomer.

The lower limit of the weight average molecular weight of the polymer (11) is, in ascending order of preference, 38.0 × 10⁴ or more or 40.0 × 10⁴ or more. The upper limit of the weight average molecular weight of the polymer (11) is, in ascending order of preference, 150.0 × 10⁴ or less, 100.0 × 10⁴ or less, or 60.0 × 10⁴ or less.

The lower limit of the number average molecular weight of the polymer (11) is, in ascending order of preference, 5.0 × 10⁴, 8.0 × 10⁴, 10.0 × 10⁴ or more, and 12.0 × 10⁴ or more. The upper limit of the number average molecular weight of the polymer (11) is, in ascending order of preference, 75.0 × 10⁴ or less, 50.0 × 10⁴ or less, 40.0 × 10⁴ or less, or 30.0 × 10⁴ or less.

The polymer (I) may also be a polymer (12) of a monomer (12) represented by the general formula (12) wherein the content of a polymerization unit (12) derived from the monomer (12) is 50 mol% or more based on all polymerization units constituting the polymer (12), and the weight average molecular weight (Mw) is 1.4 × 10⁴ or more. The polymer (12) is a novel polymer.

General formula (12): CX₂=CX-O-Rf-A

wherein X is independently F or CF₃; Rf is a fluorine-containing alkylene group having 1 to 40 carbon atoms or a fluorine-containing alkylene group having 2 to 100 carbon atoms and having an ether bond or a keto group; and A is -COOM, -SO₃M, - OSO₃M, or -C(CF₃)₂OM, wherein M is -H, a metal atom, -NR⁷₄, optionally substituted imidazolium, optionally substituted pyridinium, or optionally substituted phosphonium, and R⁷ is H or an organic group.

In the general formula (12), each X is independently F or CF₃. At least one X is preferably F, and more preferably all X are F.

Rf and A in the general formula (12) are the same as Rf and A in the general formula (2), respectively, which represents the monomer constituting the polymer (2).

The polymer (12) may be a homopolymer composed solely of the polymerization unit (12) derived from the monomer (12), or may be a copolymer containing the polymerization unit (12) and a polymerization unit derived from a further monomer copolymerizable with the monomer (12). The further monomer is as described above. The polymerization unit (12) may be the same or different at each occurrence, and the polymer (12) may contain the polymerization unit (12) derived from two or more different monomers represented by the general formula (12).

The content of the polymerization unit (12) in the polymer (12) is, in ascending order of preference, 50 mol% or more, 60 mol% or more, 70 mol% or more, 80 mol% or more, 90 mol% or more, or 99 mol% or more based on all polymerized units constituting the polymer (12). It is particularly preferable that the content of the polymerization unit (12) is substantially 100 mol%, and it is most preferable that the polymer (12) contains only the polymerization unit (12).

In the polymer (12), the content of the polymerization unit derived from the further monomer copolymerizable with the monomer (12) is, in ascending order of preference, 50 mol% or less, 40 mol% or less, 30 mol% or less, 20 mol% or less, 10 mol% or less, or 1 mol% or less based on all polymerization units constituting the polymer (12). The content of the polymerization unit derived from the further monomer copolymerizable with the monomer (12) is, particularly preferably, substantially 0 mol%, and most preferably the polymer (12) does not contain the polymerization unit derived from the further monomer.

The lower limit of the weight average molecular weight (Mw) of the polymer (12) is, in ascending order of preference, 1.4 × 10⁴ or more, 1.7 × 10⁴ or more, 1.9 × 10⁴ or more, 2.1 × 10⁴ or more, 2.3 × 10⁴ or more, 2.7 × 10⁴ or more, 3.1 × 10⁴ or more, 3.5 × 10⁴ or more, 3.9 × 10⁴ or more, 4.3 × 10⁴ or more, 4.7 × 10⁴ or more, or 5.1 × 10⁴ or more. The upper limit of the weight average molecular weight (Mw) of the polymer (12) is, in ascending order of preference, 150.0 × 10⁴ or less, 100.0 × 10⁴ or less, 60.0 × 10⁴ or less, 50.0 × 10⁴ or less, or 40.0 × 10⁴ or less.

The lower limit of the number average molecular weight (Mn) of the polymer (12) is, in ascending order of preference, 0.7 × 10⁴ or more, 0.9 × 10⁴ or more, 1.0 × 10⁴ or more, 1.2 × 10⁴ or more, 1.4 × 10⁴ or more, 1.6 × 10⁴ or more, or 1.8 × 10⁴ or more. The upper limit of the number average molecular weight (Mn) of the polymer (12) is, in ascending order of preference, 75.0 × 10⁴ or less, 50.0 × 10⁴ or less, 40.0 × 10⁴ or less, 30.0 × 10⁴ or less, or 20.0 × 10⁴ or less.

The molecular weight distribution (Mw/Mn) of the polymer (12) is preferably 3.0 or less, more preferably 2.4 or less, even more preferably 2.2 or less, particularly preferably 2.0 or less, and most preferably 1.9 or less.

The polymer (I) may also be a polymer (13) of a monomer (13) represented by the general formula (13), wherein the content of a polymerization unit (13) derived from the monomer (13) is 50% by mass or more based on all polymerization units constituting the polymer (13). The polymer (13) is a novel polymer.

General Formula (13): CX₂=CX-O-Rf-SO₃M

wherein X is independently F or CF₃; Rf is a fluorine-containing alkylene group having 1 to 40 carbon atoms or a fluorine-containing alkylene group having 2 to 100 carbon atoms and having an ether bond or a keto group; and M is -H, a metal atom, -NR⁷₄, optionally substituted imidazolium, optionally substituted pyridinium, or optionally substituted phosphonium, wherein R⁷ is H or an organic group.

In the general formula (13), each X is independently F or CF₃. At least one or more X is preferably F, and more preferably X is all F.

Rf and M in the general formula (13) are the same as Rf and A in the general formula (2), respectively, which represents the monomer constituting the polymer (2).

The polymer (13) may be a homopolymer composed solely of the polymerization unit (13) derived from the monomer (13), or may be a copolymer containing the polymerization unit (13) and a polymerization unit derived from a further monomer copolymerizable with the monomer (13). The further monomer is as described above. The polymerization unit (13) may be the same or different at each occurrence, and the polymer (13) may contain polymerization units (13) derived from two or more different monomers represented by the general formula (13).

In the polymer (13), the content of the polymerization unit (13) derived from the monomer (13) is 50% by mass or more based on all polymerization units constituting the polymer (13). The content of the polymerization unit (13) in the polymer (13) is, in ascending order of preference, 50% by mass or more, 60% by mass or more, 70% by mass or more, 80% by mass or more, 90% by mass or more, or 99% by mass or more based on all polymerization units constituting the polymer (13). The content of the polymerization unit (13) is, particularly preferably, substantially 100% by mass, and the polymer (13) is most preferably composed solely of the polymerization unit (13).

In the polymer (13), the content of the polymerization unit derived from the further monomer copolymerizable with the monomer (13) is, in ascending order of preference, 50% by mass or less, 40% by mass or less, 30% by mass or less, 20% by mass or less, 10% by mass or less, or 1% by mass or less based on all polymerization units constituting the polymer (13). The content of the polymerization unit derived from the further monomer copolymerizable with the monomer (13) is, particularly preferably, substantially 0% by mass, and most preferably the polymer (13) does not contain the polymerization unit derived from the further monomer.

The lower limit of the number average molecular weight of the polymer (13) is, in ascending order of preference, 0.3 × 10⁴ or more, 0.4 × 10⁴ or more, 0.5 × 10⁴ or more, 0.7 × 10⁴ or more, 0.8 × 10⁴ or more, 1.0 × 10⁴ or more, 1.2 × 10⁴ or more, 1.4 × 10⁴ or more, 1.6 × 10⁴ or more, 1.8 × 10⁴ or more, 2.0 × 10⁴ or more, or 3.0 × 10⁴ or more. The upper limit of the number average molecular weight of the polymer (13) is, in ascending order of preference, 75.0 × 10⁴ or less, 50.0 × 10⁴ or less, 40.0 × 10⁴ or less, 30.0 × 10⁴ or less, or 20.0 × 10⁴ or less.

The lower limit of the weight average molecular weight of the polymer (13) is, in ascending order of preference, 0.4 × 10⁴ or more, 0.5 × 10⁴ or more, 0.6 × 10⁴ or more, 0.8 × 10⁴ or more, 1.0 × 10⁴ or more, 1.2 × 10⁴ or more, 1.4 × 10⁴ or more, 1.7 × 10⁴ or more, 1.9 × 10⁴ or more, 2.1 × 10⁴ or more, 2.3 × 10⁴ or more, 2.7 × 10⁴ or more, 3.1 × 10⁴ or more, 3.5 × 10⁴ or more, 3.9 × 10⁴ or more, 4.3 × 10⁴ or more, 4.7 × 10⁴ or more, 5.1 × 10⁴ or more, 10.0 × 10⁴ or more, 15.0 × 10⁴ or more, 20.0 × 10⁴ or more, and 25.0 × 10⁴ or more. The upper limit of the weight average molecular weight of the polymer (13) is, in ascending order of preference, 150.0 × 10⁴ or less, 100.0 × 10⁴ or less, 60.0 × 10⁴ or less, 50.0 × 10⁴ or less, or 40.0 × 10⁴ or less.

The molecular weight distribution (Mw/Mn) of the polymer (13) is, in ascending order of preference, 3.0 or less, 2.4 or less, 2.2 or less, 2.0 or less, 1.9 or less, 1.7 or less, 1.5 or less, 1.4 or less, or 1.3 or less.

The polymer (I) can be produced by a conventionally known method except that the above-described monomer is used.

Concerning the polymer (I), the polymer (11) is a novel polymer and can be produced by a production method (11) comprising polymerizing the monomer (11) represented by the general formula (11) in an aqueous medium to produce the polymer (11) of the monomer (11), wherein the oxygen concentration in the reaction system of the polymerization is maintained at 500 volume ppm or less.

In the production method (11), the oxygen concentration in the reaction system of the polymerization is 500 volume ppm or less. In the production method (11), the oxygen concentration in the reaction system is maintained at 500 volume ppm or less throughout the polymerization of the monomer (11). The oxygen concentration in the reaction system is preferably 350 volume ppm or less, more preferably 300 volume ppm or less, even more preferably 100 volume ppm or less, and particularly preferably 50 volume ppm or less. The oxygen concentration in the reaction system is usually 0.01 volume ppm or more.

In the production method (11), the polymerization temperature of the monomer (11) is preferably 59°C or lower, more preferably 57°C or lower, even more preferably 55°C or lower, and particularly preferably 53°C or lower, and is preferably 20°C or higher, more preferably 25°C or higher, even more preferably 30°C or higher, and particularly preferably 35°C or higher because the polymer (11) having a higher molecular weight can be readily produced.

In the production method (11), the monomer (11) may be copolymerized with the above-described further monomer.

In the production method (11), the polymerization pressure is usually atmospheric pressure to 10 MPaG. The polymerization pressure is suitably determined according to the type of monomer used, the molecular weight of the target polymer, and the reaction rate.

In the production method (11), the polymerization time is usually 1 to 200 hours, and may be 5 to 100 hours.

Concerning the polymer (I), the polymer (12) is a novel polymer and can be produced by a production method (12) comprising polymerizing the monomer (12) represented by the general formula (12) in an aqueous medium to produce the polymer (12) of the monomer (12), wherein the oxygen concentration in the reaction system of the polymerization is maintained at 1,500 volume ppm or less.

In the production method (12), the oxygen concentration in the reaction system of the polymerization is 1,500 volume ppm or less. In the production method (12), the oxygen concentration in the reaction system is maintained at 1,500 volume ppm or less throughout the polymerization of the monomer (12). The oxygen concentration in the reaction system is preferably 500 volume ppm or less, more preferably 100 volume ppm or less, and even more preferably 50 volume ppm or less. The oxygen concentration in the reaction system is usually 0.01 volume ppm or more.

Concerning the polymer (I), the polymer (13) is a novel polymer and can be produced by a production method (13) comprising polymerizing the monomer (13) represented by the general formula (13) in an aqueous medium to produce the polymer (13) of the monomer (13).

In the production method (13), the oxygen concentration in the reaction system of polymerization is preferably 1,500 volume ppm or less, more preferably 500 volume ppm or less, even more preferably 100 volume ppm or less, and particularly preferably 50 volume ppm or less. The oxygen concentration in the reaction system is usually 0.01 volume ppm or more. In the production method, the oxygen concentration in the reaction system is preferably maintained within the above range throughout the polymerization of the monomer (13).

In the production method (12) and the production method (13), the polymerization temperature of the monomer (12) and the monomer (13) is preferably 70°C or lower, more preferably 65°C or lower, even more preferably 60°C or lower, particularly preferably 55°C or lower, yet more preferably 50°C or lower, particularly preferably 45°C or lower, and most preferably 40°C or lower, and is preferably 10°C or higher, more preferably 15°C or higher, and even more preferably 20°C or higher because the polymer (12) and the polymer (13) having a higher molecular weight can be readily produced.

In the production method (12) and the production method (13), the monomer (12) and the monomer (13) may be copolymerized with the above-described further monomer.

In the production method (12) and the production method (13), the polymerization pressure is usually atmospheric pressure to 10 MPaG. The polymerization pressure is suitably determined according to the type of monomer used, the molecular weight of the target polymer, and the reaction rate.

In the production method (12) and the production method (13), the polymerization time is usually 1 to 200 hours, and may be 5 to 100 hours.

In the production methods (11) to (13), the oxygen concentration in the reaction system of the polymerization can be controlled by causing, for example, an inert gas such as nitrogen or argon, or the gaseous monomer when a gaseous monomer is used, to flow through the liquid phase or the gas phase in the reactor. The oxygen concentration in the reaction system of the polymerization can be determined by measuring and analyzing the gas emitted from the discharge gas line of the polymerization system with a low-concentration oxygen analyzer.

In the production methods (11) to (13), the aqueous medium is a reaction medium in which polymerization is performed, and means a liquid containing water. The aqueous medium may be any medium containing water, and it may be a medium containing water and, for example, any of fluorine-free organic solvents such as alcohols, ethers, and ketones, and/or fluorine-containing organic solvents having a boiling point of 40°C or lower. The aqueous medium is preferably water.

In the production methods (11) to (13), the monomer can be polymerized in the presence of a polymerization initiator. The polymerization initiator is not limited as long as it can generate radicals within the polymerization temperature range, and known oil-soluble and/or water-soluble polymerization initiators can be used. The polymerization initiator can be combined with a reducing agent or the like to form a redox agent and initiate the polymerization. The concentration of the polymerization initiator is suitably determined according to the type of monomer, the molecular weight of the target polymer, and the reaction rate.

As a polymerization initiator, persulfate (such as ammonium persulfate) and organic peroxide such as disuccinic acid peroxide or diglutaric acid peroxide can be used alone or in the form of a mixture thereof. Further, the polymerization initiator may be used together with a reducing agent such as sodium sulfite so as to form a redox system. Moreover, the concentration of radicals in the system can be also regulated by adding a radical scavenger such as hydroquinone or catechol or adding a peroxide decomposer such as ammonium sulfate during polymerization.

The polymerization initiator is particularly preferably persulfate because a polymer having a higher molecular weight can be readily produced. Examples of persulfate include ammonium persulfate, potassium persulfate, and sodium persulfate, and ammonium persulfate is preferable.

The amount of the polymerization initiator added is not limited, and the polymerization initiator is added in an amount that does not significantly decrease the polymerization rate (e.g., a concentration of several ppm in water) or more at once in the initial stage of polymerization, or added successively or continuously. The upper limit is within a range where the reaction temperature is allowed to increase while the polymerization reaction heat is removed through the device surface, and the upper limit is more preferably within a range where the polymerization reaction heat can be removed through the device surface.

In the production methods (11) to (13), the polymerization initiator can be added at the beginning of polymerization, and can also be added during polymerization. The proportion of the amount of the polymerization initiator added at the beginning of polymerization to the amount of the polymerization initiator added during polymerization is preferably 95/5 to 5/95, more preferably 60/40 to 10/90, and more preferably 30/70 to 15/85. The method for adding the polymerization initiator during polymerization is not limited, and the entire amount may be added at once, may be added in two or more divided portions, or may be added continuously.

In the production methods (11) to (13), the total amount of the polymerization initiator added to be used in the polymerization is preferably 0.00001 to 10% by mass based on the aqueous medium because a polymer having a higher molecular weight can be readily produced. The total amount of the polymerization initiator added to be used in the polymerization is more preferably 0.0001% by mass or more, even more preferably 0.001% by mass or more, and particularly preferably 0.01% by mass or more, and is more preferably 5% by mass or less, and even more preferably 2% by mass or less.

In the production methods (11) to (13), the total amount of the polymerization initiator added to be used in the polymerization is preferably 0.001 to 10 mol% based on the monomer because a polymer having a higher molecular weight can be readily produced. The total amount of the polymerization initiator added to be used in the polymerization is more preferably 0.005 mol% or more, even more preferably 0.01 mol% or more, yet more preferably 0.1 mol% or more, and most preferably 0.5 mol% or more, and is more preferably 5 mol% or less, even more preferably 2.5 mol% or less, particularly preferably 2.2 mol% or less, and most preferably 2.0 mol% or less.

In the production methods (11) to (13), the amount of a monomer that is present and that contains the monomers (11) to (13) at the beginning of polymerization is preferably 20% by mass or more based on the amount of the aqueous medium present because a polymer having a higher molecular weight can be readily produced. The amount of the monomer present is more preferably 30% by mass or more, and even more preferably 40% by mass or more. The upper limit of the amount of the monomer present is not limited, and may be 200% by mass or less from the viewpoint of causing the polymerization to proceed smoothly. The amount of the monomer present at the beginning of polymerization is the total amount of the monomers (11) to (13) and, if any, other monomers present in the reactor at the beginning of polymerization.

In the production methods (11) to (13), polymerization may be carried out in the presence of a pH adjuster. The pH adjuster may be added before the beginning of polymerization or after the beginning of polymerization.

The pH adjuster may be ammonia, sodium hydroxide, potassium hydroxide, sodium carbonate, potassium carbonate, ammonium carbonate, sodium hydrogen carbonate, potassium hydrogen carbonate, ammonium hydrogen carbonate, sodium phosphate, potassium phosphate, sodium citrate, potassium citrate, ammonium citrate, sodium gluconate, potassium gluconate, or ammonium gluconate.

In the production methods (11) to (13), polymerization of the monomers (11) to (13) can be performed by charging a polymerization reactor with an aqueous medium, any of the monomers (11) to (13), optionally a further monomer, and optionally a further additive, stirring the contents of the reactor, maintaining the reactor at a predetermined polymerization temperature, and adding a predetermined amount of a polymerization initiator to thereby initiate the polymerization reaction. After the beginning of the polymerization reaction, the monomer, the polymerization initiator, and the further additive may be added depending on the purpose.

In the production methods (11) to (13), the polymerization of the monomer can be carried out substantially in the absence of a fluorine-containing surfactant. The expression "substantially in the absence of a fluorine-containing surfactant" as used herein means that the amount of the fluorine-containing surfactant is 10 mass ppm or less based on the aqueous medium. The amount of the fluorine-containing surfactant based on the aqueous medium is preferably 1 mass ppm or less, more preferably 100 mass ppb or less, even more preferably 10 mass ppb or less, and yet more preferably 1 mass ppb or less.

The fluorine-containing surfactant will be described below in the description on the polymerization of a fluoromonomer.

### <Polymerization of fluoromonomer>

In the production method of the present disclosure, the fluoropolymer raw material is obtained by polymerizing the fluoromonomer in the aqueous medium in the presence of the polymer (I). The fluoromonomer preferably has at least one double bond. The fluoromonomer is preferably at least one selected from the group consisting of tetrafluoroethylene (TFE), hexafluoropropylene (HFP), chlorotrifluoroethylene (CTFE), vinyl fluoride, vinylidene fluoride (VDF), trifluoroethylene, fluoroalkyl vinyl ether, fluoroalkyl ethylene, fluoroalkyl allyl ether, trifluoropropylene, pentafluoropropylene, trifluorobutene, tetrafluoroisobutene, hexafluoroisobutene, a fluoromonomer represented by the general formula (100) : CHX¹⁰¹=CX¹⁰²Rf¹⁰¹ (wherein one of X¹⁰¹ and X¹⁰² is H and the other is F, and Rf¹⁰¹ is a linear or branched fluoroalkyl group having 1 to 12 carbon atoms), and a fluorinated vinyl heterocyclic compound.

The fluoroalkyl vinyl ether is preferably, for example, at least one selected from the group consisting of:
a fluoromonomer represented by the general formula (110): CF₂=CF-ORf¹¹¹
   wherein Rf¹¹¹ represents a perfluoro organic group;
a fluoromonomer represented by the general formula (120): CF₂=CF-OCH₂-Rf¹²¹
   wherein Rf¹²¹ is a perfluoroalkyl group having 1 to 5 carbon atoms;
a fluoromonomer represented by the general formula (130): CF₂=CFOCF₂ORf¹³¹
   wherein Rf¹³¹ is a linear or branched perfluoroalkyl group having 1 to 6 carbon atoms, a cyclic perfluoroalkyl group having 5 to 6 carbon atoms, or a linear or branched perfluorooxyalkyl group having 2 to 6 carbon atoms and containing 1 to 3 oxygen atoms;
a fluoromonomer represented by the general formula (140) : CF₂=CFO(CF₂CF(Y¹⁴¹)O)ₘ(CF₂)ₙF
   wherein Y¹⁴¹ represents a fluorine atom or a trifluoromethyl group; m is an integer of 1 to 4; and n is an integer of 1 to 4; and
a fluoromonomer represented by the general formula (150): CF₂=CF-O-(CF₂CFY¹⁵¹-O)ₙ-(CFY¹⁵²)ₘ-A¹⁵¹
   wherein Y¹⁵¹ represents a fluorine atom, a chlorine atom, an - SO₂F group, or a perfluoroalkyl group; the perfluoroalkyl group optionally contains ether oxygen and an -SO₂F group; n represents an integer of 0 to 3; n Y¹⁵¹ groups are optionally the same or different; Y¹⁵² represents a fluorine atom, a chlorine atom, or an -SO₂F group; m represents an integer of 1 to 5; m Y¹⁵² groups are optionally the same or different; A¹⁵¹ represents -SO₂X¹⁵¹, -COZ¹⁵¹, or -POZ¹⁵²Z¹⁵³; X¹⁵¹ represents F, Cl, Br, I, -OR¹⁵¹, or-NR¹⁵²R¹⁵³; Z¹⁵¹, Z¹⁵², and Z¹⁵³ are the same or different, and each represent -NR¹⁵⁴R¹⁵⁵ or -OR¹⁵⁶; and R¹⁵¹, R¹⁵², R¹⁵³, R¹⁵⁴, R¹⁵⁵, and R¹⁵⁶ are the same as or different from each other, and each represent H, ammonium, an alkali metal, or an alkyl group, aryl group, or sulfonyl-containing group optionally containing a fluorine atom.

The "perfluoro organic group" as used herein means an organic group in which all hydrogen atoms bonded to the carbon atoms are replaced with fluorine atoms. The perfluoro organic group may have ether oxygen.

The fluoromonomer represented by the general formula (110) may be a fluoromonomer in which Rf¹¹¹ is a perfluoroalkyl group having 1 to 10 carbon atoms. The perfluoroalkyl group preferably has 1 to 5 carbon atoms.

Examples of the perfluoro organic group in the general formula (110) include a perfluoromethyl group, a perfluoroethyl group, a perfluoropropyl group, a perfluorobutyl group, a perfluoropentyl group, and a perfluorohexyl group.

Examples of the fluoromonomer represented by the general formula (110) also include those represented by the general formula (110) in which Rf¹¹¹ is a perfluoro(alkoxyalkyl) group having 4 to 9 carbon atoms; those in which Rf¹¹¹ is a group represented by the following formula: 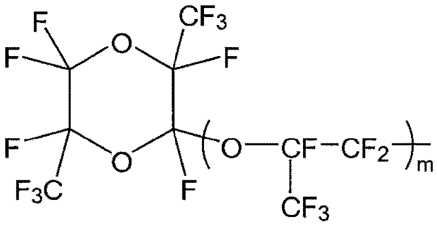 wherein m represents 0 or an integer of 1 to 4; and those in which Rf is a group represented by the following formula:

CF₃CF₂CF₂-(O-CF(CF₃)-CF₂)ₙ-

wherein n is an integer of 1 to 4.

In particular, the fluoromonomer represented by the general formula (110) is preferably
a fluoromonomer represented by the general formula (160): CF₂=CF-ORf¹⁶¹
wherein Rf¹⁶¹ represents a perfluoroalkyl group having 1 to 10 carbon atoms. Rf¹⁶¹ is preferably a perfluoroalkyl group having 1 to 5 carbon atoms.

The fluoroalkyl vinyl ether is preferably at least one selected from the group consisting of fluoromonomers represented by the general formulas (160), (130), and (140).

The fluoromonomer represented by the general formula (160) is preferably at least one selected from the group consisting of perfluoro(methyl vinyl ether), perfluoro(ethyl vinyl ether), and perfluoro(propyl vinyl ether), and is more preferably at least one selected from the group consisting of perfluoro(methyl vinyl ether) and perfluoro(propyl vinyl ether).

The fluoromonomer represented by the general formula (130) is preferably at least one selected from the group consisting of CF₂=CFOCF₂OCF₃, CF₂=CFOCF₂OCF₂CF₃, and CF₂=CFOCF₂OCF₂CF₂OCF₃.

The fluoromonomer represented by the general formula (140) is preferably at least one selected from the group consisting of CF₂=CFOCF₂CF(CF₃)O(CF₂)₃F, CF₂=CFO(CF₂CF(CF₃)O)₂(CF₂)₃F, and CF₂=CFO(CF₂CF(CF₃)O)₂(CF₂)₂F.

The fluoromonomer represented by the general formula (150) is preferably at least one selected from the group consisting of CF₂=CFOCF₂CF₂SO₂F, CF₂=CFOCF₂CF(CF₃)OCF₂CF₂SO₂F, CF₂=CFOCF₂CF(CF₂CF₂SO₂F)OCF₂CF₂SO₂F, and CF₂=CFOCF₂CF(SO₂F)₂.

The fluoromonomer represented by the general formula (100) is preferably a fluoromonomer in which Rf¹⁰¹ is a linear fluoroalkyl group, and more preferably a fluoromonomer in which Rf¹⁰¹ is a linear perfluoroalkyl group. Rf¹⁰¹ preferably has 1 to 6 carbon atoms. Examples of the fluoromonomer represented by the general formula (100) include CH₂=CFCF₃, CH₂=CFCF₂CF₃, CH₂=CFCF₂CF₂CF₃, CH₂=CFCF₂CF₂CF₂H, CH₂=CFCF₂CF₂CF₂CF₃, CHF=CHCF₃ (E isomer), and CHF=CHCF₃ (Z isomer), and, in particular, 2,3,3,3-tetrafluoropropylene represented by CH₂=CFCF₃ is preferable.

The fluoroalkyl ethylene is preferably a fluoroalkyl ethylene represented by the

general formula (170) : CH₂=CH-(CF₂)ₙ-X¹⁷¹

(wherein X¹⁷¹ is H or F; and n is an integer of 3 to 10), and more preferably at least one selected from the group consisting of CH₂=CH-C₄F₉ and CH₂=CH-C₆F₁₃.

An example of the fluoroalkyl allyl ether is a fluoromonomer represented by the

general formula (180): CF₂=CF-CF₂-ORf¹¹¹

wherein Rf¹¹¹ represents a perfluoro organic group.

Rf¹¹¹ in the general formula (180) is the same as Rf¹¹¹ in the general formula (110). Rf¹¹¹ is preferably a perfluoroalkyl group having 1 to 10 carbon atoms or a perfluoroalkoxyalkyl group having 1 to 10 carbon atoms. The fluoroalkyl allyl ether represented by the general formula (180) is preferably at least one selected from the group consisting of CF₂=CF-CF₂-O-CF₃, CF₂=CF-CF₂-O-C₂F₅, CF₂=CF-CF₂-O-C₃F₇, and CF₂=CF-CF₂-O-C₄F₉, more preferably at least one selected from the group consisting of CF₂=CF-CF₂-O-C₂F₅, CF₂=CF-CF₂-O-C₃F₇, and CF₂=CF-CF₂-O-C₄F₉, and even more preferably CF₂=CF-CF₂-O-CF₂CF₂CF₃.

An example of the fluorinated vinyl heterocyclic compound is a fluorinated vinyl heterocyclic compound represented by the general formula (230): 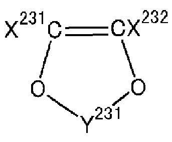 wherein X²³¹ and X²³² are each independently F, Cl, a methoxy group, or a fluorinated methoxy group; and Y²³¹ is represented by the formula Y²³² or the formula Y²³³: 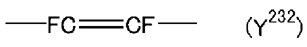 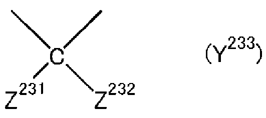 wherein Z²³¹ and Z²³² are each independently F or a fluorinated alkyl group having 1 to 3 carbon atoms.

In the polymerization, the fluoromonomer may be polymerized with a fluorine-free monomer. An example of the fluorine-free monomer is a hydrocarbon monomer that is reactive with the fluoromonomer. Examples of the hydrocarbon monomer include alkenes such as ethylene, propylene, butylene, and isobutylene; alkyl vinyl ethers such as ethyl vinyl ether, propyl vinyl ether, butyl vinyl ether, isobutyl vinyl ether, and cyclohexyl vinyl ether; vinyl esters such as vinyl acetate, vinyl propionate, vinyl n-butyrate, vinyl isobutyrate, vinyl valerate, vinyl pivalate, vinyl caproate, vinyl caprylate, vinyl caprate, vinyl versatate, vinyl laurate, vinyl myristate, vinyl palmitate, vinyl stearate, vinyl benzoate, vinyl para-t-butylbenzoate, vinyl cyclohexanecarboxylate, monochlorovinyl acetate, vinyl adipate, vinyl acrylate, vinyl methacrylate, vinyl crotonate, vinyl sorbate, vinyl cinnamate, vinyl undecylenate, vinyl hydroxyacetate, vinyl hydroxypropionate, vinyl hydroxybutyrate, vinyl hydroxyvalerate, vinyl hydroxyisobutyrate, and vinyl hydroxycyclohexanecarboxylate; alkyl allyl ethers such as ethyl allyl ether, propyl allyl ether, butyl allyl ether, isobutyl allyl ether, and cyclohexyl allyl ether; alkyl allyl esters such as ethyl allyl ester, propyl allyl ester, butyl allyl ester, isobutyl allyl ester, and cyclohexyl allyl ester; and (meth)acrylic ester such as methyl acrylate, methyl methacrylate, ethyl acrylate, ethyl methacrylate, propyl acrylate, propyl methacrylate, butyl acrylate, butyl methacrylate, hexyl methacrylate, cyclohexyl methacrylate, and vinyl methacrylate.

The fluorine-free monomer may also be a functional group-containing hydrocarbon monomer. Examples of the functional group-containing hydrocarbon monomer include hydroxy alkyl vinyl ethers such as hydroxyethyl vinyl ether, hydroxypropyl vinyl ether, hydroxybutyl vinyl ether, hydroxyisobutyl vinyl ether, and hydroxycyclohexyl vinyl ether; fluorine-free monomers having a carboxyl group, such as acrylic acid, methacrylic acid, itaconic acid, succinic acid, succinic anhydride, fumaric acid, fumaric anhydride, crotonic acid, maleic acid, maleic anhydride, and perfluorobutenoic acid; fluorine-free monomers having a sulfo group, such as vinylsulfonic acid; fluorine-free monomers having a glycidyl group, such as glycidyl vinyl ether and glycidyl allyl ether; fluorine-free monomers having an amino group such as aminoalkyl vinyl ether and aminoalkyl allyl ether; fluorine-free monomers having an amide group such as (meth)acrylamide and methylol acrylamide; and fluorine-free monomers having a nitrile group, such as acrylonitrile and methacrylonitrile.

In the polymerization, desired fluoropolymer particles can be obtained by polymerizing one or two or more of the above fluoromonomers.

The amount of the polymer (I) added in the polymerization is preferably 0.0001 to 10% by mass based on the aqueous medium, a more preferable lower limit is 0.001% by mass or more, and a more preferable upper limit is 1% by mass or less. When the amount of the polymer (I) added is within the above range, polymerization of the fluoromonomer in the aqueous medium can progress smoothly. The amount of the polymer (I) added is the total amount of the polymer (I) added to the polymerization.

In the polymerization, the entirety of the polymer (I) may be added at once, or the polymer (I) may be added continuously. Adding the polymer (I) continuously means, for example, adding the polymer (I) not at once, but adding over time and without interruption or adding in portions. In the polymerization, an aqueous solution containing the polymer (I) and water may be prepared, and the aqueous solution may be added.

In the polymerization, it is preferable to initiate the addition of the polymer (I) before the solid content of the fluoropolymer formed in the aqueous medium reaches 0.5% by mass, and add the polymer (I) continuously thereafter as well. The timing to initiate adding the polymer (I) is preferably before the solid content of the fluoropolymer reaches 0.3% by mass, more preferably before it reaches 0.2% by mass, even more preferably before it reaches 0.1% by mass, and particularly preferably at the same time as the beginning of polymerization. The solid content is the content of the fluoropolymer based on the total amount of the aqueous medium and the fluoropolymer.

In the polymerization, the use of at least one of the polymers (I) enables a fluoropolymer to be efficiently produced. Also, two or more of the compounds encompassed within the polymer (I) may be used at the same time, and a compound having a surfactant function other than the polymer (I) may also be used in combination insofar as the compound is volatile or is allowed to remain in a molded body formed from the fluoropolymer or the like.

In the polymerization, a nucleating agent may be used. The amount of the nucleating agent added can be suitably selected according to the type of the nucleating agent. The amount of the nucleating agent added may be 5,000 ppm by mass or less based on the aqueous medium, and is preferably 1,000 ppm by mass or less, more preferably 500 ppm by mass or less, even more preferably 100 ppm by mass or less, particularly preferably 50 ppm by mass or less, and most preferably 10 ppm by mass or less.

In the polymerization, it is preferable to add the nucleating agent to the aqueous medium before the beginning of polymerization or before the solid content of the fluoropolymer formed in the aqueous medium reaches 5.0% by mass. Adding the nucleating agent at the initial stage of the polymerization enables an aqueous dispersion having a small average primary particle size and excellent stability to be obtained.

The amount of the nucleating agent added at the initial stage of the polymerization is preferably 0.001% by mass or more, more preferably 0.01% by mass or more, even more preferably 0.05% by mass or more, and particularly preferably 0.1% by mass or more based on the resulting fluoropolymer. The upper limit of the amount of the nucleating agent added at the initial stage of the polymerization may be, but is not limited to, 2,000% by mass.

The use of the nucleating agent enables a fluoropolymer having a smaller primary particle size to be obtained than that in the case of polymerization in the absence of the above nucleating agent.

Examples of the nucleating agent include dicarboxylic acids, perfluoropolyether (PFPE) acids or salts thereof, and hydrocarbon-containing surfactants. The nucleating agent is preferably free from an aromatic ring, and is preferably an aliphatic compound.

Although the nucleating agent is preferably added before addition of the polymerization initiator or simultaneously with addition of the polymerization initiator, it is also possible to adjust the particle size distribution by adding the nucleating agent during the polymerization.

The amount of the dicarboxylic acid is preferably 1,000 ppm by mass or less, more preferably 500 ppm by mass or less, and even more preferably 100 ppm by mass or less based on the aqueous medium.

The perfluoropolyether (PFPE) acids or salts thereof may have any chain structure in which oxygen atoms in the main chain of the molecule are separated by saturated carbon fluoride groups having 1 to 3 carbon atoms. Two or more carbon fluoride groups may be present in the molecule. Representative structures have repeating units represented by the following formulas:

(-CFCF₃-CF₂-O-)ₙ (VII)

(-CF₂-CF₂-CF₂-O-)ₙ (VIII)

(-CF₂-CF₂-O-)ₙ-(-CF₂-O-)ₘ (IX)

(-CF₂-CFCF₃-O-)n-(-CF₂-O-)ₘ (X)

These structures are described in Kasai, J. Appl. Polymer Sci., 57, 797(1995). As disclosed in this document, the PFPE acid or a salt thereof may have a carboxylic acid group or a salt thereof at one end or both ends. The PFPE acid or a salt thereof may also have a sulfonic acid, a phosphonic acid group, or a salt thereof at one end or both ends. The PFPE acid or a salt thereof may have different groups at each end. Regarding monofunctional PFPE, the other end of the molecule is usually perfluorinated, but may contain a hydrogen or chlorine atom. The PFPE acid or a salt thereof has at least two ether oxygen atoms, preferably at least four ether oxygen atoms, and even more preferably at least six ether oxygen atoms. Preferably, at least one carbon fluoride group separating ether oxygen atoms, more preferably at least two of such carbon fluoride groups, have 2 or 3 carbon atoms. Even more preferably, at least 50% of the carbon fluoride groups separating ether oxygen atoms has 2 or 3 carbon atoms. Also preferably, the PFPE acid or a salt thereof has at least 15 carbon atoms in total, and for example, a preferable minimum value of n or n + m in the repeating unit structure is at least 5. Two or more of the PFPE acids and salts thereof having an acid group at one end or both ends may be used. The PFPE acid or a salt thereof preferably has a number average molecular weight of less than 6,000 g/mol.

The hydrocarbon-containing surfactant is preferably added in an amount of 40 ppm by mass or less, more preferably 30 ppm by mass or less, and even more preferably 20 ppm by mass or less based on the aqueous medium. The amounts in ppm of the oleophilic nucleation sites present in the aqueous medium will be less than the amounts in ppm disclosed herein as being added to the aqueous medium. Thus, the amounts of oleophilic nucleation sites will each be less than the 40 ppm by mass, 30 ppm by mass, and 20 ppm by mass as described above. Since oleophilic nucleation sites are considered to exist as molecules, even a small amount of the hydrocarbon-containing surfactant can generate a large amount of oleophilic nucleation sites. Thus, addition of as little as 1 ppm by mass of the hydrocarbon-containing surfactant to the aqueous medium can provide a beneficial effect. A preferable lower limit is 0.01 mass ppm, and a more preferable lower limit is 0.1 mass ppm.

The hydrocarbon-containing surfactant encompasses nonionic surfactants and cationic surfactants, including siloxane surfactants such as those disclosed in U.S. Patent No. 7,897,682 (Brothers et al.) and U.S. Patent No. 7,977,438 (Brothers et al.).

The hydrocarbon-containing surfactant is preferably a nonionic surfactant (for example, a nonionic hydrocarbon surfactant). In other words, the nucleating agent is preferably a nonionic surfactant. The nonionic surfactant is preferably free from an aromatic moiety.

Examples of the nonionic surfactant include a compound represented by the following general formula (i):

R³-O-A¹-H (i)

wherein R³ is a linear or branched primary or secondary alkyl group having 8 to 18 carbon atoms, and A¹ is a polyoxyalkylene chain.

R³ preferably has 10 to 16, and more preferably 12 to 16 carbon atoms. When R³ has 18 or fewer carbon atoms, the aqueous dispersion tends to have good dispersion stability. Moreover, when R³ has more than 18 carbon atoms, it is difficult to handle the aqueous dispersion due to its high flowing temperature. When R³ has fewer than 8 carbon atoms, the surface tension of the aqueous dispersion becomes high, and thus permeability and wettability likely deteriorate.

The polyoxyalkylene chain of A¹ may be composed of oxyethylene and oxypropylene. The polyoxyalkylene chain is a polyoxyalkylene chain in which the average number of repeating oxyethylene groups is 5 to 20 and the average number of repeating oxypropylene groups is 0 to 2, and is a hydrophilic group. The number of oxyethylene units may have either a broad or narrow monomodal distribution as typically provided, or a broader or bimodal distribution which may be obtained by blending. When the average number of repeating oxypropylene groups is more than 0, the oxyethylene groups and oxypropylene groups in the polyoxyalkylene chain may be arranged in blocks or in a random manner.

In terms of the viscosity and stability of the aqueous dispersion, a polyoxyalkylene chain in which the average number of repeating oxyethylene groups is 7 to 12 and the average number of repeating oxypropylene groups is 0 to 2 is preferable. In particular, A¹ having 0.5 to 1.5 oxypropylene groups on average favorably results in reduced foamability, and is thus preferable.

More preferably, R³ is (R') (R' ')HC-, wherein R' and R" are the same or different linear, branched, or cyclic alkyl groups, and the total amount of carbon atoms is at least 5 and preferably 7 to 17. Preferably, at least one of R' and R" is a branched or cyclic hydrocarbon group.

Specific examples of the nonionic surfactant include C₁₃H₂₇-O-(C₂H₄O)ₙ-H, C₁₂H₂₅-O-(C₂H₄O)ₙ-H, C₁₀H₂₁CH(CH₃)CH₂-O-(C₂H₄O)ₙ-H, C₁₃H₂₇-O-(C₂H₄O)ₙ-(CH(CH₃)CH₂O)-H, C₁₆H₃₃-O-(C₂H₄O)ₙ-H, and HC(C₅H₁₁)(C₇H₁₅)-O-(C₂H₄O)ₙ-H, wherein n is an integer of 1 or more.

Examples of the nonionic surfactant include block copolymers of polyethylene glycol-polypropylene glycol-polyethylene glycol.

Examples of commercially available products of the nonionic surfactant include Genapol X series (manufactured by Clariant) such as Genapol X080 (trade name), NOIGEN TDS series (manufactured by DKS Co., Ltd.) such as NOIGEN TDS-80 (trade name), LEOCOL TD series (manufactured by Lion Corp.) such as LEOCOL TD-90 (trade name), LIONOL(R) TD series (manufactured by Lion Corp.), T-Det A series (manufactured by Harcros Chemicals Inc.) such as T-Det A 138 (trade name), and Tergitol(R) 15 S series (manufactured by The Dow Chemical Company).

The nonionic surfactant is preferably an ethoxylate of 2,6,8-trimethyl-4-nonanol having about 4 to about 18 ethylene oxide units on average, an ethoxylate of 2,6,8-trimethyl-4-nonanol having about 6 to about 12 ethylene oxide units on average, or a mixture thereof. This type of nonionic surfactant is also commercially available, for example, as TERGITOL TMN-6, TERGITOL TMN-10, and TERGITOL TMN-100X (all trade names, manufactured by Dow Chemical Co., Ltd.).

The hydrophobic group of the nonionic surfactant may be any of an alkylphenol group, a linear alkyl group, and a branched alkyl group.

Examples of the polyoxyethylene alkylphenyl ether-based nonionic compound include compounds represented by the general formula (ii):

R⁴-C₆H₄-O-A²-H (ii)

wherein R⁴ is a linear or branched alkyl group having 4 to 12 carbon atoms, and A² is a polyoxyalkylene chain. Specific examples of the polyoxyethylene alkylphenyl ether-based nonionic compound include Triton X-100 (trade name, manufactured by Dow Chemical Company).

The polyoxyalkylene chain of A² may be composed of oxyethylene and oxypropylene. The polyoxyalkylene chain is a polyoxyalkylene chain in which the average number of repeating oxyethylene groups is 5 to 20 and the average number of repeating oxypropylene groups is 0 to 2, and is a hydrophilic group. The number of oxyethylene units may have either a broad or narrow monomodal distribution as typically provided, or a broader or bimodal distribution which may be obtained by blending. When the average number of repeating oxypropylene groups is more than 0, the oxyethylene groups and oxypropylene groups in the polyoxyalkylene chain may be arranged in blocks or in a random manner. In terms of the viscosity and precipitation stability of the composition, a polyoxyalkylene chain in which the average number of repeating oxyethylene groups is 7 to 12 and the average number of repeating oxypropylene groups is 0 to 2 is preferable. In particular, A² having 0.5 to 1.5 oxypropylene groups on average favorably results in reduced foamability, and is thus preferable.

More preferably, R⁷ is a primary or secondary alkyl group, and more preferably (R')(R")HC-, wherein R' and R" are the same or different linear, branched, or cyclic alkyl groups, and the total number of carbon atoms is at least 5, and preferably 7 to 17. Preferably, at least one of R' and R" is a branched or cyclic hydrocarbon group.

Examples of the nonionic surfactant also include polyol compounds. Specific examples include those described in International Publication No. WO 2011/014715.

Typical examples of the polyol compound include compounds having one or more sugar units as polyol unit. The sugar units may be modified so as to contain at least one long chain. Examples of suitable polyol compounds containing at least one long chain moiety include alkyl glycosides, modified alkyl glycosides, sugar esters, and combinations thereof. Examples of sugars include, but are not limited to, monosaccharides, oligosaccharides, and sorbitanes. Examples of monosaccharides include pentoses and hexoses. Typical examples of monosaccharides include ribose, glucose, galactose, mannose, fructose, arabinose, and xylose. Examples of oligosaccharides include oligomers of 2 to 10 identical or different monosaccharides. Examples of oligosaccharides include, but are not limited to, saccharose, maltose, lactose, raffinose, and isomaltose.

Typically, sugars suitable for use as polyol compounds include cyclic compounds containing a 5-membered ring of four carbon atoms and one heteroatom (typically oxygen or sulfur, preferably oxygen atom), or cyclic compounds containing a 6-membered ring of five carbon atoms and one heteroatom as described above, preferably, an oxygen atom. These further contain at least two or at least three hydroxy groups (-OH groups) bonded to carbon ring atoms. Typically, the sugars are modified in terms of that one or more hydrogen atoms of hydroxy groups (and/or hydroxyalkyl groups) bonded to carbon ring atoms are replaced with long chain residues such that an ether or ester bond is created between a long chain residue and a sugar moiety.

The sugar-based polyol may contain a single sugar unit or a plurality of sugar units. The single sugar unit or the plurality of sugar units may be modified with a long chain moiety described above. Specific examples of sugar-based polyol compounds include glycosides, sugar esters, sorbitan esters, and mixtures and combinations thereof.

A preferable type of polyol compound is an alkyl or modified alkyl glucoside. These types of surfactant contain at least one glucose moiety. 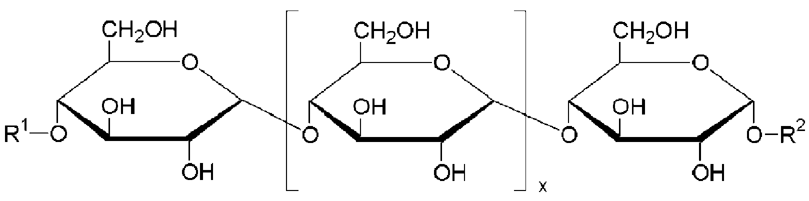 wherein x represents 0, 1, 2, 3, 4, or 5, and R¹ and R² each independently represent H or a long chain unit containing at least 6 carbon atoms, provided that at least one of R¹ and R² is not H. Typical examples of R¹ and R² include aliphatic alcohol residues. Examples of the aliphatic alcohols include hexanol, heptanol, octanol, nonanol, decanol, undecanol, dodecanol (lauryl alcohol), tetradecanol, hexadecanol (cetyl alcohol), heptadecanol, octadecanol (stearyl alcohol), eicosanoic acid, and combinations thereof.

It is understood that the above formula represents specific examples of alkyl poly glucosides showing glucose in its pyranose form but other sugars or the same sugars but in different enantiomeric or diastereomeric forms may also be used.

Alkyl glucosides are available, for example, by acid-catalyzed reactions of glucose, starch, or n-butyl glucoside with aliphatic alcohols which typically yields a mixture of various alkyl glucosides (Alkyl polygylcoside, Rompp, Lexikon Chemie, Version 2.0, Stuttgart/New York, Georg Thieme Verlag, 1999). Examples of the aliphatic alcohols include hexanol, heptanol, octanol, nonanol, decanol, undecanol, dodecanol (lauryl alcohol), tetradecanol, hexadecanol (cetyl alcohol), heptadecanol, octadecanol (stearyl alcohol), eicosanoic acid, and combinations thereof. Alkyl glucosides are also commercially available under the trade name GLUCOPON or DISPONIL from Cognis GmbH, Dusseldorf, Germany.

Examples of other nonionic surfactants include bifunctional block copolymers supplied from BASF as Pluronic(R) R series and tridecyl alcohol alkoxylates supplied from BASF as Iconol(R) TDA series.

In the polymerization, a compound having a functional group capable of reaction by radical polymerization and a hydrophilic group may be used together with the polymer (I). As the compound having a functional group capable of reaction by radical polymerization and a hydrophilic group, the same compound as a modifying monomer (A), which will be described below, can be used.

In the polymerization, in addition to the polymer (I) and other compounds having a surfactant function used as necessary, an additive may also be used to stabilize the compounds. Examples of the additive include a buffer, a pH adjuster, a stabilizing aid, and a dispersion stabilizer.

The stabilizing aid is preferably paraffin wax, fluorine-containing oil, a fluorine-containing solvent, silicone oil, or the like. One stabilizing aid may be used singly, or two or more may be used in combination. The stabilizing aid is more preferably paraffin wax. Paraffin wax may be in the form of a liquid, semi-solid, or solid at room temperature, and is preferably a saturated hydrocarbon having 12 or more carbon atoms. Usually, the melting point of paraffin wax is preferably 40 to 65°C, and more preferably 50 to 65°C.

The amount of the stabilizing aid used is preferably 0.1 to 12% by mass and more preferably 0.1 to 8% by mass based on the mass of the aqueous medium used. Desirably, the stabilizing aid is sufficiently hydrophobic so that the stabilizing aid is completely separated from the aqueous dispersion after polymerization, and does not serve as a contaminating component.

The polymerization is performed by charging a polymerization reactor with an aqueous medium, the polymer (I), a monomer, and optionally a further additive, stirring the contents of the reactor, maintaining the reactor at a predetermined polymerization temperature, and adding a predetermined amount of a polymerization initiator to thereby initiate the polymerization reaction. After the beginning of the polymerization reaction, the components such as the monomer, the polymerization initiator, a chain transfer agent, and the polymer (I) may additionally be added depending on the purpose. The polymer (I) may be added after the polymerization reaction is initiated.

Usually, the polymerization temperature is 5 to 120°C, and the polymerization pressure is 0.05 to 10 MPaG. The polymerization temperature and the polymerization pressure are suitably determined according to the type of monomer used, the molecular weight of the target fluoropolymer, and the reaction rate.

The polymerization initiator may be any polymerization initiator capable of generating radicals within the polymerization temperature range, and known oil-soluble and/or water-soluble polymerization initiators may be used. The polymerization initiator may be combined with a reducing agent, for example, to form a redox agent, which initiates the polymerization. The concentration of the polymerization initiator is suitably determined according to the type of monomer, the molecular weight of the target fluoropolymer, and the reaction rate.

The polymerization initiator may be an oil-soluble radical polymerization initiator or a water-soluble radical polymerization initiator.

The oil-soluble radical polymerization initiator may be a known oil-soluble peroxide, and representative examples include dialkyl peroxycarbonates such as diisopropyl peroxydicarbonate and di-sec-butyl peroxydicarbonate; peroxy esters such as t-butyl peroxyisobutyrate and t-butyl peroxypivalate; and dialkyl peroxides such as di-t-butyl peroxide, as well as di[perfluoro (or fluorochloro) acyl] peroxides such as di(ω)-hydro-dodecafluoroheptanoyl)peroxide, di(ω)-hydro-tetradecafluorooctanoyl)peroxide, di(ω)-hydro-hexadecafluorononanoyl)peroxide, di(perfluorobutyryl)peroxide, di(perfluorovaleryl)peroxide, di(perfluorohexanoyl)peroxide, di(perfluoroheptanoyl)peroxide, di(perfluorooctanoyl)peroxide, di(perfluorononanoyl)peroxide, di(ω)-chloro-hexafluorobutyryl)peroxide, di(ω)-chloro-decafluorohexanoyl)peroxide, di(ω)-chloro-tetradecafluorooctanoyl)peroxide, ω)-hydro-dodecafluoroheptanoyl-ω-hydrohexadecafluorononanoyl-peroxide, ω-chloro-hexafluorobutyryl-ω-chloro-decafluorohexanoyl-peroxide, ω-hydrododecafluoroheptanoyl-perfluorobutyryl-peroxide, di(dichloropentafluorobutanoyl)peroxide, di(trichlorooctafluorohexanoyl)peroxide, di(tetrachloroundecafluorooctanoyl)peroxide, di(pentachlorotetradecafluorodecanoyl)peroxide, and di(undecachlorodotoriacontafluorodocosanoyl)peroxide.

The water-soluble radical polymerization initiator may be a known water-soluble peroxide, and examples thereof include ammonium salts, potassium salts, and sodium salts of persulphuric acid, perboric acid, perchloric acid, perphosphoric acid, and percarbonic acid, organic peroxides of disuccinic acid peroxide and diglutaric acid peroxide, t-butyl permaleate, and t-butyl hydroperoxide. A reducing agent such as a sulfite may be contained together, and the amount thereof may be 0.1 to 20 times the amount of the peroxide.

For example, in a case where the polymerization is performed at a low temperature of 30°C or lower, the polymerization initiator used is preferably a redox initiator obtained by combining an oxidizing agent and a reducing agent. Examples of the oxidizing agent include persulfates, organic peroxides, potassium permanganate, manganese triacetate, and ammonium cerium nitrate. Examples of the reducing agent include sulfites, bisulfites, bromates, diimines, and oxalic acid. Examples of persulfate include ammonium persulfate and potassium persulfate. Examples of sulfites include sodium sulfite and ammonium sulfite. In order to increase the decomposition rate of the initiator, the combination of the redox initiator also preferably contains a copper salt or an iron salt. An example of the copper salt is copper(II) sulfate, and an example of the iron salt is iron(II) sulfate.

Examples of the redox initiator include potassium permanganate/oxalic acid, ammonium persulfate/bisulfite/iron sulfate, manganese triacetate/oxalic acid, ammonium cerium nitrate/oxalic acid, and bromate/bisulfite, and potassium permanganate/oxalic acid is preferable. In the case of using a redox initiator, either an oxidizing agent or a reducing agent may be charged into a polymerization tank in advance, followed by adding the other continuously or intermittently thereto to initiate the polymerization. For example, in the case of potassium permanganate/oxalic acid, preferably oxalic acid is charged into a polymerization tank and potassium permanganate is continuously added thereto.

The amount of the polymerization initiator added is not limited, and the polymerization initiator is added in an amount that does not significantly decrease the polymerization rate (e.g., a concentration of several ppm in water) or more at once in the initial stage of polymerization, or added successively or continuously. The upper limit is within a range where the reaction temperature is allowed to increase while the polymerization reaction heat is removed through the device surface, and the upper limit is more preferably within a range where the polymerization reaction heat can be removed through the device surface.

The aqueous medium is a reaction medium in which the polymerization is performed, and means a liquid containing water. The aqueous medium is not limited as long as it contains water, and may be a medium that contains water as well as a fluorine-free organic solvent such as alcohol, ether, or ketone and/or a fluorine-containing organic solvent having a boiling point of 40°C or lower.

In the polymerization, known chain transfer agents, radical scavengers, and decomposers may be added to regulate the polymerization rate and the molecular weight depending on the purpose.

Examples of the chain transfer agent include esters such as dimethyl malonate, diethyl malonate, methyl acetate, ethyl acetate, butyl acetate, and dimethyl succinate, as well as isopentane, methane, ethane, propane, methanol, isopropanol, acetone, various mercaptans, various halogenated hydrocarbons such as carbon tetrachloride, and cyclohexane.

The chain transfer agent may be a bromine compound or an iodine compound. An example of a polymerization method involving a bromine compound or an iodine compound is a method in which the fluoromonomer is polymerized in an aqueous medium substantially in the absence of oxygen and in the presence of a bromine compound or an iodine compound (iodine transfer polymerization). Representative examples of the bromine compound or the iodine compound to be used include compounds represented by the following general formula:

R^{a}IₓBr_{y}

wherein x and y are each independently an integer of 0 to 2 and satisfy 1 ≤ x+y ≤ 2, and R^{a} is a saturated or unsaturated fluorohydrocarbon group or chlorofluorohydrocarbon group having 1 to 16 carbon atoms, or a hydrocarbon group having 1 to 3 carbon atoms, and may contain an oxygen atom. By using a bromine compound or an iodine compound, iodine or bromine is introduced into the polymer, and serves as a crosslinking point.

Examples of the bromine compound or the iodine compound include 1,3-diiodoperfluoropropane, 2-iodoperfluoropropane, 1,3-diiodo-2-chloroperfluoropropane, 1,4-diiodoperfluorobutane, 1,5-diiodo-2,4-dichloroperfluoropentane, 1,6-diiodoperfluorohexane, 1,8-diiodoperfluorooctane, 1,12-diiodoperfluorododecane, 1,16-diiodoperfluorohexadecane, diiodomethane, 1,2-diiodoethane, 1,3-diiodo-n-propane, CF₂Br₂, BrCF₂CF₂Br, CF₃CFBrCF₂Br, CFClBr₂, BrCF₂CFClBr, CFBrClCFClBr, BrCF₂CF₂CF₂Br, BrCF₂CFBrOCF₃, 1-bromo-2-iodoperfluoroethane, 1-bromo-3-iodoperfluoropropane, 1-bromo-4-iodoperfluorobutane, 2-bromo-3-iodoperfluorobutane, 3-bromo-4-iodoperfluorobutene-1,2-bromo-4-iodoperfluorobutene-1, and a monoiodomonobromo-substituted product, a diiodomonobromo-substituted product, and a (2-iodoethyl) and (2-bromoethyl)-substituted product of benzene, and one of these compounds may be used singly, or these compounds can also be used as a combination.

Among these, 1,4-diiodoperfluorobutane, 1,6-diiodoperfluorohexane, and 2-iodoperfluoropropane are preferably used from the viewpoint of polymerization reactivity, crosslinkability, availability, and the like.

The amount of the chain transfer agent used is usually 1 to 50,000 ppm by mass, preferably 1 to 20,000 ppm by mass based on the total amount of the fluoromonomer fed.

The chain transfer agent may be added to the reaction vessel at once before the beginning of the polymerization, may be added at once after the beginning of the polymerization, may be added in multiple portions during the polymerization, or may be added continuously during the polymerization.

As a polymerization initiator, persulfate (such as ammonium persulfate) and organic peroxide such as disuccinic acid peroxide or diglutaric acid peroxide can be used alone or in the form of a mixture thereof. Further, the polymerization initiator may be used together with a reducing agent such as sodium sulfite so as to form a redox system. Moreover, the concentration of radicals in the system can be also regulated by adding a radical scavenger such as hydroquinone or catechol or adding a peroxide decomposer such as ammonium sulfate during polymerization.

In the polymerization, the fluoropolymer may be obtained by polymerizing the fluoromonomer in the aqueous medium in the presence of the polymer (I) to produce an aqueous dispersion of fluoropolymer particles, and by seed-polymerizing the fluoromonomer to the fluoropolymer particles in the aqueous dispersion of the fluoropolymer particles.

Preferably, in the polymerization, the polymerization of the fluoromonomer is carried out substantially in the absence of a fluorine-containing surfactant (excluding the compound having a functional group capable of reaction by radical polymerization and a hydrophilic group). While fluorine-containing surfactants are conventionally used in the polymerization of fluoromonomers in an aqueous medium, the production method of the present disclosure enables a fluoropolymer to be obtained even without using the fluorine-containing surfactants.

The expression "substantially in the absence of a fluorine-containing surfactant" as used herein means that the amount of the fluorine-containing surfactant is 10 mass ppm or less based on the aqueous medium. The amount of the fluorine-containing surfactant is preferably 1 mass ppm or less, more preferably 100 mass ppb or less, even more preferably 10 mass ppb or less, and yet more preferably 1 mass ppb or less based on the aqueous medium.

Examples of the fluorine-containing surfactant include anionic fluorine-containing surfactants. The anionic fluorine-containing surfactant may be, for example, a fluorine atom-containing surfactant having 20 or less carbon atoms in total in the portion excluding the anionic group.

The fluorine-containing surfactant may also be a fluorine-containing surfactant in which the molecular weight of the anionic moiety is 1000 or less, preferably 800 or less.

The "anionic moiety" means a portion of the fluorine-containing surfactant excluding the cation. For example, in the case of F(CF₂)ₙ₁COOM represented by the formula (I) described below, the anionic moiety is the "F(CF₂)ₙ₁COO" portion.

Examples of the fluorine-containing surfactant also include fluorine-containing surfactants having a LogPOW of 3.5 or less. The LogPOW of the fluorine-containing surfactant is preferably 3.4 or less. The LogPOW is a partition coefficient between 1-octanol and water, and is represented by LogP, wherein P represents a ratio of the fluorine-containing surfactant concentration in octanol/the fluorine-containing surfactant concentration in water attained when an octanol/water (1:1) mixture containing the fluorine-containing surfactant is phase-separated.

The LogPOW is calculated by performing HPLC on standard substances (heptanoic acid, octanoic acid, nonanoic acid, and decanoic acid) having a known octanol/water partition coefficient under conditions having column: TOSOH ODS-120T column (ϕ4.6 mm × 250 mm, manufactured by Tosoh Corporation), eluent: acetonitrile/0.6% by mass HClO₄ solution = 1/1 (vol/vol%), flow rate: 1.0 ml/min, sample volume: 300 µL, column temperature: 40°C, detection light: UV210 nm to construct a calibration curve concerning each elution time and known octanol/water partition coefficient, and determining the HPLC elution time of a sample liquid based on the calibration curve.

Specific examples of the fluorine-containing surfactant include those described in U.S. Patent Application Publication No. 2007/0015864, U.S. Patent Application Publication No. 2007/0015865, U.S. Patent Application Publication No. 2007/0015866, U.S. Patent Application Publication No. 2007/0276103, U.S. Patent Application Publication No. 2007/0117914, U.S. Patent Application Publication No. 2007/142541, U.S. Patent Application Publication No. 2008/0015319, U.S. Patent No. 3250808, U.S. Patent No. 3271341, Japanese Patent Laid-Open No. 2003-119204, International Publication No. WO 2005/042593, International Publication No. WO 2008/060461, International Publication No. WO 2007/046377, Japanese Patent Laid-Open No. 2007-119526, International Publication No. WO 2007/046482, International Publication No. WO 2007/046345, U.S. Patent Application Publication No. 2014/0228531, International Publication No. WO 2013/189824, and International Publication No. WO 2013/189826.

The anionic fluorine-containing surfactant may be a compound represented by the following general formula (N⁰):

Xⁿ⁰-Rfⁿ⁰-Y⁰ (N⁰)

wherein Xⁿ⁰ is H, Cl, or F; Rfⁿ⁰ is a linear, branched, or cyclic alkylene group having 3 to 20 carbon atoms in which some or all of H are replaced by F, the alkylene group optionally containing one or more ether bonds in which some of H are optionally replaced by Cl; and Y° is an anionic group.

The anionic group Y° may be -COOM, -SO₂M, or -SO₃M, and may be -COOM or -SO₃M.

M is H, a metal atom, NR⁷₄, optionally substituted imidazolium, optionally substituted pyridinium, or optionally substituted phosphonium, and R⁷ is H or an organic group.

Examples of the metal atom include alkali metals (Group 1) and alkaline earth metals (Group 2), such as Na, K, or Li.

R⁷ may be H or a C₁₋₁₀ organic group, may be H or a C₁₋₄ organic group, and may be H or a C₁₋₄ alkyl group.

M may be H, a metal atom, or NR⁷₄, may be H, an alkali metal (Group 1), an alkaline earth metal (Group 2), or NR⁷₄, and may be H, Na, K, Li, or NH₄.

In the Rfⁿ⁰, 50% or more of H atoms may be replaced with fluorine atoms.

Examples of the compound represented by the general formula (N⁰) may be a compound represented by
the following general formula (N¹):

Xⁿ⁰-(CF₂)ₘ₁-Y⁰ (N¹)

(wherein Xⁿ⁰ is H, Cl, or F, m1 is an integer of 3 to 15, and Y° is as defined above); a compound represented by the following general formula (N²):

Rfⁿ¹-O-(CF(CF₃)CF₂O)ₘ₂CFXⁿ¹-Y⁰ (N²)

(wherein Rfⁿ¹ is a perfluoroalkyl group having 1 to 5 carbon atoms, m2 is an integer of 0 to 3, Xⁿ¹ is F or CF₃, and Y⁰ is as defined above); a compound represented by the following general formula (N³) :

Rfⁿ²(CH₂)ₘ₃-(Rfⁿ³)_{q}-Y⁰ (N³)

wherein Rfⁿ² is a partially or fully fluorinated alkyl group having 1 to 13 carbon atoms and optionally containing an ether bond; m3 is an integer of 1 to 3; Rfⁿ³ is a linear or branched perfluoroalkylene group having 1 to 3 carbon atoms; q is 0 or 1; and Y° is as defined above; a compound represented by the following general formula (N⁴):

Rfⁿ⁴-O-(CYⁿ¹Yⁿ²)ₚCF₂-Y⁰ (N⁴)

wherein Rfⁿ⁴ is a linear or branched partially or fully fluorinated alkyl group having 1 to 12 carbon atoms and optionally containing an ether bond and/or a chlorine atom; and Yⁿ¹ and Yⁿ² are the same or different and are each H or F; p is 0 or 1; and Y⁰ is as defined above; and
a compound represented by the general formula (N⁵): 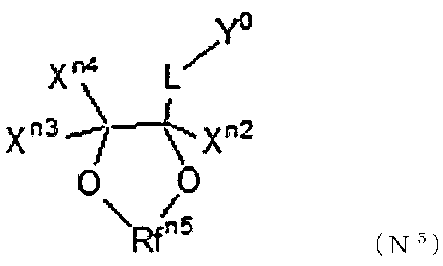 (wherein Xⁿ², Xⁿ³, and Xⁿ⁴ may be the same or different and are each independently H, F, or a linear or branched, partially or fully fluorinated alkyl group having 1 to 6 carbon atoms and optionally containing an ether bond, Rfⁿ⁵ is a linear or branched, partially or fully fluorinated alkylene group having 1 to 3 carbon atoms and optionally containing an ether bond, L is a linking group, and Y° is as defined above, provided that the total number of carbon atoms of Xⁿ², Xⁿ³, Xⁿ⁴, and Rfⁿ⁵ is 18 or less).

More specific examples of the compound represented by the above general formula (N⁰) include a perfluorocarboxylic acid (I) represented by the following general formula (I), an ω-H perfluorocarboxylic acid (II) represented by the following general formula (II), a perfluoroethercarboxylic acid (III) represented by the following general formula (III), a perfluoroalkylalkylenecarboxylic acid (IV) represented by the following general formula (IV), a perfluoroalkoxyfluorocarboxylic acid (V) represented by the following general formula (V), a perfluoroalkylsulfonic acid (VI) represented by the following general formula (VI), an ω-H perfluorosulfonic acid (VII) represented by the following general formula (VII), a perfluoroalkylalkylene sulfonic acid (VIII) represented by the following general formula (VIII), an alkylalkylene carboxylic acid (IX) represented by the following general formula (IX), a fluorocarboxylic acid (X) represented by the following general formula (X), an alkoxyfluorosulfonic acid (XI) represented by the following general formula (XI), a compound (XII) represented by the following general formula (XII), and a compound (XIII) represented by the following general formula (XIII).

The perfluorocarboxylic acid (I) is represented by the following general formula (I):

F(CF₂)ₙ₁COOM (I)

wherein n1 is an integer of 3 to 14, M is H, a metal atom, NR⁷₄, optionally substituted imidazolium, optionally substituted pyridinium, or optionally substituted phosphonium, and R⁷ is H or an organic group.

The ω-H perfluorocarboxylic acid (II) is represented by the following general formula (II):

H(CF₂)ₙ₂COOM (II)

wherein n2 is an integer of 4 to 15, and M is as defined above.

The perfluoroethercarboxylic acid (III) is represented by the following general formula (III):

Rf¹-O-(CF(CF₃)CF₂O)ₙ₃CF(CF₃)COOM (III)

wherein Rf¹ is a perfluoroalkyl group having 1 to 5 carbon atoms, n3 is an integer of 0 to 3, and M is as defined above.

The perfluoroalkylalkylenecarboxylic acid (IV) is represented by the following general formula (IV):

Rf²(CH₂)ₙ₄Rf³COOM (IV)

wherein Rf² is a perfluoroalkyl group having 1 to 5 carbon atoms, Rf³ is a linear or branched perfluoroalkylene group having 1 to 3 carbon atoms, n4 is an integer of 1 to 3, and M is as defined above.

The alkoxyfluorocarboxylic acid (V) is represented by the following general formula (V):

Rf⁴-O-CY¹Y²CF₂-COOM (V)

wherein Rf⁴ is a linear or branched, partially or fully fluorinated alkyl group having 1 to 12 carbon atoms and optionally containing an ether bond and/or a chlorine atom; Y¹ and Y² are the same or different and are each independently H or F; and M is as defined above.

The perfluoroalkylsulfonic acid (VI) is represented by the following general formula (VI):

F(CF₂)ₙ₅SO₃M (VI)

wherein n5 is an integer of 3 to 14, and M is as defined above.

The ω-H perfluorosulfonic acid (VII) is represented by the following general formula (VII):

H(CF₂)ₙ₆SO₃M (VII)

wherein n6 is an integer of 4 to 14, and M is as defined above.

The perfluoroalkylalkylenesulfonic acid (VIII) is represented by the following general formula (VIII):

Rf⁵(CH₂)ₙ₇SO₃M (VIII)

wherein Rf⁵ is a perfluoroalkyl group having 1 to 13 carbon atoms, n7 is an integer of 1 to 3, and M is as defined above.

The alkylalkylenecarboxylic acid (IX) is represented by the following general formula (IX):

Rf⁶(CH₂)ₙ₈COOM (IX)

wherein Rf⁶ is a linear or branched, partially or fully fluorinated alkyl group having 1 to 13 carbon atoms and optionally containing an ether bond, n8 is an integer of 1 to 3, and M is as defined above.

The fluorocarboxylic acid (X) is represented by the following general formula (X):

Rf⁷-O-Rf⁸-O-CF₂-COOM (X)

wherein Rf⁷ is a linear or branched, partially or fully fluorinated alkyl group having 1 to 6 carbon atoms and optionally containing an ether bond and/or a chlorine atom; Rf⁸ is a linear or branched, partially or fully fluorinated alkyl group having 1 to 6 carbon atoms; and M is as defined above.

The alkoxyfluorosulfonic acid (XI) is represented by the following general formula (XI):

Rf⁹-O-CY¹Y²CF₂-SO₃M (XI)

wherein Rf⁹ is a linear or branched, partially or fully fluorinated alkyl group having 1 to 12 carbon atoms and optionally containing an ether bond and optionally containing chlorine; Y¹ and Y² are the same or different and are each independently H or F; and M is as defined above.

The compound (XII) is represented by the following general formula (XII): 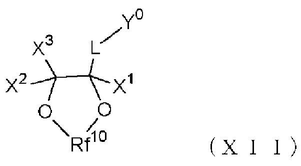 wherein X¹, X², and X³ may be the same or different and are each independently H, F, or a linear or branched, partially or fully fluorinated alkyl group having 1 to 6 carbon atoms and optionally containing an ether bond; Rf¹⁰ is a perfluoroalkylene group having 1 to 3 carbon atoms; L is a linking group; and Y° is an anionic group.

Y° may be -COOM, -SO₂M, or -SO₃M, and may be -SO₃M or COOM, wherein M is as defined above.

Examples of L include a single bond, and a partially or fully fluorinated alkylene group having 1 to 10 carbon atoms and optionally containing an ether bond.

The compound (XIII) is represented by the following general formula (XIII):

Rf¹¹-O-(CF₂CF(CF₃)O)ₙ₉(CF₂O)ₙ₁₀CF₂COOM (XIII)

wherein Rf¹¹ is a fluoroalkyl group having 1 to 5 carbon atoms containing chlorine, n9 is an integer of 0 to 3, n10 is an integer of 0 to 3, and M is as defined above. Examples of the compound (XIII) include CF₂ClO(CF₂CF(CF₃)O)ₙ₉(CF₂O)ₙ₁₀CF₂COONH₄ (a mixture having an average molecular weight of 750, n9 and n10 in the formula are defined above).

As described above, examples of the anionic fluorine-containing surfactant include a carboxylic acid-based surfactant and a sulfonic acid-based surfactant.

The fluorine-containing surfactant may be a single fluorine-containing surfactant, or may be a mixture containing two or more fluorine-containing surfactants.

Examples of the fluorine-containing surfactant include compounds represented by the following formulas. The fluorine-containing surfactant may be a mixture of these compounds. In one embodiment of the polymerization, a fluoromonomer is polymerized substantially in the absence of compounds represented by the following formulas:

F(CF₂)₇COOM,

F(CF₂)₅COOM,

H(CF₂)₆COOM,

H(CF₂)₇COOM,

CF₃O(CF₂)₃OCHFCF₂COOM,

C₃F₇OCF(CF₃)CF₂OCF(CF₃)COOM,

CF₃CF₂CF₂OCF(CF₃)COOM,

CF₃CF₂OCF₂CF₂OCF₂COOM,

C₂F₅OCF(CF₃)CF₂OCF(CF₃)COOM,

CF₃OCF(CF₃)CF₂OCF(CF₃)COOM,

CF₂ClCF₂CF₂OCF(CF₃)CF₂OCF₂COOM,

CF₂ClCF₂CF₂OCF₂CF(CF₃)OCF₂COOM,

CF₂ClCF(CF₃)OCF(CF₃)CF₂OCF₂COOM, and

CF₂ClCF(CF₃)OCF₂CF(CF₃)OCF₂COOM,

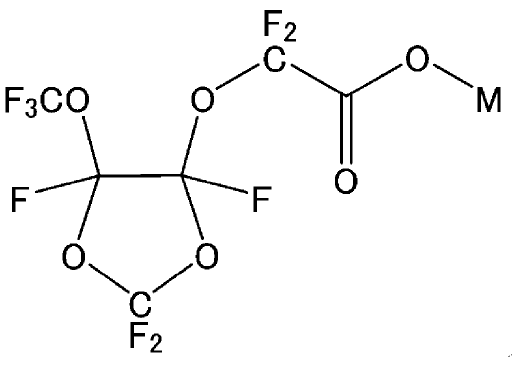

wherein M is H, a metal atom, NR⁷₄, optionally substituted imidazolium, optionally substituted pyridinium, or optionally substituted phosphonium, wherein R⁷ is H or an organic group.

By the polymerization, an aqueous dispersion containing the fluoropolymer can be obtained as a fluoropolymer raw material dispersion. The concentration of the fluoropolymer is usually 8 to 50% by mass of the aqueous dispersion obtained by performing the polymerization. In the aqueous dispersion, the lower limit of the concentration of the fluoropolymer is preferably 10% by mass and more preferably 15% by mass, and the upper limit is preferably 40% by mass and more preferably 35% by mass.

### <Fluoropolymer>

Examples of the fluoropolymer contained in the fluoropolymer raw material and the fluoropolymer composition include a TFE polymer in which TFE is the monomer having the highest mole fraction (hereinafter, "the most abundant monomer") among the monomers in the polymer, a VDF polymer in which VDF is the most abundant monomer, and a CTFE polymer in which CTFE is the most abundant monomer.

The fluoropolymer preferably has an ion exchange rate (IXR) of higher than 53. The preferable fluoropolymer has either no ionic groups at all or a limited number of ionic groups resulting in an ion exchange rate of higher than about 100. The preferable ion exchange rate of the fluoropolymer is preferably 1,000 or more, more preferably 2,000 or more, and even more preferably 5,000 or more.

The TFE polymer may suitably be a TFE homopolymer, or may be a copolymer containing (1) TFE, (2) one or two or more fluorine-containing monomers each of which is different from TFE and has 2 to 8 carbon atoms, in particular VDF, HFP, or CTFE, and (3) a further monomer. Examples of the further monomer (3) include fluoro(alkyl vinyl ethers) having an alkyl group having 1 to 5 carbon atoms, particularly 1 to 3 carbon atoms; fluorodioxoles; perfluoroalkyl ethylenes; and ω-hydroperfluoroolefins.

The TFE polymer may also be a copolymer of TFE and one or two or more fluorine-free monomers. Examples of the fluorine-free monomers include alkenes such as ethylene and propylene; vinyl esters; and vinyl ethers. The TFE polymer may also be a copolymer of TFE, one or two or more fluorine-containing monomers having 2 to 8 carbon atoms, and one or two or more fluorine-free monomers.

The VDF polymer may suitably be a VDF homopolymer (PVDF), or may be a copolymer containing (1) VDF, (2) one or two or more fluoroolefins each of which is different from VDF and has 2 to 8 carbon atoms, in particular TFE, HFP, or CTFE, and (3) a perfluoro(alkyl vinyl ether) having an alkyl group having 1 to 5 carbon atoms, particularly 1 to 3 carbon atoms, or the like.

The CTFE polymer may suitably be a CTFE homopolymer, or may be a copolymer containing (1) CTFE, (2) one or two or more fluoroolefins each of which is different from CTFE and has 2 to 8 carbon atoms, in particular TFE or HFP, and (3) a perfluoro(alkyl vinyl ether) having an alkyl group having 1 to 5 carbon atoms, particularly 1 to 3 carbon atoms.

The CTFE polymer may also be a copolymer of CTFE and one or two or more fluorine-free monomers, and examples of the fluorine-free monomers include alkenes such as ethylene and propylene; vinyl esters; and vinyl ethers.

The fluoropolymer may be vitreous, plastic, or elastomeric. The fluoropolymer is amorphous or partially crystallized, and may be subjected to compression firing, melt fabrication, or non-melt fabrication.

The production method of the present disclosure can suitably produce, for example, (I) non melt- fabricable fluororesins, including tetrafluoroethylene polymers (TFE polymers (PTFE)); and (II) melt-fabricable fluororesins, including ethylene/TFE copolymers (ETFE), TFE/HFP copolymers (FEP), TFE/perfluoro(alkyl vinyl ether) copolymers (e.g., PFA and MFA), TFE/perfluoroallyl ether copolymers, TFE/VDF copolymers, and electrolyte polymer precursors.

The fluoropolymer is preferably a fluororesin, more preferably a fluororesin having a fluorine substitution percentage, calculated by the following formula, of 50% or higher, even more preferably a fluororesin having the fluorine substitution percentage of higher than 50%, yet more preferably a fluororesin having the fluorine substitution percentage of 55% or higher, yet more preferably a fluororesin having the fluorine substitution percentage of 60% or higher, yet more preferably a fluororesin having the fluorine substitution percentage of 75% or higher, particularly preferably a fluororesin having the fluorine substitution percentage of 80% or higher, and most preferably a fluororesin having the fluorine substitution percentage of 90 to 100%, i.e., a perfluororesin. (Formula) Fluorine substitution percentage (%) = (number of fluorine atoms bonded to carbon atoms constituting fluoropolymer) / ((number of hydrogen atoms bonded to carbon atoms constituting fluoropolymer) + (number of fluorine atoms and chlorine atoms bonded to carbon atoms constituting fluoropolymer)) × 100

The perfluororesin is more preferably a fluororesin having the fluorine substitution percentage of 95 to 100%, even more preferably PTFE, FEP, or PFA, and particularly preferably PTFE.

The fluoropolymer may have a core-shell structure. An example of the fluoropolymer having a core-shell structure is modified PTFE including a core of high-molecular-weight PTFE and a shell of a lower-molecular-weight PTFE or a modified PTFE in the particle. Examples of such modified PTFE include PTFE described in Japanese National Publication of International Patent Application No. 2005/527652.

The core-shell structure may have the following structures.
Core: TFE homopolymer Shell: TFE homopolymer
Core: modified PTFE Shell: TFE homopolymer
Core: modified PTFE Shell: modified PTFE
Core: TFE homopolymer Shell: modified PTFE
Core: low-molecular-weight PTFE Shell: high-molecular-weight PTFE
Core: high-molecular-weight PTFE Shell: low-molecular-weight PTFE

In the fluoropolymer having the core-shell structure, the lower limit of the proportion of the core is preferably 0.5% by mass, more preferably 1.0% by mass, even more preferably 3.0% by mass, particularly preferably 5.0% by mass, and most preferably 10.0% by mass. The upper limit of the proportion of the core is preferably 99.5% by mass, more preferably 99.0% by mass, even more preferably 98.0% by mass, yet more preferably 97.0% by mass, particularly preferably 95.0% by mass, and most preferably 90.0% by mass.

In the fluoropolymer having the core-shell structure, the lower limit of the proportion of the shell is preferably 0.5% by mass, more preferably 1.0% by mass, even more preferably 3.0% by mass, particularly preferably 5.0% by mass, and most preferably 10.0% by mass. The upper limit of the proportion of the shell is preferably 99.5% by mass, more preferably 99.0% by mass, even more preferably 98.0% by mass, yet more preferably 97.0% by mass, particularly preferably 95.0% by mass, and most preferably 90.0% by mass.

In the fluoropolymer having the core-shell structure, the core or the shell may be composed of two or more layers. For example, the fluoropolymer may have a trilayer structure including a core center portion of a modified PTFE, a core outer layer portion of a TFE homopolymer, and a shell of a modified PTFE.

Examples of the fluoropolymer having a core-shell structure also include those in which a single particle of the fluoropolymer has a plurality of cores.
(I) The non melt-processible fluororesins and (II) the melt-fabricable fluororesins, suitably produced by the production method of the present disclosure are preferably produced in the following manner.

### (I) Non melt-processible fluororesins

In the production method of the present disclosure, polymerization of TFE is usually performed at a polymerization temperature of 10 to 150°C and a polymerization pressure of 0.05 to 5 MPaG. For example, the polymerization temperature is more preferably 30°C or higher, and even more preferably 50°C or higher. Further, the polymerization temperature is more preferably 120°C or lower, and even more preferably 100°C or lower. Further, the polymerization pressure is more preferably 0.3 MPaG or higher, even more preferably 0.5 MPaG or higher, and more preferably 5.0 MPaG or lower, even more preferably 3.0 MPaG or lower. In particular, from the viewpoint of improving the yield of fluoropolymer, the polymerization pressure is preferably 1.0 MPaG or more, more preferably 1.2 MPaG or more, even more preferably 1.5 MPaG or more, and even more preferably 2.0 MPaG or more.

In an embodiment, the polymerization reaction is initiated by charging pure water into a pressure-resistant reaction vessel equipped with a stirrer, deoxidizing the system, charging TFE, increasing the temperature to a predetermined level, and adding a polymerization initiator. When the pressure decreases as the reaction progresses, additional TFE is fed continuously or intermittently to maintain the initial pressure. When the amount of TFE fed reaches a predetermined level, feeding is stopped, and then TFE in the reaction vessel is purged and the temperature is returned to room temperature, whereby the reaction is completed. Additional TFE may be added continuously or intermittently to prevent pressure drop.

In production of the TFE polymer (PTFE), various known modifying monomers may be used in combination. TFE polymer as used herein is a concept that encompasses not only a TFE homopolymer but also a non melt-processible copolymer of TFE and a modifying monomer (hereinafter, referred to as a "modified PTFE").

The modifying monomer is not limited as long as it can be copolymerized with TFE, and examples thereof include fluoromonomers and non-fluoromonomers. Further, one or a plurality of kinds of the modifying monomers may be used.

Examples of the non-fluoromonomer include, but not limited to, a monomer represented by the general formula:

CH₂=CR^{Q1}-LR^{Q2}

wherein R^{Q1} represents a hydrogen atom or an alkyl group; L represents a single bond, -CO-O-*, -O-CO-*, or -O-; * represents the binding position with R^{Q2}; and R^{Q2} represents a hydrogen atom, an alkyl group, or a nitrile group.

Examples of the non-fluoromonomer include methyl acrylate, methyl methacrylate, ethyl acrylate, ethyl methacrylate, propyl acrylate, propyl methacrylate butyl acrylate, butyl methacrylate, hexyl methacrylate, cyclohexyl methacrylate, vinyl methacrylate, vinyl acetate, acrylic acid, methacrylic acid, acrylonitrile, methacrylonitrile, ethyl vinyl ether, and cyclohexyl vinyl ether. Of these, the non-fluoromonomer is preferably butyl methacrylate, vinyl acetate, or acrylic acid.

Examples of the fluoromonomer include perfluoroolefins such as hexafluoropropylene (HFP); hydrogen-containing fluoroolefins such as trifluoroethylene and vinylidene fluoride (VDF); perhaloolefins such as chlorotrifluoroethylene; perfluorovinyl ethers; (perfluoroalkyl)ethylenes; and perfluoroallyl ethers.

Examples of the perfluorovinyl ether include, but are not limited to, a perfluoro unsaturated compound represented by the general formula (A):

CF₂=CF-ORf (A)

wherein Rf represents a perfluoroorganic group. The "perfluoroorganic group" as used herein means an organic group in which all hydrogen atoms bonded to the carbon atoms are replaced by fluorine atoms. The perfluoro organic group may have ether oxygen.

Examples of the perfluorovinyl ether include perfluoro(alkyl vinyl ether) (PAVE) in which Rf is a perfluoroalkyl group having 1 to 10 carbon atoms in the general formula (A). The perfluoroalkyl group preferably has 1 to 5 carbon atoms.

Examples of the perfluoroalkyl group in PAVE include a perfluoromethyl group, a perfluoroethyl group, a perfluoropropyl group, a perfluorobutyl group, a perfluoropentyl group, and a perfluorohexyl group.

Examples of the perfluorovinyl ether further include those represented by the general formula (A) in which Rf is a perfluoro(alkoxyalkyl) group having 4 to 9 carbon atoms; those in which Rf is a group represented by the following formula: 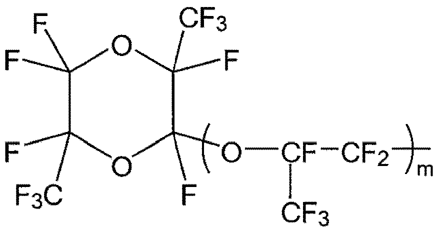 wherein m represents 0 or an integer of 1 to 4; and those in which Rf is a group represented by the following formula:

CF₃CF₂CF₂-(O-CF(CF₃)-CF₂)ₙ-

wherein n is an integer of 1 to 4.

Examples of hydrogen-containing fluoroolefins include CH₂=CF₂, CFH=CH₂, CFH=CF₂, CH₂=CFCF₃, CH₂=CHCF₃, CHF=CHCF₃ (E-form), and CHF=CHCF₃ (Z-form).

Examples of the (perfluoroalkyl)ethylene (PFAE) include, but are not limited to, (perfluorobutyl) ethylene (PFBE), and (perfluorohexyl) ethylene.

Examples of perfluoroallyl ether include fluoromonomers represented by the general formula:

CF₂=CF-CF₂-ORf

wherein Rf represents a perfluoro organic group.

Rf in the above general formula is the same as Rf in the general formula (A). Rf is preferably a perfluoroalkyl group having 1 to 10 carbon atoms or a perfluoroalkoxyalkyl group having 1 to 10 carbon atoms. Perfluoroallyl ether is preferably at least one selected from the group consisting of CF₂=CF-CF₂-O-CF₃, CF₂=CF-CF₂-O-C₂F₅, CF₂=CF-CF₂-O-C₃F₇, and CF₂=CF-CF₂-O-C₄F₉, more preferably at least one selected from the group consisting of CF₂=CF-CF₂-O-C₂F₅, CF₂=CF-CF₂-O-C₃F₇, and CF₂=CF-CF₂-O-C₄F₉, and even more preferably CF₂=CF-CF₂-O-CF₂CF₂CF₃.

The modifying monomer is also preferably exemplified by a modifying monomer (3) having a monomer reactivity ratio of 0.1 to 8. The presence of the modifying monomer (3) makes it possible to obtain PTFE particles having a small particle size, and to thereby obtain an aqueous dispersion having high dispersion stability.

The monomer reactivity ratio in the copolymerization with TFE is a value obtained by dividing a rate constant when the propagating radical reacts with TFE when the propagating radical is less than a repeating unit based on TFE by a rate constant when the propagating radical reacts with a modifying monomer. The lower this value is, the more reactive the modifying monomer is with TFE. The monomer reactivity ratio can be calculated by copolymerizing the TFE and the modifying monomer, determining the compositional features in the polymer formed immediately after initiation, and calculating the reactivity ratio by Fineman-Ross equation.

The copolymerization is performed using 3,600 g of deionized degassed water, 1,000 mass ppm of ammonium perfluorooctanoate based on the water, and 100 g of paraffin wax contained in an autoclave made of stainless steel with an internal volume of 6.0 L at a pressure of 0.78 MPaG and a temperature of 70°C. A modifying monomer in an amount of 0.05 g, 0.1 g, 0.2 g, 0.5 g, or 1.0 g is added to the reactor, and then 0.072 g of ammonium persulfate (20 mass ppm based on the water) is added thereto. To maintain the polymerization pressure at 0.78 MPaG, TFE is continuously supplied thereinto. When the charged amount of TFE reaches 1,000 g, stirring is stopped and the pressure is released until the pressure in the reactor decreases to the atmospheric pressure. After cooling, the paraffin wax is separated to obtain an aqueous dispersion containing the resulting polymer. The aqueous dispersion is stirred so that the resulting polymer coagulates, and the polymer is dried at 150°C. The composition in the resulting polymer is calculated by appropriate combination of NMR, FT-IR, elemental analysis, and X-ray fluorescence analysis depending on the types of the monomers.

The modifying monomer (3) having a monomer reactivity ratio of 0.1 to 8 is preferably at least one selected from the group consisting of modifying monomers represented by the formulas (3a) to (3d):

CH₂=CH-Rf¹ (3a)

wherein Rf¹ is a perfluoroalkyl group having 1 to 10 carbon atoms;

CF₂=CF-O-Rf² (3b)

wherein Rf² is a perfluoroalkyl group having 1 to 2 carbon atoms;

CF₂=CF-O-(CF₂)ₙCF=CF₂ (3c)

wherein n is 1 or 2; 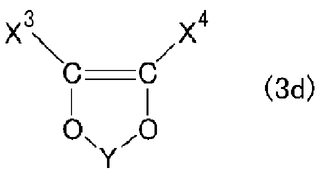 wherein X³ and X⁴ are each F, Cl, or a methoxy group; and Y is represented by the formula Y1 or Y2; and 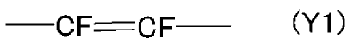 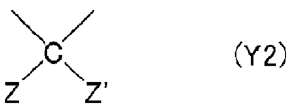 in the formula Y2, Z and Z' are each F or a fluorinated alkyl group having 1 to 3 carbon atoms.

The content of the modifying monomer (3) unit is preferably in the range of 0.00001 to 1.0% by mass based on the total polymerization units of the PTFE. The lower limit is more preferably 0.0001% by mass, more preferably 0.0005% by mass, even more preferably 0.001% by mass, and yet more preferably 0.005% by mass. The upper limit is, in ascending order of preference, 0.90% by mass, 0.50% by mass, 0.40% by mass, 0.30% by mass, 0.20% by mass, 0.15% by mass, 0.10% by mass, 0.08% by mass, 0.05% by mass, and 0.01% by mass.

The modifying monomer is preferably at least one selected from the group consisting of hexafluoropropylene, chlorotrifluoroethylene, vinylidene fluoride, perfluoro(alkyl vinyl ether), perfluoroallyl ether, (perfluoroalkyl)ethylene, ethylene, and modifying monomers having a functional group capable of reacting by radical polymerization and a hydrophilic group because an aqueous dispersion having a small average primary particle size of primary particles, a small aspect ratio of primary particles, and excellent stability can be obtained, and more preferably at least one selected from the group consisting of hexafluoropropylene, perfluoro(alkyl vinyl ether), and perfluoroallyl ether. The use of the modifying monomer allows for obtaining an aqueous dispersion of PTFE having a smaller average primary particle size, a smaller aspect ratio of the primary particles, and excellent dispersion stability. Also, an aqueous dispersion having a smaller amount of uncoagulated polymer can be obtained.

From the viewpoint of reactivity with TFE, the modifying monomer preferably contains at least one selected from the group consisting of hexafluoropropylene, perfluoro(alkyl vinyl ether), and (perfluoroalkyl)ethylene.

The modifying monomer more preferably contains at least one selected from the group consisting of hexafluoropropylene, perfluoro(methyl vinyl ether), perfluoro(propyl vinyl ether), (perfluorobutyl)ethylene, (perfluorohexyl)ethylene, and (perfluorooctyl)ethylene.

The total amount of the hexafluoropropylene unit, the perfluoro(alkyl vinyl ether) unit and the (perfluoroalkyl)ethylene unit is preferably in the range of 0.00001 to 1% by mass based on the total polymerization units of the PTFE. The lower limit of the total amount is more preferably 0.0001% by mass, more preferably 0.0005% by mass, even more preferably 0.001% by mass, and even more preferably 0.005% by mass. The upper limit is, in ascending order of preference, 0.80% by mass, 0.70% by mass, 0.50% by mass, 0.40% by mass, 0.30% by mass, 0.20% by mass, 0.15% by mass, 0.10% by mass, 0.08% by mass, 0.05% by mass, or 0.01% by mass.

It is also preferable that the modifying monomer contains a modifying monomer having a functional group capable of reaction by radical polymerization and a hydrophilic group (hereinafter, referred to as a "modifying monomer (A)").

The presence of the modifying monomer (A) makes it possible to obtain PTFE particles having a small primary particle size, and to thereby obtain an aqueous dispersion having high dispersion stability. Further, the amount of the uncoagulated polymer can be reduced. Further, the aspect ratio of the primary particles can be reduced.

The amount of the modifying monomer (A) used is preferably an amount exceeding 0.1 mass ppm of the aqueous medium, more preferably an amount exceeding 0.5 mass ppm, even more preferably an amount exceeding 1.0 mass ppm, yet more preferably 5 mass ppm or more, and particularly preferably 10 mass ppm or more. When the amount of the modifying monomer (A) used is too small, the average primary particle size of the obtained PTFE may not be reduced.

The amount of the modifying monomer (A) used may be in the above range, but the upper limit may be, for example, 5,000 mass ppm. Further, in the production method, the modifying monomer (A) may be added to the system during the reaction in order to improve the stability of the aqueous dispersion during or after the reaction.

Since the modifying monomer (A) is highly watersoluble, even if the unreacted modifying monomer (A) remains in the aqueous dispersion, it can be easily removed in the concentration step or the coagulation/washing step.

The modifying monomer (A) is incorporated into the resulting polymer in the process of polymerization, but the concentration of the modifying monomer (A) in the polymerization system itself is low and the amount incorporated into the polymer is small, so that there is no problem that the heat resistance of PTFE is lowered or PTFE is colored after sintering.

Examples of the hydrophilic group in the modifying monomer (A) include -NH₂, -PO₃M, -OPO₃M, -SO₃M, -OSO₃M, and -COOM, wherein M represents H, a metal atom, NR^{7y}₄, optionally substituted imidazolium, optionally substituted pyridinium, or optionally substituted phosphonium, wherein R^{7y} is H or an organic group and may be the same or different, and any two may be bonded to each other to form a ring. Of these, the hydrophilic group is preferably -SO₃M or -COOM. The alkyl group is preferable as the organic group in R^{7y}. R^{7y} is preferably H or a C₁₋₁₀ organic group, more preferably H or a C₁₋₄ organic group, and even more preferably H or a C₁₋₄ alkyl group.

The metal atom may be a monovalent or divalent metal atom, such as an alkali metal (Group 1) or an alkaline earth metal (Group 2), and is preferably Na, K, or Li.

Examples of the "functional group capable of reacting by radical polymerization" in the modifying monomer (A) include a group having an ethylenically unsaturated bond such as a vinyl group and an allyl group. The group having an ethylenically unsaturated bond may be represented by the following formula: CX^{e}X^{g}=CX^{f}R-wherein X^{e}, X^{f} and X^{g} are each independently F, Cl, H, CF₃, CF₂H, CFH₂ or CH₃; and R is a linking group. The linking group R may be the linking group R^{a}, which will be described below. Preferable examples include groups having an unsaturated bond, such as -CH=CH₂, -CF=CH₂, -CH=CF₂, -CF=CF₂, -CH₂-CH=CH₂, -CF₂-CF=CH₂, -CF₂-CF=CF₂, -(C=O)-CH=CH₂, -(C=O)-CF=CH₂, -(C=O)-CH=CF₂, -(C=O)-CF=CF₂, -(C=O)-C(CH₃)=CH₂, -(C=O)-C(CF₃)=CH₂, -(C=O)-C(CH₃)=CF₂, -(C=O)-C(CF₃)=CF₂, -O-CH₂-CH=CH₂, -O-CF₂-CF=CH₂, -O-CH₂-CH=CF₂, and -O-CF₂-CF=CF₂.

Since the modifying monomer (A) has a functional group capable of reaction by radical polymerization, it is presumed that when used in the polymerization, the modifying monomer (A) reacts with a fluorine-containing monomer at the initial stage of the polymerization reaction and forms highly stable particles having a hydrophilic group derived from the modifying monomer (A). Accordingly, it is considered that the number of particles increases when the polymerization is performed in the presence of the modifying monomer (A).

The polymerization may be performed in the presence of one or more modifying monomers (A).

In the polymerization, the modifying monomer (A) may be a compound having an unsaturated bond.

The modifying monomer (A) is preferably a compound represented by the general formula (4):

CXⁱX^{k}=CX^{j}R^{a}-(CZ¹Z²)ₖ-Y³ (4)

wherein Xⁱ, X^{j}, and X^{k} are each independently F, Cl, H, or CF₃; Y³ is a hydrophilic group; R^{a} is a linking group; Z¹ and Z² are each independently H, F, or CF₃; and k is 0 or 1.

Examples of the hydrophilic group include -NH₂, -PO₃M, - OPO₃M, -SO₃M, -OSO₃M, and -COOM, wherein M represents H, a metal atom, NR^{7y}₄, optionally substituted imidazolium, optionally substituted pyridinium, or optionally substituted phosphonium, wherein R^{7y} is H or an organic group and may be the same or different, and any two may be bonded to each other to form a ring. Of these, the hydrophilic group is preferably -SO₃M or - COOM. The alkyl group is preferable as the organic group in R^{7y}. R^{7y} is preferably H or a C₁₋₁₀ organic group, more preferably H or a C₁₋₄ organic group, and even more preferably H or a C₁₋₄ alkyl group. Examples of the metal atom include monovalent and divalent metal atoms, alkali metals (Group 1) and alkaline earth metals (Group 2), and preferred is Na, K, or Li.

The use of the modifying monomer (A) allows for obtaining an aqueous dispersion having a smaller average primary particle size and superior stability. Also, the aspect ratio of the primary particles can be made smaller.

R^{a} is a linking group. The "linking group" as used herein refers to a divalent linking group. The linking group may be a single bond and preferably contains at least one carbon atom, and the number of carbon atoms may be 2 or more, 4 or more, 8 or more, 10 or more, or 20 or more. The upper limit thereof is not limited, but may be 100 or less, and may be 50 or less, for example.

The linking group may be linear or branched, cyclic or acyclic, saturated or unsaturated, substituted or unsubstituted, and optionally contains one or more heteroatoms selected from the group consisting of sulfur, oxygen, and nitrogen, and optionally contains one or more functional groups selected from the group consisting of esters, amides, sulfonamides, carbonyls, carbonates, urethanes, ureas and carbamates. The linking group may be free from carbon atoms and may be a catenary heteroatom such as oxygen, sulfur, or nitrogen.

R^{a} is preferably a catenary heteroatom such as oxygen, sulfur, or nitrogen, or a divalent organic group.

When R^{a} is a divalent organic group, the hydrogen atom bonded to the carbon atom may be replaced by a halogen other than fluorine, such as chlorine, and may or may not contain a double bond. Further, R^{a} may be linear or branched, and may be cyclic or acyclic. R^{a} may also contain a functional group (e.g., ester, ether, ketone, amine, halide, etc.).

R^{a} may also be a fluorine-free divalent organic group or a partially fluorinated or perfluorinated divalent organic group.

R^{a} may be, for example, a hydrocarbon group in which no fluorine atom is bonded to a carbon atom, a hydrocarbon group in which some hydrogen atoms bonded to carbon atoms are replaced with fluorine atoms, a hydrocarbon group in which all hydrogen atoms bonded to carbon atoms are replaced with fluorine atoms, - (C=O)-, -(C=O)-O-, or a hydrocarbon group containing -(C=O)-, and these may contain an oxygen atom, may contain a double bond, and may contain a functional group.

R^{a} is preferably -(C=O)-, -(C=O)-O-, or a hydrocarbon group having 1 to 100 carbon atoms that optionally contains an ether bond and optionally contains a carbonyl group, wherein some or all of the hydrogen atoms bonded to the carbon atoms in the hydrocarbon group may be replaced by fluorine.

R^{a} is preferably at least one selected from -(CH₂)ₐ-, - (CF₂)ₐ-, -O-(CF₂)ₐ-, -(CF₂)ₐ-O-(CF₂)_{b}-, -O(CF₂)ₐ-O-(CF₂)_{b}-, -(CF₂)ₐ-[O-(CF₂)_{b}]_{c}-, -O(CF₂)ₐ-[O-(CF₂)_{b}]_{c}-, -[(CF₂)ₐ-O]_{b}-[(CF₂)_{c}-O]_{d}-,-O[(CF₂)ₐ-O]_{b}-[(CF₂)_{c}-O]_{d}-, -O-[CF₂CF(CF₃)O]ₐ-(CF₂)_{b}-, -(C=O)-,-(C=O)-O-, -(C=O)-(CH₂)ₐ-, -(C=O)-(CF₂)ₐ-, -(C=O)-O-(CH₂)ₐ-,-(C=O)-O-(CF₂)ₐ-, -(C=O)-[(CH₂)ₐ-O]_{b}-, -(C=O)-[(CF₂)ₐ-O]_{b}-, -(C=O)-O[(CH₂)ₐ-O]_{b}-, -(C=O)-O[(CF₂)ₐ-O]_{b}-, -(C=O)-O[(CH₂)ₐ-O]_{b}-(CH₂)_{c}-,-(C=O)-O[(CF₂)ₐ-O]_{b}-(CF₂)_{c}-, -(C=O)-(CH₂)ₐ-O-(CH₂)_{b}-, -(C=O)-(CF₂)ₐ-O-(CF₂)_{b}-, -(C=O)-O-(CH₂)ₐ-O-(CH₂)_{b}-, -(C=O)-O-(CF₂)ₐ-O-(CF₂)_{b}-,-(C=O)-O-C₆H₄-, and combinations thereof.

In the formulas, a, b, c, and d are independently at least 1 or more. a, b, c and d may independently be 2 or more, 3 or more, 4 or more, 10 or more, or 20 or more. The upper limit of a, b, c, and d is, for example, 100.

Suitable specific examples of R^{a} include -CF₂-O-, -CF₂-O-CF₂-, -CF₂-O-CH₂-, -CF₂-O-CH₂CF₂-, -CF₂-O-CF₂CF₂-, -CF₂-O-CF₂CH₂-, -CF₂-O-CF₂CF₂CH₂-, -CF₂-O-CF(CF₃)-, -CF₂-O-CF(CF₃)CF₂-, -CF₂-O-CF(CF₃)CF₂-O-, -CF₂-O-CF(CF₃)CH₂-, -(C=O)-, -(C=O)-O-, (C=O) (CH₂)-, -(C=O)-(CF₂)-, -(C=O)-O-(CH₂)-, -(C=O)-O-(CF₂)-, -(C=O)-[(CH₂)₂-O]ₙ-, -(C=O)-[(CF₂)₂-O]ₙ-, -(C=O)-O[(CH₂)₂-O]ₙ-, -(C=O)-O[(CF₂)₂-O]ₙ-, -(C=O)-O[(CH₂)₂-O]ₙ-(CH₂)-, -(C=O)-O[(CF₂)₂-O]ₙ-(CF₂)-, -(C=O)-(CH₂)₂-O-(CH₂)-, -(C=O)-(CF₂)₂-O-(CF₂)-, -(C=O)-O-(CH₂)₂-O-(CH₂)-, -(C=O)-O-(CF₂)₂-O-(CF₂)-, and -(C=O)-O-C₆H₄-. In particular, preferred for R^{a} among these is -CF₂-O-, -CF₂-O-CF₂-, -CF₂-O-CF₂CF₂-, -CF₂-O-CF(CF₃)-, -CF₂-O-CF(CF₃)CF₂-, -CF₂-O-CF(CF₃)CF₂-O-, -(C=O)-, -(C=O)-O-, -(C=O)-(CH₂)-, -(C=O)-O-(CH₂)-, -(C=O)-O[(CH₂)₂-O]ₙ-, -(C=O)-O[(CH₂)₂-O]ₙ-(CH₂)-, -(C=O)-(CH₂)₂-O-(CH₂)-, or -(C=O)-O-C₆H₄-.

In the formula, n is an integer of 1 to 10.

-R^{a}-(CZ¹Z²)ₖ- in the general formula (4) is preferably -CF₂-O-CF₂-, -CF₂-O-CF(CF₃)-, -CF₂-O-C(CF₃)₂-, -CF₂-O-CF₂-CF₂-, - CF₂-O-CF₂-CF(CF₃)-, -CF₂-O-CF₂-C(CF₃)₂-, -CF₂-O-CF₂CF₂-CF₂-, -CF₂-O-CF₂CF₂-CF(CF₃)-, -CF₂-O-CF₂CF₂-C(CF₃)₂-, -CF₂-O-CF(CF₃)-CF₂-, -CF₂-O-CF(CF₃)-CF(CF₃)-, -CF₂-O-CF(CF₃)-C(CF₃)₂-, -CF₂-O-CF(CF₃)-CF₂-,-CF₂-O-CF(CF₃)-CF(CF₃)-, -CF₂-O-CF(CF₃)-C(CF₃)₂-, -CF₂-O-CF(CF₃)CF₂-CF₂-, -CF₂-O-CF(CF₃)CF₂-CF(CF₃)-, -CF₂-O-CF(CF₃)CF₂-C(CF₃)₂-, -CF₂-O-CF(CF₃)CF₂-O-CF₂-, -CF₂-O-CF(CF₃)CF₂-O-CF(CF₃)-, -CF₂-O-CF(CF₃)CF₂-O-C(CF₃)₂-, -(C=O)-, -(C=O)-O-, -(C=O)-(CH₂)-, - (C=O)-(CF₂)-, -(C=O)-O-(CH₂)-, -(C=O)-O-(CF₂)-, -(C=O)-[(CH₂)₂-O]ₙ-(CH₂)-, -(C=O)-[(CF₂)₂-O]ₙ-(CF₂)-, -(C=O)-[(CH₂)₂-O]ₙ-(CH₂)-(CH₂)-, -(C=O)-[(CF₂)₂-O]ₙ-(CF₂)-(CF₂)-(C=O)-O[(CH₂)₂-O]ₙ-(CF₂)-, - (C=O)-O[(CH₂)₂-O]ₙ-(CH₂)-(CH₂)-(C=O)-O[(CF₂)₂-O]ₙ-(CF₂)-, - (C=O)-O[(CF₂)₂-O]ₙ-(CF₂)-(CF₂)-, -(C=O)-(CH₂)₂-O-(CH₂)-(CH₂)-, - (C=O)-(CF₂)₂-O-(CF₂)-(CF₂)-, -(C=O)-O-(CH₂)₂-O-(CH₂)-(CH₂)-, - (C=O)-O-(CF₂)₂-O-(CF₂)-(CF₂)-, -(C=O)-O-(CH₂)₂-O-(CH₂)-C(CF₃)₂-, - (C=O)-O-(CF₂)₂-O-(CF₂)-C(CF₃)₂-, or -(C=O)-O-C₆H₄-C(CF₃)₂-, and more preferably -CF₂-O-CF(CF₃)-, -CF₂-O-CF₂-CF(CF₃)-, -CF₂-O-CF₂CF₂-CF(CF₃)-, -CF₂-O-CF(CF₃)-CF(CF₃)-, -CF₂-O-CF(CF₃)CF₂-CF(CF₃)-, -CF₂-O-CF(CF₃)CF₂-O-CF(CF₃)-, -(C=O)-, -(C=O)-O-(CH₂)-, -(C=O)-O-(CH₂)-(CH₂)-, -(C=O)-O[(CH₂)₂-O]ₙ-(CH₂)-(CH₂)-, -(C=O)-O-(CH₂)₂-O-(CH₂)-C(CF₃)₂-, or -(C=O)-O-C₆H₄-C(CF₃)₂-.

In the formula, n is an integer of 1 to 10.

Specific examples of the compound represented by the general formula (4) include: 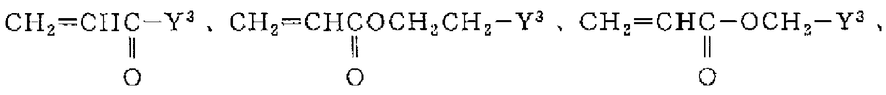 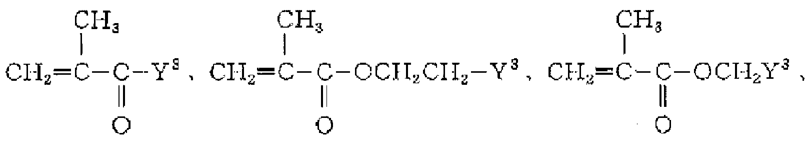 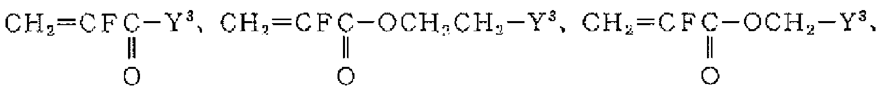 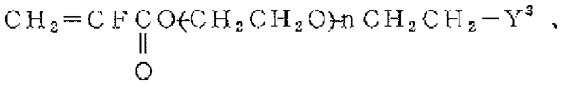 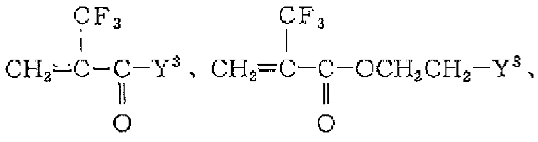 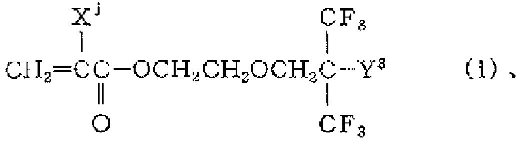 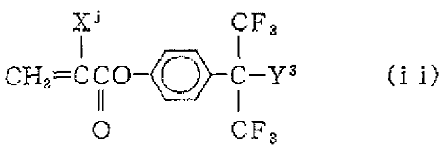 wherein X^{j} and Y³ are as described above; and n is an integer of 1 to 10.

R^{a} is preferably a divalent group represented by the general formula (r1):

-(C=O)ₕ-(O)ᵢ-CF₂-O-(CX⁶₂)ₑ-{O-CF(CF₃)}_{f}-(O)_{g}- (r1)

wherein X⁶ is each independently H, F, or CF₃; e is an integer of 0 to 3; f is an integer of 0 to 3; g is 0 or 1; h is 0 or 1; and i is 0 or 1,
and is also preferably a divalent group represented by the general formula (r2):

-(C=O)ₕ-(O)ᵢ-CF₂-O-(CX⁷₂)ₑ-(O)_{g}- (r2)

wherein X⁷ is each independently H, F, or CF₃; e is an integer of 0 to 3; g is 0 or 1; h is 0 or 1; and i is 0 or 1.

-R^{a}-(CZ¹Z²)ₖ- in the general formula (4) is also preferably a divalent group represented by the following formula (t1) :

-(C=O)ₕ-(O)ᵢ-CF₂-O-(CX⁶₂)ₑ-{O-CF(CF₃)}_{f}-(O)_{g}-CZ¹Z²- (t1)

wherein X⁶ is each independently H, F, or CF₃; e is an integer of 0 to 3; f is an integer of 0 to 3; g is 0 or 1; h is 0 or 1; i is 0 or 1; and Z¹ and Z² are each independently F or CF₃,
and is more preferably a group in which one of Z¹ and Z² is F and the other is CF₃ in the formula (t1).

Also, in the general formula (4), -R^{a}-(CZ¹Z²)ₖ- is preferably a divalent group represented by the following formula (t2):

-(C=O)ₕ-(O)ᵢ-CF₂-O-(CX⁷₂)ₑ-(O)_{g}-CZ¹Z²- (t2)

wherein X⁷ is each independently H, F, or CF₃; e is an integer of 0 to 3; g is 0 or 1; h is 0 or 1; i is 0 or 1; and Z¹ and Z² are each independently F or CF₃,
and is more preferably a group in which one of Z¹ and Z² is F and the other is CF₃ in the formula (t2).

The compound represented by the general formula (4) also preferably has a C-F bond and does not have a C-H bond, in the portion excluding the hydrophilic group (Y³). In other words, in the general formula (4), Xⁱ, X^{j}, and X^{k} are all F, and R^{a} is preferably a perfluoroalkylene group having 1 or more carbon atoms; the perfluoroalkylene group may be either linear or branched, may be either cyclic or acyclic, and may contain at least one catenary heteroatom. The perfluoroalkylene group may have 2 to 20 carbon atoms or 4 to 18 carbon atoms.

The compound represented by the general formula (4) may be partially fluorinated. In other words, the compound represented by the general formula (4) also preferably has at least one hydrogen atom bonded to a carbon atom and at least one fluorine atom bonded to a carbon atom, in the portion excluding the hydrophilic group (Y³).

The compound represented by the general formula (4) is also preferably a compound represented by the following formula (4a) :

CF₂=CF-O-Rf⁰-Y³ (4a)

wherein Y³ is a hydrophilic group; and Rf⁰ is a perfluorinated divalent linking group which is perfluorinated and may be a linear or branched, cyclic or acyclic, saturated or unsaturated, substituted or unsubstituted, and optionally contains one or more heteroatoms selected from the group consisting of sulfur, oxygen, and nitrogen.

The compound represented by the general formula (4) is also preferably a compound represented by the following formula (4b) :

CH₂=CH-O-Rf⁰-Y³ (4b)

wherein Y³ is a hydrophilic group; and Rf⁰ is a perfluorinated divalent linking group as defined in the formula (4a).

In a preferable embodiment, Y³ in the general formula (4) is -OSO₃M. Examples of the compound represented by the general formula (4) when Y³ is -OSO₃M include CF₂=CF(OCF₂CF₂CH₂OSO₃M), CF₂=CF(O(CF₂)₄CH₂OSO₃M), CF₂=CF(OCF₂CF(CF₃)CH₂OSO₃M), CF₂=CF(OCF₂CF(CF₃)OCF₂CF₂CH₂OSO₃M), CH₂=CH((CF₂)₄CH₂OSO₃M), CF₂=CF(OCF₂CF₂SO₂N(CH₃)CH₂CH₂OSO₃M), CH₂=CH(CF₂CF₂CH₂OSO₃M), and CF₂=CF(OCF₂CF₂CF₂CF₂SO₂N(CH₃)CH₂CH₂OSO₃M). In the formulas, M is as described above.

In a preferred embodiment, in the general formula (4), Y³ is -SO₃M. Examples of the compound represented by the general formula (4) when Y³ is -SO₃M include CF₂=CF(OCF₂CF₂SO₃M), CF₂=CF(O(CF₂)₄SO₃M), CF₂=CF(OCF₂CF(CF₃)SO₃M), CF₂=CF(OCF₂CF(CF₃)OCF₂CF₂SO₃M), CH₂=CH(CF₂CF₂SO₃M), CF₂=CF(OCF₂CF(CF₃)OCF₂CF₂CF₂CF₂SO₃M), CH₂=CH((CF₂)₄SO₃M), CH₂=CH((CF₂)₃SO₃M). In the formulas, M is as described above.

In a preferable embodiment, Y³ in the general formula (4) is also -COOM. Examples of the compound represented by the general formula (4) when Y³ is -COOM include CF₂=CF(OCF₂CF₂COOM), CF₂=CF(OCF₂CF₂CF₂COOM), CF₂=CF(O(CF₂)₅COOM), CF₂=CF(OCF₂CF(CF₃)COOM), CF₂=CF(OCF₂CF(CF₃)O(CF₂)ₙCOOM) (n is greater than 1), CH₂=CH(CF₂CF₂COOM), CH₂=CH((CF₂)₄COOM), CH₂=CH((CF₂)₃COOM), CF₂=CF(OCF₂CF₂SO₂NR'CH₂COOM), CF₂=CF(O(CF₂)₄SO₂NR'CH₂COOM), CF₂=CF(OCF₂CF(CF₃)SO₂NR'CH₂COOM), CF₂=CF(OCF₂CF(CF₃)OCF₂CF₂SO₂NR'CH₂COOM), CH₂=CH(CF₂CF₂SO₂NR'CH₂COOM), CF₂=CF(OCF₂CF(CF₃)OCF₂CF₂CF₂CF₂SO₂NR'CH₂COOM), CH₂=CH((CF₂)₄SO₂NR'CH₂COOM), and CH₂=CH((CF₂)₃SO₂NR'CH₂COOM). In the formulas, R' is H or a C₁₋₄ alkyl group, and M is as described above.

In a preferable embodiment, Y³ in the general formula (4) is also -OPO₃M or -OP(O) (OM)₂. Examples of the compound represented by the general formula (4) when Y³ is -OPO₃M or - OP(O)(OM)₂ include CF₂=CF(OCF₂CF₂CH₂OP(O)(OM)₂), CF₂=CF(O(CF₂)₄CH₂OP(O)(OM)₂), CF₂=CF(OCF₂CF(CF₃)CH₂OP(O)(OM)₂), CF₂=CF(OCF₂CF(CF₃)OCF₂CF₂CH₂OP(O)(OM)₂), CF₂=CF(OCF₂CF₂SO₂N(CH₃)CH₂CH₂OP(O)(OM)₂), CF₂=CF(OCF₂CF₂CF₂CF₂SO₂N(CH₃)CH₂CH₂OP(O)(OM)₂), CH₂=CH(CF₂CF₂CH₂OP(O)(OM)₂, CH₂=CH((CF₂)₄CH₂OP(O)(OM)₂), and CH₂=CH((CF₂)₃CH₂OP(O)(OM)₂). In the formulas, M is as described above.

In a preferable embodiment, Y³ in the general formula (4) is also -PO₃M or -P(O)(OM)₂. Examples of the compound represented by the general formula (4) when Y³ is -PO₃M or - P(O)(OM)₂ include CF₂=CF(OCF₂CF₂P(O)(OM)₂), CF₂=CF(O(CF₂)₄P(O)(OM)₂), CF₂=CF(OCF₂CF(CF₃)P(O)(OM)₂), CF₂=CF(OCF₂CF(CF₃)OCF₂CF₂P(O)(OM)₂), CH₂=CH(CF₂CF₂P(O)(OM)₂), CH₂=CH((CF₂)₄P(O)(OM)₂), and CH₂=CH((CF₂)₃P(O)(OM)₂), wherein M is as described above.

The compound represented by the general formula (4) is preferably at least one selected from the group consisting of:
a compound represented by the general formula (5):

   CX₂=CY(-CZ₂-O-Rf-Y³) (5)

   wherein X is the same or different and is -H or -F; Y is -H, -F, an alkyl group, or a fluorine-containing alkyl group; Z is the same or different and -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and Y³ is as described above;
a compound represented by the general formula (6):

   CX₂=CY(-O-Rf-Y³) (6)

   wherein X is the same or different and is -H or -F; Y is -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and Y³ is as described above; and
a compound represented by the general formula (7):

   CX₂=CY(-Rf-Y³) (7)

   wherein X is the same or different and is -H or -F; Y is -H, -F, an alkyl group, or a fluorine-containing alkyl group; Rf is a fluorine-containing alkylene group having 1 to 40 carbon atoms or a fluorine-containing alkylene group having 2 to 100 carbon atoms and having an ether bond; and Y³ is as described above.

The fluorine-containing alkylene group having 2 to 100 carbon atoms and having an ether bond is an alkylene group which does not include a structure wherein an oxygen atom is an end and which contains an ether bond between carbon atoms.

In the general formula (5), each X is -H or -F. Both X may be -F, or at least one may be -H. For example, one may be -F and the other may be -H, or both may be -H.

In the general formula (5), Y is -H, -F, an alkyl group, or a fluorine-containing alkyl group.

The alkyl group is an alkyl group free from fluorine atoms and may have one or more carbon atoms. The alkyl group preferably has 6 or less carbon atoms, more preferably 4 or less carbon atoms, and even more preferably 3 or less carbon atoms.

The fluorine-containing alkyl group is an alkyl group containing at least one fluorine atom, and may have one or more carbon atoms. The fluorine-containing alkyl group preferably has 6 or less carbon atoms, more preferably 4 or less carbon atoms, and even more preferably 3 or less carbon atoms.

Y is preferably -H, -F, or -CF₃, and more preferably -F.

In the general formula (5), Z is the same or different and is -H, -F, an alkyl group, or a fluoroalkyl group.

The alkyl group is an alkyl group free from fluorine atoms and may have one or more carbon atoms. The alkyl group preferably has 6 or less carbon atoms, more preferably 4 or less carbon atoms, and even more preferably 3 or less carbon atoms.

The fluorine-containing alkyl group is an alkyl group containing at least one fluorine atom, and may have one or more carbon atoms. The fluorine-containing alkyl group preferably has 6 or less carbon atoms, more preferably 4 or less carbon atoms, and even more preferably 3 or less carbon atoms.

Z is preferably -H, -F, or -CF₃, and more preferably -F.

In the general formula (5), at least one of X, Y, and Z preferably contains a fluorine atom. For example, X may be -H, and Y and Z may be -F.

In the general formula (5), Rf is a fluorine-containing alkylene group having 1 to 40 carbon atoms or a fluorine-containing alkylene group having 2 to 100 carbon atoms and having an ether bond. The fluorine-containing alkylene group preferably has 2 or more carbon atoms. The fluorine-containing alkylene group also preferably has 30 or less carbon atoms, more preferably 20 or less carbon atoms, and even more preferably 10 or less carbon atoms. Examples of the fluorine-containing alkylene group include -CF₂-, -CH₂CF₂-, -CF₂CF₂-, -CF₂CH₂-, -CF₂CF₂CH₂-, -CF(CF₃)-, -CF(CF₃)CF₂-, and -CF(CF₃)CH₂-. The fluorine-containing alkylene group is preferably a perfluoroalkylene group.

The fluorine-containing alkylene group having an ether bond preferably has 3 or more carbon atoms. The number of carbon atoms of the fluorine-containing alkylene group having an ether bond is preferably 60 or less, more preferably 30 or less, and even more preferably 12 or less.
The fluorine-containing alkylene group having an ether bond is also preferably a divalent group represented by the following formula: 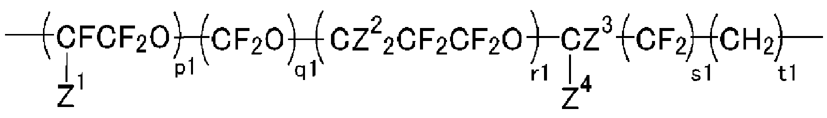 wherein Z¹ is F or CF₃; Z² and Z³ are each H or F; Z⁴ is H, F, or CF₃; p1 + q1 + r1 is an integer of 1 to 10; s1 is 0 or 1; and t1 is an integer of 0 to 5.

Specific examples of the fluorine-containing alkylene group having an ether bond include -CF(CF₃)CF₂-O-CF(CF₃)-, - (CF(CF₃)CF₂-O)ₙ-CF(CF₃)- (wherein n is an integer of 1 to 10), - CF(CF₃)CF₂-O-CF(CF₃)CH₂-, - (CF(CF₃)CF₂-O)ₙ-CF(CF₃)CH₂- (wherein n is an integer of 1 to 10), -CH₂CF₂CF₂O-CH₂CF₂CH₂-, -CF₂CF₂CF₂O-CF₂CF₂-, -CF₂CF₂CF₂O-CF₂CF₂CH₂-, -CF₂CF₂O-CF₂-, and -CF₂CF₂O-CF₂CH₂-. The fluorine-containing alkylene group having an ether bond is preferably a perfluoroalkylene group.

In the general formula (5), Y³ is -COOM, -SO₃M, or - OSO₃M, wherein M is H, a metal atom, NR^{7y}₄, optionally substituted imidazolium, optionally substituted pyridinium, or optionally substituted phosphonium, wherein R^{7y} is H or an organic group, and may be the same or different, and any two thereof may be bonded to each other to form a ring.

The alkyl group is preferable as the organic group in R^{7y}.

R^{7y} is preferably H or a C₁₋₁₀ organic group, more preferably H or a C₁₋₄ organic group, and even more preferably H or a C₁₋₄ alkyl group.

Examples of the metal atom include alkali metals (Group 1) and alkaline earth metals (Group 2), and Na, K, or Li is preferable.

M is preferably -H, a metal atom, or -NR^{7y}₄, more preferably -H, an alkali metal (Group 1), an alkaline earth metal (Group 2), or -NR^{7y}₄, even more preferably -H, -Na, -K, -Li, or -NH₄, yet more preferably -Na, -K, or -NH₄, particularly preferably -Na, or -NH₄, and most preferably -NH₄.
Y³ is preferably -COOM or -SO₃M, and more preferably -COOM.

The compound represented by the general formula (5) is preferably a compound (5a) represented by the general formula (5a) :

CH₂=CF(-CF₂-O-Rf-Y³) (5a)

wherein Rf and Y³ are as described above.

Specific examples of the compound represented by the general formula (5a) include a compound represented by the following formula: 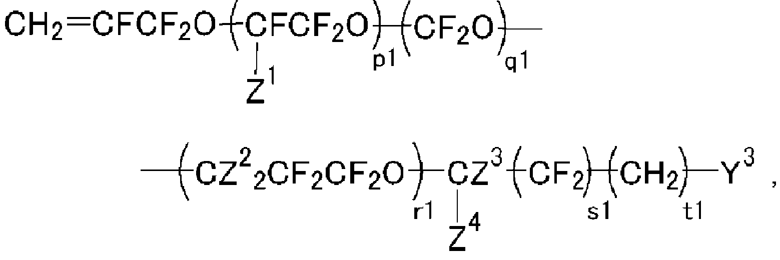 [0455] wherein Z¹ is F or CF₃; Z² and Z³ are each H or F; Z⁴ is H, F, or CF₃; p1+q1+r1 is an integer of 0 to 10; s1 is 0 or 1; t1 is an integer of 0 to 5; and Y³ is as described above, with the proviso that when Z³ and Z⁴ are both H, p1+q1+r1+s1 is not 0. More specifically, preferable examples include

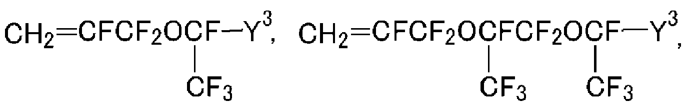

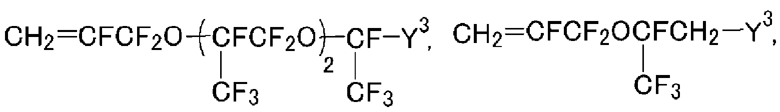

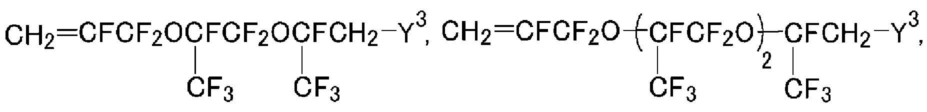

CH₂=CFCF₂OCH₂CF₂-Y³, CH₂=CFCF₂O(CH₂CF₂CF₂O)CH₂CF₂-Y³,

CH₂=CFCF₂OCH₂CF₂CH₂-Y³,

CH₂=CFCF₂O(CH₂CF₂CF₂O)CH₂CF₂CH₂-Y³,

CH₂=CFCF₂OCF₂CF₂-Y³, CH₂=CFCF₂O(CF₂CF₂CF₂O)CF₂CF₂-Y³,

CH₂=CFCF₂OCF₂CF₂CH₂-Y³,

CH₂=CFCF₂O(CF₂CF₂CF₂O)CF₂CF₂CH₂-Y³

CH₂=CFCF₂OCF₂-Y³, CH₂=CFCF₂O(CF₂CF₂O)CF₂-Y³

CH₂=CFCF₂OCF₂CH₂-Y³,

CH₂=CFCF₂O(CF₂CF₂O)CF₂CH₂-Y³,

Of these, 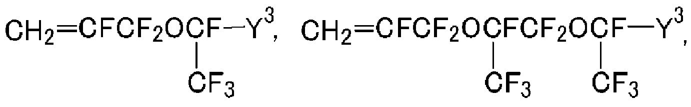 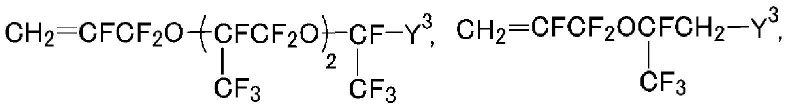 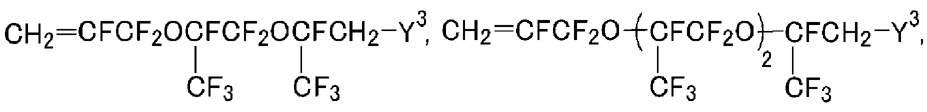 are preferable.

In the compound represented by the general formula (5a), Y³ in the formula (5a) is preferably -COOM. Specifically, the compound represented by the general formula (5a) is preferably at least one selected from the group consisting of CH₂=CFCF₂OCF(CF₃)COOM and CH₂=CFCF₂OCF(CF₃)CF₂OCF(CF₃)COOM (wherein M is as defined above), and more preferably CH₂=CFCF₂OCF(CF₃)COOM.

The compound represented by the general formula (5) is preferably a compound (5b) represented by the general formula (5b) :

CX²₂=CFCF₂-O-(CF(CF₃)CF₂O)ₙ₅-CF(CF₃)-Y³ (5b)

wherein each X² is the same, and each represent F or H; n5 represents 0 or an integer of 1 to 10, and Y³ is as defined above.

In the formula (5b), n5 is preferably 0 or an integer of 1 to 5, more preferably 0, 1, or 2, and even more preferably 0 or 1 from the viewpoint of stability of the resulting aqueous dispersion. Y³ is preferably -COOM from the viewpoint of obtaining appropriate water-solubility and stability of the aqueous dispersion, and M is preferably H or NH₄ from the viewpoint of being less likely to remain as impurities and improving the heat resistance of the resulting molded body.

Examples of the compound represented by the formula (5b) include CH₂=CFCF₂OCF(CF₃)COOM and CH₂=CFCF₂OCF(CF₃)CF₂OCF(CF₃)COOM, wherein M is as defined above.

Examples of the compound represented by the general formula (5) further include a compound represented by the general formula (5c):

CF₂=CFCF₂-O-Rf-Y³ (5c)

wherein Rf and Y³ are as described above.

More specific examples thereof include:

CF₂=CFCF₂OCF₂CF₂CF₂-Y³,

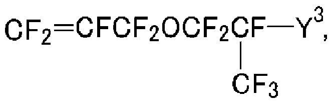

CF₂=CFCF₂OCF₂CF₂CF₂CH₂-Y³, 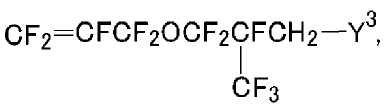 and the like.

In the general formula (6), each X is -H or -F. Both X may be -F, or at least one may be -H. For example, one may be -F and the other may be -H, or both may be -H.

In the general formula (6), Y is -H, -F, an alkyl group, or a fluorine-containing alkyl group.

The alkyl group is an alkyl group free from fluorine atoms and may have one or more carbon atoms. The alkyl group preferably has 6 or less carbon atoms, more preferably 4 or less carbon atoms, and even more preferably 3 or less carbon atoms.

The fluorine-containing alkyl group is an alkyl group containing at least one fluorine atom, and may have one or more carbon atoms. The fluorine-containing alkyl group preferably has 6 or less carbon atoms, more preferably 4 or less carbon atoms, and even more preferably 3 or less carbon atoms.

Y is preferably -H, -F, or -CF₃, and more preferably -F.

In the general formula (6), at least one of X and Y preferably contains a fluorine atom. For example, X may be -H, and Y and Z may be -F.

In the general formula (6), Rf is a fluorine-containing alkylene group having 1 to 40 carbon atoms or a fluorine-containing alkylene group having 2 to 100 carbon atoms and having an ether bond.

The fluorine-containing alkylene group preferably has 2 or more carbon atoms. The fluorine-containing alkylene group preferably has 30 or less carbon atoms, more preferably 20 or less carbon atoms, and even more preferably 10 or less carbon atoms. Examples of the fluorine-containing alkylene group include -CF₂-, -CH₂CF₂-, -CF₂CF₂-, -CF₂CH₂-, -CF₂CF₂CH₂-, -CF(CF₃)-, -CF(CF₃)CF₂-, and -CF(CF₃)CH₂-. The fluorine-containing alkylene group is preferably a perfluoroalkylene group.

In the general formula (6), Y³ is -COOM, -SO₃M, or - OSO₃M, wherein M is H, a metal atom, NR^{7y}₄, optionally substituted imidazolium, optionally substituted pyridinium, or optionally substituted phosphonium, wherein R^{7y} is H or an organic group, and may be the same or different, and any two may be bonded to each other to form a ring.

The alkyl group is preferable as the organic group of R^{7y}. R^{7y} is preferably H or a C₁₋₁₀ organic group, more preferably H or a C₁₋₄ organic group, and even more preferably H or a C₁₋₄ alkyl group.

Examples of the metal atom include alkali metals (Group 1) and alkaline earth metals (Group 2), and Na, K, or Li is preferable.

M is preferably -H, a metal atom, or NR⁷₄, more preferably -H, an alkali metal (Group 1), an alkaline earth metal (Group 2), or NR⁷₄, even more preferably -H, -Na, -K, -Li, or NH₄, yet more preferably -H, -Na, -K, or NH₄, particularly preferably -H,-Na, or NH₄, and most preferably -H or -NH₄.

Y³ is preferably -COOM or -SO₃M, and more preferably -COOM.

The compound represented by the general formula (6) is preferably at least one selected from the group consisting of compounds represented by the general formulas (6a), (6b), (6c), (6d), and (6e):

CF₂=CF-O-(CF₂)ₙ₁-Y³ (6a)

wherein n1 represents an integer of 1 to 10, and Y³ is as defined above;

CF₂=CF-O-(CF₂C(CF₃)F)ₙ₂-Y³ (6b)

wherein n2 represents an integer of 1 to 5, and Y³ is as defined above;

CF₂=CF-O-(CFX¹)ₙ₃-Y³ (6c)

wherein X¹ represents F or CF₃; n3 represents an integer of 1 to 10; and Y³ is as defined above;

CF₂=CF-O-(CF₂CFX¹O)ₙ₄-(CF₂)ₙ₆-Y³ (6d)

wherein n4 represents an integer of 1 to 10; n6 represents an integer of 1 to 3; and Y³ and X¹ are as defined above; and

CF₂=CF-O-(CF₂CF₂CFX¹O)ₙ₅-CF₂CF₂CF₂-Y³ (6e)

wherein n5 represents an integer of 0 to 10, and Y³ and X¹ are the same as defined above.

In the formula (6a), n1 is preferably an integer of 5 or less, and more preferably an integer of 2 or less. Y³ is preferably -COOM from the viewpoint of obtaining appropriate water-solubility and stability of the aqueous dispersion, and M is preferably H or NH₄ from the viewpoint of being less likely to remain as impurities and improving the heat resistance of the resulting molded body.

Examples of the compound represented by the formula (6a) include CF₂=CF-O-CF₂COOM, CF₂=CF(OCF₂CF₂COOM), and CF₂=CF(OCF₂CF₂CF₂COOM), wherein M is as defined above.

In the formula (6b), n2 is preferably an integer of 3 or less from the viewpoint of stability of the resulting aqueous dispersion, Y³ is preferably -COOM from the viewpoint of obtaining appropriate water-solubility and stability of the aqueous dispersion, and M is preferably H or NH₄ from the viewpoint of being less likely to remain as impurities and improving the heat resistance of the resulting molded body.

In the formula (6c), n3 is preferably an integer of 5 or less from the viewpoint of water-solubility, Y³ is preferably -COOM from the viewpoint of obtaining appropriate water-solubility and stability of the aqueous dispersion, and M is preferably H or NH₄ from the viewpoint of improving dispersion stability.

In the formula (6d), X¹ is preferably -CF₃ from the viewpoint of stability of the aqueous dispersion, n4 is preferably an integer of 5 or less from the viewpoint of water-solubility, Y³ is preferably -COOM from the viewpoint of obtaining appropriate water-solubility and stability of the aqueous dispersion, and M is preferably H or NH₄.

Examples of the compound represented by the formula (6d) include CF₂=CFOCF₂CF(CF₃)OCF₂CF₂COOM, CF₂=CFOCF₂CF(CF₃)OCF₂COOM, and CF₂=CFOCF₂CF(CF₃)OCF₂CF₂CF₂COOM, wherein M represents H, NH₄, or an alkali metal.

In the general formula (6e), n5 is preferably an integer of 5 or less in terms of water solubility, Y³ is preferably -COOM in terms of obtaining appropriate water solubility and stability of the aqueous dispersion, and M is preferably H or NH₄.

Examples of the compound represented by general formula (6e) include CF₂=CFOCF₂CF₂CF₂COOM, wherein M represents H, NH₄, or an alkali metal.

In the general formula (7), Rf is preferably a fluorine-containing alkylene group having 1 to 40 carbon atoms. In the general formula (7), at least one of X and Y preferably contains a fluorine atom.

The compound represented by the general formula (7) is preferably at least one selected from the group consisting of:
a compound represented by the general formula (7a):

   CF₂=CF-(CF₂)ₙ₁-Y³ (7a)

   wherein n1 represents an integer of 1 to 10; and Y³ is as defined above; and
a compound represented by the general formula (7b):

   CF₂=CF-(CF₂C(CF₃)F)ₙ₂-Y³ (7b)

   wherein n2 represents an integer of 1 to 5; and Y³ is as defined above.

Y³ is preferably -SO₃M or -COOM, and M is preferably H, a metal atom, NR^{7y}₄, optionally substituted imidazolium, optionally substituted pyridinium, or optionally substituted phosphonium. R^{7y} represents H or an organic group.

In the general formula (7a), n1 is preferably an integer of 5 or less, and more preferably an integer of 2 or less. Y³ is preferably -COOM from the viewpoint of obtaining appropriate water-solubility and stability of the aqueous dispersion, and M is preferably H or NH₄ from the viewpoint of being less likely to remain as impurities and improving the heat resistance of the resulting molded body.
Examples of the compound represented by the formula (7a) include CF₂=CFCF₂COOM wherein M is as defined above.

In the formula (7b), n2 is preferably an integer of 3 or less from the viewpoint of stability of the resulting aqueous dispersion, Y³ is preferably -COOM from the viewpoint of obtaining appropriate water-solubility and stability of the aqueous dispersion, and M is preferably H or NH₄ from the viewpoint of being less likely to remain as impurities and improving the heat resistance of the resulting molded body.

The modifying monomer preferably contains the modifying monomer (A), and preferably contains at least one selected from the group consisting of compounds represented by the general formulas (5a), (5c), (6a), (6b), (6c), and (6d), and more preferably contains a compound represented by the general formula (5a) or (5c).

When the modifying monomer (A) is used as the modifying monomer, the content of the modifying monomer (A) unit is preferably in the range of 0.00001 to 1.0% by mass based on all polymerized units in the TFE polymer (PTFE). The lower limit is more preferably 0.0001% by mass, more preferably 0.0005% by mass, even more preferably 0.001% by mass, and yet more preferably 0.005% by mass. The upper limit is, in ascending order of preference, 0.90% by mass, 0.50% by mass, 0.40% by mass, 0.30% by mass, 0.20% by mass, 0.15% by mass, 0.10% by mass, 0.08% by mass, 0.05% by mass, and 0.01% by mass.

In production of the TFE polymer, the polymer (I) can be used within the use range described for the production method of the present disclosure. The concentration of the polymer (I) is not limited as long as it is within the above range. Too large an amount of the polymer (I) added causes generation of needle-shaped particles having a large aspect ratio and gelling of the aqueous dispersion, impairing the stability. The lower limit of the amount of the polymer (I) used is preferably 0.0001% by mass, more preferably 0.001% by mass, even more preferably 0.01% by mass, and particularly preferably 0.02% by mass, based on the aqueous medium. The upper limit of the amount of the polymer (I) used is preferably 10% by mass and more preferably 5% by mass, based on the aqueous medium.

The polymer (I) may be added to the reaction vessel at once before initiation of the polymerization, may be added at once after initiation of the polymerization, may be added in multiple portions during the polymerization, or may be added continuously during the polymerization.

In production of the TFE polymer, the polymerization initiator used may be an organic peroxide such as a persulfate (e.g., ammonium persulfate), disuccinic acid peroxide, or diglutaric acid peroxide alone or in the form of a mixture thereof. An organic peroxide may be used together with a reducing agent such as sodium sulfite to form a redox system. Moreover, the concentration of radicals in the system can be also regulated by adding a radical scavenger such as hydroquinone or catechol or adding a peroxide decomposer such as ammonium sulfate during polymerization.

The redox polymerization initiator is preferably a redox initiator obtained by combining an oxidizing agent and a reducing agent. Examples of the oxidizing agent include persulfates, organic peroxides, potassium permanganate, manganese triacetate, and ammonium cerium nitrate. Examples of the reducing agent include sulfites, bisulfites, bromates, diimines, and oxalic acid. Examples of persulfate include ammonium persulfate and potassium persulfate. Examples of sulfites include sodium sulfite and ammonium sulfite. In order to increase the decomposition rate of the initiator, the combination of the redox initiator also preferably contains a copper salt or an iron salt. An example of the copper salt is copper(II) sulfate, and an example of the iron salt is iron(II) sulfate.

Examples of the redox initiator include potassium permanganate/oxalic acid, ammonium persulfate/bisulfite/iron sulfate, manganese triacetate/oxalic acid, ammonium cerium nitrate/oxalic acid, and bromate/bisulfite, and potassium permanganate/oxalic acid is preferable. In the case of using a redox initiator, a polymerization tank may be charged with either an oxidizing agent or a reducing agent in advance, followed by continuously or intermittently adding the other to initiate the polymerization. For example, in the case of using potassium permanganate/oxalic acid, preferably a polymerization tank is charged with oxalic acid, and then potassium permanganate is continuously added thereto.

In the production of the TFE polymer, a known chain transfer agent may be used. Examples thereof include saturated hydrocarbons such as methane, ethane, propane, and butane, halogenated hydrocarbons such as chloromethane, dichloromethane, and difluoroethane, alcohols such as methanol, ethanol, and isopropanol, and hydrogen. The chain transfer agent is preferably one in a gas state at a normal temperature and normal pressure.

The amount of the chain transfer agent used is usually 1 to 10,000 mass ppm, preferably 1 to 5,000 mass ppm, based on the total amount of TFE fed.

In production of the TFE polymer, a saturated hydrocarbon that is substantially inert to the reaction, that is in a liquid state under the reaction conditions, and that has 12 or more carbon atoms may be used as a dispersion stabilizer for the reaction system in an amount of 2 to 10 parts by mass based on 100 parts by mass of the aqueous medium. Ammonium carbonate, ammonium phosphate, or the like may be added as a buffer to adjust the pH during the reaction.

When the polymerization for TFE is complete, an aqueous dispersion having a solid concentration of 1.0 to 70% by mass and having an average primary particle size of 50 to 500 nm can be obtained.

The lower limit of the solid concentration is preferably 5% by mass and more preferably 8% by mass. The upper limit thereof may be, but is not limited to, 40% by mass or 35% by mass.

The lower limit of the average primary particle size is preferably 100 nm and more preferably 150 nm. The upper limit thereof is preferably 400 nm and more preferably 350 nm.

The average primary particle size can be measured by dynamic light scattering. The average primary particle size may be determined by preparing an aqueous dispersion with a solid concentration being adjusted to 1.0% by mass and using dynamic light scattering at 25°C with 70 measurement processes, wherein the solvent (water) has a refractive index of 1.3328 and the solvent (water) has a viscosity of 0.8878 mPa·s. The dynamic light scattering may use, for example, ELSZ-1000S (manufactured by Otsuka Electronics Co., Ltd.).

Fine powder can be produced by coagulating the aqueous dispersion. The aqueous dispersion of the TFE polymer can be formed into fine powder through coagulation, washing, and drying, and the resulting fine powder may be used in various applications. Coagulation of the aqueous dispersion of the TFE polymer is usually performed by diluting the aqueous dispersion obtained by polymerization of polymer latex, for example, with water to a polymer concentration of 5 to 20% by mass, optionally adjusting the pH to a neutral or alkaline, and stirring the polymer more vigorously than during the reaction in a vessel equipped with a stirrer. The coagulation may be performed in the presence of an oxidizing agent. As for the coagulation, stirring may be performed while adding, for example, a water-soluble organic compound such as methanol or acetone as a coagulating agent. The coagulation may be continuously performed using a device such as an inline mixer.

From the viewpoint of productivity, the concentration of the non-agglomerated TFE polymer in the discharge water generated by the agglomeration is preferably low, more preferably less than 0.4% by mass, and particularly preferably less than 0.3% by mass.

Pigment-containing or filler-containing TFE polymer fine powder in which pigments and fillers are uniformly mixed can be obtained by adding pigments for coloring and various fillers for improving mechanical properties before or during the coagulation.

The wet powder (the fluoropolymer raw material slurry) obtained by coagulating the aqueous dispersion of the TFE polymer is usually heat-treated (dried) by means of vacuum, high-frequency waves, hot air, or the like while keeping the wet powder in a state in which the wet powder is less fluidized, preferably in a stationary state. Friction between the powder particles especially at high temperature usually has unfavorable effects on the TFE polymer in the form of fine powder. This is because the particles made of such a TFE polymer are easily formed into fibrils even with a small shearing force and lose its original, stable particulate structure.

The drying is performed at the same temperature as the heat treatment described above, i.e., a drying temperature of 10 to 300°C, preferably 100 to 300°C.

The resulting fine powder of the TFE polymer is preferred for molding, and suitable applications thereof include tubes for hydraulic systems or fuel systems of aircraft or automobiles, flexible hoses for chemicals or vapors, and electric wire coating.

Also preferably, the aqueous dispersion of the TFE polymer obtained by the polymerization is mixed with a nonionic surfactant to stabilize and further concentrate the aqueous dispersion, then further mixed with, depending on the purpose, an organic or inorganic filler to form a composition, and used in a variety of applications. The composition, when applied to a metal or ceramic substrate, can provide a coating surface having non-stickiness, a low coefficient of friction, and excellent gloss, smoothness, abrasion resistance, weather resistance, and heat resistance, which is suitable for coating of rolls, cooking utensils, and the like, and impregnation processing of glass cloth, and the like.

The aqueous dispersion may also be used to prepare an organosol of the TFE polymer. The organosol may contain the TFE polymer and an organic solvent, and examples of the organic solvent include ether-based solvents, ketone-based solvents, alcohol-based solvents, amide-based solvents, ester-based solvents, aliphatic hydrocarbon-based solvents, aromatic hydrocarbon-based solvents, and halogenated hydrocarbon-based solvents. Suitably used are N-methyl-2-pyrrolidone and dimethylacetamide. The organosol may be prepared by the method disclosed in, for example, International Publication No. WO 2012/002038.

The aqueous dispersion of the TFE polymer or the fine powder of the TFE polymer is also preferably used as a processing aid. When used as a processing aid, the aqueous dispersion or the fine powder is mixed with a host polymer or the like to improve the melt strength of the host polymer in melt processing and to improve the mechanical strength, electric properties, incombustibility, anti-drop performance during combustion, and slidability of the resulting polymer.

The aqueous dispersion of the TFE polymer or the fine powder of the TFE polymer is also preferably used as a binder for batteries or used in dustproof applications.

The aqueous dispersion of the TFE polymer or the fine powder of the TFE polymer is also preferably combined with a resin other than the TFE polymer to form a processing aid before use. The aqueous dispersion or fine powder is suitable as a raw material of the PTFEs disclosed in, for example, Japanese Patent Laid-Open No. 11-49912, U.S. Patent No. 5,804,654, Japanese Patent Laid-Open No. 11-29679, and Japanese Patent Laid-Open No. 2003-2980. Processing aids containing the aqueous dispersion or the fine powder are not inferior in any way to the processing aids disclosed in the publications.

The aqueous dispersion of the TFE polymer is also preferably mixed with an aqueous dispersion of a melt-fabricable fluororesin so that the components coagulate to form co-coagulated powder. The co-coagulated powder is suitable as a processing aid.

Examples of the melt-fabricable fluororesin include FEP, PFA, TFE/perfluoroallyl ether copolymers, ETFE, and ethylene/TFE/HFP copolymers (EFEP), and, in particular, FEP, PFA or TFE/perfluoroallyl ether copolymers is preferable.

The aqueous dispersion also preferably contains a melt-processible fluororesin. Examples of the melt-fabricable fluororesin include FEP, PFA, TFE/perfluoroallyl ether copolymers, ETFE, and EFEP. The aqueous dispersion containing the melt-fabricable fluororesin can be used as a coating material. The melt-fabricable fluororesin enables sufficient fusion of the TFE polymer particles, thus improving the film-formability and providing the resulting film with gloss.

The fluorine-free resin to which the co-coagulated powder is added may be in the form of a powder, pellets, or an emulsion. The addition is preferably performed while applying a shear force by a known method such as extrusion kneading or roll kneading from the viewpoint of sufficiently mixing each resin.

The aqueous dispersion of the TFE polymer is also preferably used as a dust suppression treatment agent. The dust suppression treatment agent can be used in a method for suppressing dust of a dust-generating substance by fibrillating a TFE polymer by mixing with a dust-generating substance and applying a compression-shearing action to the mixture at a temperature of 20 to 200°C, for example, methods disclosed in Japanese Patent No. 2827152 and Japanese Patent No. 2538783.

The aqueous dispersion of the TFE polymer can suitably be used for the dust suppression treatment agent composition disclosed in International Publication No. WO 2007/004250, and can also suitably be used for the method of dust suppression treatment disclosed in International Publication No. WO 2007/000812.

The dust suppression treatment agent is suitably used in dust suppression treatment in the fields of building-products, soil stabilizers, solidifying materials, fertilizers, landfill of incineration ash and harmful substance, explosion proof equipment, cosmetics, and sands for pet excretion represented by cat sand.

The aqueous dispersion of the TFE polymer is also preferably used as a material for producing TFE polymer fibers by a dispersion spinning method. The dispersion spinning method is a method in which the aqueous dispersion of the TFE polymer and an aqueous dispersion of a matrix polymer are mixed and the mixture is extruded to form an intermediate fiber structure, and then the intermediate fiber structure is fired to decompose the matrix polymer and sinter the TFE polymer particles, thereby providing TFE polymer fibers.

The high-molecular-weight PTFE powder obtained by polymerization has stretchability and non melt processability, and is also useful as a material for a stretched body (porous body).

When the stretched body of the present disclosure is a film (PTFE stretched film or PTFE porous film), the stretched body can be formed by stretching by a known PTFE stretching method. Stretching allows easy formation of fibrils of high-molecular-weight PTFE, resulting in a PTFE porous body (film) including nodes and fibers.

Preferably, roll-stretching a sheet-shaped or rod-shaped paste extrudate in an extruding direction can provide a uniaxially stretched film.

Moreover, stretching in a transverse direction using, for example, a tenter can provide a biaxially stretched film. Prebaking treatment is also preferably performed before stretching.

This PTFE stretched body is a porous body having a high porosity, and can suitably be used as a filter material for a variety of microfiltration filters such as air filters and chemical filters and a support member for polymer electrolyte films.

The stretched body is also useful as a material of products used in the fields of textiles, of medical treatment, of electrochemistry, of sealants, of air filters, of ventilation/internal pressure adjustment, of liquid filters, and of consumer goods or the like.

Examples of specific applications will now be provided below.

### - Electrochemical field

Examples of applications in this field include prepregs for dielectric materials, EMI-shielding materials, and heat conductive materials. More specifically, examples include printed circuit boards, electromagnetic interference shielding materials, insulating heat conductive materials, and insulating materials.

### - Sealant field

Examples of applications in this field include gaskets, packings, pump diaphragms, pump tubes, and sealants for aircraft.

### - Air filter field

Examples of applications in this field include ULPA filters (for production of semiconductors), HEPA filters (for hospitals and for production of semiconductors), cylindrical cartridge filters (for industries), bag filters (for industries), heat-resistant bag filters (for exhaust gas treatment), heat-resistant pleated filters (for exhaust gas treatment), SINBRAN filters (for industries), catalyst filters (for exhaust gas treatment), adsorbent-attached filters (for HDD embedment), adsorbent-attached vent filters (for HDD embedment), vent filters (for HDD embedment, for example), filters for cleaners (for cleaners), general-purpose multilayer felt materials, cartridge filters for GT (for interchangeable items for GT), and cooling filters (for housings of electronic devices).

### - Ventilation/internal pressure adjustment field

Examples of applications in this field include materials for freeze drying such as vessels for freeze drying, ventilation materials for automobiles for electronic circuits and lamps, applications relating to vessels such as vessel caps, protective ventilation for electronic devices, including small devices such as tablet terminals and mobile phone terminals, and ventilation for medical treatment.

### - Liquid filter field

Examples of applications in this field include liquid filters for semiconductors (for production of semiconductors), hydrophilic PTFE filters (for production of semiconductors), filters for chemicals (for chemical liquid treatment), filters for pure water production lines (for production of pure water), and back-washing liquid filters (for treatment of industrial discharge water).

### - Consumer goods field

Examples of applications in this field include clothes, cable guides (movable wires for motorcycles), clothes for motor cyclists, cast liners (medical supporters), filters for cleaners, bagpipes (musical instruments), cables (such as signal cables for guitars), and strings (for string instrument).

### - Textile field

Examples of applications in this field include PTFE fibers (fiber materials), machine threads (textiles), weaving yarns (textiles), and ropes.

### - Medical treatment field

Examples of applications in this field include implants (stretched articles), artificial blood vessels, catheters, general surgical operations (tissue reinforcing materials), products for head and neck (dura mater alternatives), oral health (tissue regenerative medicine), and orthopedics (bandages).

Low molecular weight PTFE can also be produced by the production method of the present disclosure.

Low molecular weight PTFE may be produced by polymerization, and can also be produced by reducing the molecular weight of high molecular weight PTFE obtained by polymerization by a known method (thermal decomposition, radiation decomposition, or the like).

A low-molecular-weight PTFE having a molecular weight of 600,000 or less (also referred to as PTFE micropowder) has excellent chemical stability and a very low surface energy, and is less likely to generate fibrils, and is therefore suitably used as an additive for improving the lubricity and the texture of the coating surface in production of plastics, inks, cosmetics, coating materials, greases, parts of office automation equipment, and toners (e.g., see Japanese Patent Laid-Open No. 10-147617).

Further, low molecular weight PTFE may be obtained by dispersing the polymerization initiator and the polymer (I) in an aqueous medium in the presence of a chain transfer agent, and polymerizing TFE or polymerizing TFE and a monomer that is copolymerizable with TFE. In this case, the chain transfer agent is preferably at least one selected from the group consisting of alkanes having 2 to 4 carbon atoms. Specifically, methane, ethane, propane, butane, and isobutane are more preferable, and ethane and propane are still more preferable. In this case, the amount of the chain transfer agent is preferably 10 mass ppm or more or more than 10 mass ppm based on the aqueous medium.

When using the low molecular weight PTFE obtained by polymerization as a powder, powder particles can be obtained by coagulating the aqueous dispersion.

In the present disclosure, high molecular weight PTFE means non melt-processible and fibrillatable PTFE. On the other hand, low molecular weight PTFE means melt-fabricable and non-fibrillatable PTFE.

Being non-melt processible means a property that the melt flow rate cannot be measured at a temperature higher than the crystal melting point in accordance with ASTM D 1238 and D 2116.

The presence or absence of the fibrillation ability can be determined by "paste extrusion", a representative method of molding a "high-molecular-weight PTFE powder" which is a powder made from a polymer of TFE. Usually, high molecular weight PTFE can be paste-extruded when it is fibrillatable. When a non-sintered molded product obtained by paste extrusion shows substantially no strength or elongation (for example, when it shows an elongation of 0% and is broken when stretched), it can be regarded as non-fibrillatable.

High molecular weight PTFE preferably has a standard specific gravity (SSG) of 2.130 to 2.280. The standard specific gravity is determined by the water replacement method in accordance with ASTM D 792 using a sample molded in accordance with ASTM D 4895-89. The "high molecular weight" in the present disclosure means that the standard specific gravity is within the above range.

The low molecular weight PTFE has a melt viscosity of 1 × 10² to 7 × 10⁵ Pa·s at 380°C. The "low molecular weight" herein means that a melt viscosity is within the above range. The melt viscosity is a value measured while maintaining 2 g of a sample, which is heated for 5 minutes at 380°C in advance, at that temperature under a load of 0.7 MPa in accordance with ASTM D 1238 using a flow tester (manufactured by Shimadzu Corporation) and a 2ϕ-8L die.

High molecular weight PTFE has a melt viscosity significantly higher than that of low molecular weight PTFE, and it is difficult to accurately measure the melt viscosity thereof. On the other hand, the melt viscosity of low molecular weight PTFE is measurable, but it is difficult to obtain a formed article usable in the measurement of standard specific gravity from low molecular weight PTFE, and it is thus difficult to measure the accurate standard specific gravity thereof. Accordingly, in the present disclosure, the standard specific gravity is used as an index of the molecular weight of high molecular weight PTFE, while the melt viscosity is used as an index of the molecular weight of low molecular weight PTFE. It should be noted that there is no known measuring method for directly specifying the molecular weight of either high molecular weight PTFE or low molecular weight PTFE.

High molecular weight PTFE preferably has a peak temperature of 333 to 347°C, and more preferably 335 to 345°C. Low molecular weight PTFE preferably has a peak temperature of 322 to 333°C, and more preferably 324 to 332°C. The peak temperature can be specified as a temperature corresponding to the maximum value appearing in a differential thermal analysis (DTA) curve obtained by raising the temperature of PTFE, which has no history of being heated to a temperature of 300°C or higher, under a condition of 10°C/min using TG-DTA (thermogravimetric - differential thermal analyzer).

The peak temperature of PTFE may be 322 to 347°C.

When PTFE is high molecular weight PTFE, the upper limit of the peak temperature of PTFE may be 347°C or lower, 346°C or lower, 345°C or lower, 344°C or lower, 343°C or lower, 342°C or lower, 341°C or lower, or 340°C or lower.

The lower limit of the peak temperature of PTFE when PTFE is high molecular weight PTFE may be 333°C or higher, or 335°C or higher.

The upper limit of the peak temperature of PTFE when PTFE is low molecular weight PTFE may be 333°C or lower, or 332°C or lower.

The lower limit of the peak temperature of PTFE when PTFE is low molecular weight PTFE may be 322°C or higher, or 324°C or higher.

The average primary particle size of primary particles of low molecular weight PTFE is preferably 10 to 200 nm and more preferably 20 nm or more, and is more preferably 140 nm or less, even more preferably 150 nm or less, and particularly preferably 90 nm or less. The relatively small average primary particle size of primary particles can be obtained by, for example, adding a modifying monomer to the polymerization system at the initial stage of polymerization of TFE.

The average primary particle size of primary particles of the low-molecular-weight PTFE can be measured by dynamic light scattering. The average primary particle size may be determined by preparing an aqueous dispersion of low molecular weight PTFE with a polymer solid concentration being regulated to about 1.0% by mass and using dynamic light scattering at a measurement temperature of 25°C with the number of scans being 70, wherein the solvent (water) has a refractive index of 1.3328 and the solvent (water) has a viscosity of 0.8878 mPa·s. In dynamic light scattering, for example, ELSZ-1000S (manufactured by Otsuka Electronics Co., Ltd.) can be used.

Preferably, the high-molecular-weight PTFE has at least one endothermic peak in a range of 333 to 347°C on a heat-of-fusion curve with a temperature-increasing rate of 10°C/min using a differential scanning calorimeter (DSC) for a PTFE which has never been heated up to 300°C or higher, and has an enthalpy of fusion of 52 mJ/mg or higher at 290 to 350°C calculated from the heat-of-fusion curve. The enthalpy of fusion of PTFE is more preferably 55 mJ/mg or more, even more preferably 58 mJ/mg or more.

The PTFE fine powder obtained as above may also be used to produce unsintered tape (green tape).

### (II) Melt-fabricable fluororesin

(1) In the production method of the present disclosure, the polymerization for FEP is preferably performed at a polymerization temperature of 10 to 150°C at a polymerization pressure of 0.3 to 6.0 MPaG.

FEP preferably has a monomer composition ratio (% by mass) of TFE:HFP = (60 to 95):(5 to 40), and more preferably (85 to 92) : (8 to 15).

In addition to TFE and HFP, by polymerizing a further monomer that is copolymerizable with these monomers, a copolymer of TFE, HFP and a further monomer may be obtained as FEP. Examples of the further monomer include the above-described fluorine-containing monomers (excluding TFE and HFP) and fluorine-free monomers described above. One further monomer may be used singly, or multiple further monomers may be used in combination. The further monomer is preferably perfluoro(alkyl vinyl ether). The content of the further-monomer unit in FEP may be 0.1 to 2% by mass based on all monomer units.

In the polymerization of FEP, the polymer (I) can be used within the use range in the production method of the present disclosure, and is usually added in an amount of 0.0001 to 10% by mass based on 100% by mass of the aqueous medium.

In the polymerization for FEP, the chain transfer agent used is preferably cyclohexane, methanol, ethanol, propanol, ethane, propane, butane, pentane, hexane, carbon tetrachloride, chloroform, methylene chloride, methyl chloride, or the like, and the pH buffer used is preferably ammonium carbonate, disodium hydrogen phosphate, or the like.

The aqueous dispersion of FEP may optionally be subjected to post-treatment such as concentration, and then the concentrate may be dried and powdered, and the powder may be melt-extruded into pellets. The aqueous medium in the FEP aqueous dispersion may optionally contain an additive such as a nonionic surfactant, and may contain a water-soluble organic solvent such as a water-soluble alcohol or may be free from a water-soluble organic solvent.

The melt extrusion may be performed under any appropriately set extrusion conditions usually capable of providing pellets.

In the production method of the present disclosure, the resulting FEP may contain an end group such as -CF₃ or -CF₂H on at least one of the polymer main chain and a polymer side chain, but it is preferable that the content of thermally unstable groups such as -COOH, -CH₂OH, -COF, -CF=CF-, -CONH₂, or -COOCH₃ (hereinafter, referred to as an "unstable end group") is low or absent.

The unstable end group is chemically unstable, and thus not only reduces the heat resistance of the resin but also causes increase in the attenuation of the resulting electric wire.

The production method of the present disclosure is preferably performed in such a way that a polymer in which the total number of unstable end groups and -CF₂H end groups at the completion of the polymerization is 50 or less per 1 × 10⁶ carbon atoms is produced. The number of such groups is more preferably less than 20, even more preferably 5 or less, per 1 × 10⁶ carbon atoms. There may also be neither unstable end groups nor -CF₂H end groups, or that is to say, all end groups may be - CF₃ end groups.

The unstable end groups and the -CF₂H end groups may be fluorinated and converted to the -CF₃ end groups and thereby stabilized. Examples of the fluorination method include, but not limited to, methods of exposing the polymer to a fluorine radical source that generates fluorine radicals under fluorination conditions. Examples of the fluorine radical source include fluorine gas, CoF₃, AgF₂, UF₆, OF₂, N₂F₂, CF₃OF, and halogen fluorides such as IF₅ and ClF₃. Of these, preferred is a method of bringing fluorine gas and the FEP into direct contact with each other. In order to control the reaction, the contact is preferably performed using a diluted fluorine gas having a fluorine gas concentration of 10 to 50% by mass. The diluted fluorine gas is obtainable by diluting fluorine gas with an inert gas such as nitrogen gas or argon gas. The fluorine gas treatment may be performed at a temperature of 100 to 250°C. The treatment temperature is not limited to this range and may be appropriately set in accordance with the situation. The fluorine gas treatment is preferably performed by feeding a diluted fluorine gas into the reactor continuously or intermittently. The form of FEP used in this fluorination treatment may be dry powder after the polymerization or melt-extruded pellets.

The FEP obtained has good moldability, is less likely to cause forming defects, and, in addition, has properties such as good heat resistance, chemical resistance, solvent resistance, insulation, and electric properties.

The FEP powder may be obtained by drying the FEP and reducing the dried FEP to powder.

The powder may be fluorinated. The fluorinated powder may be produced by a method involving feeding a fluorine gas to the powder obtained by the above-described method for producing a powder to fluorinate the powder to obtain a fluorinated powder.

The FEP pellets may be obtained by pelletizing the FEP.

The pellets may be fluorinated. The fluorinated pellets may be produced by a method involving feeding a fluorine gas to the pellets obtained by the above-described method for producing pellets to fluorinate the pellets to obtain fluorinated pellets.

Thus, this FEP may be used in production of a variety of formed articles such as coating materials for electric wires, foamed electric wires, cables, and wires, tubes, films, sheets, and filaments.

(2) In the production method of the present disclosure, the polymerization for a TFE/perfluoro(alkyl vinyl ether) copolymer such as PFA or MFA and a TFE/perfluoroallyl ether copolymer is usually preferably carried out at a polymerization temperature of 10 to 100°C at a polymerization pressure of 0.3 to 6.0 MPaG.

The TFE/perfluoro(alkyl vinyl ether) copolymer preferably has a monomer composition ratio (mol%) of TFE:perfluoro(alkyl vinyl ether) = (90 to 99.7): (0.3 to 10), and more preferably (97 to 99):(1 to 3) . The perfluoro(alkyl vinyl ether) used is preferably represented by the formula: CF₂=CFORf⁴, wherein Rf⁴ is a perfluoroalkyl group having 1 to 6 carbon atoms.

In addition to TFE and perfluoro(alkyl vinyl ether), by polymerizing a further monomer that is copolymerizable with these monomers, a copolymer of TFE, perfluoro (alkyl vinyl ether), and the further monomer may be obtained as a TFE/perfluoro (alkyl vinyl ether) copolymer. Examples of the further monomer include the fluorine-containing monomers (excluding TFE and perfluoro (alkyl vinyl ether)) and fluorine-free monomers described above. One further monomer may be used singly, or multiple further monomers may be used in combination. The content of the further-monomer unit in the TFE/perfluoro (alkyl vinyl ether) copolymer may be 0.1 to 2% by mass based on all monomer units.

The TFE/perfluoroallyl ether copolymer preferably has a monomer composition ratio (mol%) of TFE:perfluoroallyl ether = (90 to 99.7):(0.3 to 10), and more preferably (97 to 99) : (1 to 3). The perfluoroallyl ether used is preferably represented by the formula: CF₂=CFCF₂ORf⁴, wherein Rf⁴ is a perfluoroalkyl group having 1 to 6 carbon atoms.

In addition to TFE and perfluoroallyl ether, by polymerizing a further monomer that is copolymerizable with these monomers, a copolymer of TFE, perfluoroallyl ether, and the further monomer may be obtained as a copolymer of TFE/perfluoroallyl ether. Examples of the further monomer include the fluorine-containing monomers (excluding TFE and perfluoroallyl ether) and fluorine-free monomers described above. One further monomer may be used singly, or multiple further monomers may be used in combination. The content of the further-monomer unit in the TFE/perfluoroallyl ether copolymer may be 0.1 to 2% by mass based on all monomer units.

In the polymerization for the TFE/perfluoro(alkyl vinyl ether) copolymer and the TFE/perfluoroallyl ether copolymer, the polymer (I) may be used within the use range in the production method of the present disclosure, and is usually preferably added in an amount of 0.0001 to 10% by mass based on 100% by mass of the aqueous medium.

In the polymerization for the TFE/perfluoro(alkyl vinyl ether) copolymer and the TFE/perfluoroallyl ether copolymer, the chain transfer agent used is preferably cyclohexane, methanol, ethanol, propanol, propane, butane, pentane, hexane, carbon tetrachloride, chloroform, methylene chloride, methyl chloride, methane, ethane, or the like, and the pH buffer used is preferably ammonium carbonate, disodium hydrogen phosphate, or the like.

The aqueous dispersion of the TFE/perfluoro(alkyl vinyl ether) copolymer such as PFA or MFA and the TFE/perfluoroallyl ether copolymer may optionally be subjected to post-treatment such as concentration, and then the concentrate may be dried and powdered, and the powder may be melt-extruded into pellets. The aqueous medium in the aqueous dispersion may optionally contain an additive such as a nonionic surfactant, and may contain a water-soluble organic solvent such as a water-soluble alcohol or may be free from a water-soluble organic solvent.

The melt extrusion may be performed under any appropriately set extrusion conditions usually capable of providing pellets.

In order to improve the heat resistance of the copolymer and to enhance a chemical permeation suppression effect of a formed article, the copolymer is preferably subjected to a fluorine gas treatment.

The fluorine gas treatment is carried out by bringing fluorine gas into contact with the copolymer. However, since the reaction with fluorine is extremely exothermic, it is preferable to dilute fluorine with inert gas such as nitrogen. The amount of fluorine in the fluorine gas/inert gas mixture is 1 to 100% by mass, preferably 10 to 25% by mass. The treatment temperature is 150 to 250°C, preferably 200 to 250°C and the fluorine gas treatment duration is 3 to 16 hours, preferably 4 to 12 hours. The fluorine gas treatment is performed at a gas pressure in the range of 1 to 10 atm, preferably atmospheric pressure. In the case of using a reactor at atmospheric pressure, the fluorine gas/inert gas mixture may be continuously passed through the reactor. This results in conversion of unstable ends of the copolymer into -CF₃ ends, thermally stabilizing the copolymer.

The copolymer and the composition thereof may be molded by compression molding, transfer molding, extrusion molding, injection molding, blow molding, or the like as in the case of conventional PFA.

Such a molding technique can provide a desired formed article, and examples of the formed article include sheets, films, packings, round bars, square bars, pipes, tubes, round tanks, square tanks, tanks, wafer carriers, wafer boxes, beakers, filter housings, flowmeters, pumps, valves, cocks, connectors, nuts, electric wires, and heat-resistant electric wires.

Preferable among these are tubes, pipes, tanks, connectors, and the like to be used in a variety of chemical reaction devices, semiconductor manufacturing devices, and acidic or alkaline chemical feeding devices or the like each requiring chemical impermeability.

The aqueous dispersion of the TFE/perfluoro(alkyl vinyl ether) copolymer such as PFA or MFA and the TFE/perfluoroallyl ether copolymer may also be appropriately mixed with a nonionic surfactant, and optionally polyethersulfone, polyamide-imide, and/or polyimide, and metal powder are dissolved or dispersed in an organic solvent, and thereby a primer composition can be obtained. This primer composition may be used in a method for applying a fluororesin to a metal surface, wherein the method includes applying the primer composition to a metal surface, applying a melt-fabricable fluororesin composition to the resulting primer layer, and firing the melt-fabricable fluororesin composition layer together with the primer layer.

(3) In the production method of the present disclosure, the polymerization for ETFE is preferably performed at a polymerization temperature of 10 to 100°C at a polymerization pressure of 0.3 to 2.0 MPaG.

The ETFE preferably has a monomer composition ratio (mol%) of TFE:ethylene = (50 to 99): (50 to 1).

In addition to ethylene and TFE, by polymerizing a further polymer that is copolymerizable with these monomers, a copolymer of ethylene, TFE and a further monomer may be obtained as ETFE. Examples of the further monomer include the fluorine-containing monomers (excluding TFE) and fluorine-free monomers (excluding ethylene) described above. One further monomer may be used singly, or multiple further monomers may be used in combination.

The further monomer is preferably hexafluoropropylene, perfluorobutyl ethylene, perfluorohexyl ethylene, 3,3,4,4,5,5,6,6,7,7,8,8,8-tridecafluorooct-1-ene, 2,3,3,4,4,5,5-heptafluoro-1-pentene (CH₂=CFCF₂CF₂CF₂H), or 2-trifluoromethyl-3,3,3-trifluoropropene ((CF₃)₂CF=CH₂).

The content of the further-monomer unit in ETFE may be 0 to 20% by mass based on all monomer units. A preferable mass ratio is TFE:ethylene:further monomer=(63-94): (27-2): (1-10).

In the polymerization for the ETFE, the polymer (I) can be used within the use range in the production method of the present disclosure, and is usually added in an amount of 0.0001 to 10% by mass based on 100% by mass of the aqueous medium.

In the polymerization for ETFE, the chain transfer agent used is preferably cyclohexane, methanol, ethanol, propanol, ethane, propane, butane, pentane, hexane, carbon tetrachloride, chloroform, methylene chloride, methyl chloride, or the like.

The aqueous dispersion of ETFE may optionally be subjected to post-treatment such as concentration, and then the concentrate may be dried and powdered, and the powder may be melt-extruded into pellets. The aqueous medium in the aqueous dispersion may optionally contain an additive such as a nonionic surfactant, and may contain a water-soluble organic solvent such as a water-soluble alcohol or may be free from a water-soluble organic solvent.

The melt extrusion may be performed under any appropriately set extrusion conditions usually capable of providing pellets.

The ETFE may be extrusion-molded into a sheet. In other words, powder or pellets of ETFE in a molten state may be continuously extruded through a die and then cooled to provide a sheet-shaped formed article. The ETFE may be mixed with an additive.

Known additives may be incorporated as appropriate. Specific examples include ultraviolet absorbers, photostabilizers, antioxidants, infrared absorbers, flame retarders, flame-retardant fillers, organic pigments, inorganic pigments, and dyes. From the viewpoint of excellent weather resistance, inorganic additives are preferable.

The content of the additive in the ETFE sheet is preferably 20% by mass or less, and particularly preferably 10% by mass or less, based on the total mass of the ETFE sheet.

The ETFE sheet has excellent mechanical strength and appearance, and thus can suitably be used for film materials (e.g., roof materials, ceiling materials, outer wall materials, inner wall materials, and coating materials) of film-structured buildings (e.g., sports facilities, gardening facilities, and atriums).

In addition to the film materials of film-structured buildings, the ETFE sheet is also useful for, for example, outdoor boards (e.g., noise-blocking walls, windbreak fences, breakwater fences, roof panels of carports, shopping arcades, footpath walls, and roof materials), shatter-resistant window films, heat-resistant waterproof sheets, building materials (e.g., tent materials of warehouse tents, film materials for shading, partial roof materials for skylights, window materials alternative to glass, film materials for flame-retardant partitions, curtains, outer wall reinforcement, waterproof films, anti-smoke films, non-flammable transparent partitions, road reinforcement, interiors (e.g., lighting, wall surfaces, and blinds), exteriors (e.g., tents and signboards)), living and leisure goods (e.g., fishing rods, rackets, golf clubs, and screens), automobile materials (e.g., hoods, damping materials, and bodies), aircraft materials, shipment materials, exteriors of home appliances, tanks, vessel inner walls, filters, film materials for construction works, electronic materials (e.g., printed circuit boards, circuit boards, insulating films, and release films), surface materials for solar cell modules, mirror protection materials for solar thermal energy, and surface materials for solar water heaters.

(4) The production method of the present disclosure may be used to produce an electrolyte polymer precursor. In the production method of the present disclosure, the polymerization for the electrolyte polymer precursor is preferably performed at a polymerization temperature of 10 to 100°C at a polymerization pressure of 0.1 to 2.0 MPaG. The electrolyte polymer precursor is composed of a monomer containing a functional group represented by -SO₂X¹⁵¹, -COZ¹⁵¹, or -POZ¹⁵²Z¹⁵³ (wherein X¹⁵¹, Z¹⁵¹, Z¹⁵², and Z¹⁵³ are as will be described below), and can be converted to an ion-exchangeable polymer through hydrolysis treatment.

Examples of the monomer used in the electrolyte polymer precursor include
monomers represented by general formula (150): CF₂=CF-O-(CF₂CFY¹⁵¹-O)ₙ-(CFY¹⁵²)ₘ-A¹⁵¹
wherein Y¹⁵¹ represents a fluorine atom, a chlorine atom, an - SO₂F group, or a perfluoroalkyl group; the perfluoroalkyl group optionally contains ether oxygen and an -SO₂F group; n represents an integer of 0 to 3; n Y¹⁵¹ groups are optionally the same or different; Y¹⁵² represents a fluorine atom, a chlorine atom, or an -SO₂F group; m represents an integer of 1 to 5; m Y¹⁵² groups are optionally the same or different; A¹⁵¹ represents -SO₂X¹⁵¹,-COZ¹⁵¹, or -POZ¹⁵²Z¹⁵³; X¹⁵¹ represents F, Cl, Br, I, -OR¹⁵¹, or-NR¹⁵²R¹⁵³; Z¹⁵¹, Z¹⁵², and Z¹⁵³ are the same or different, and each independently represent -NR¹⁵⁴R¹⁵⁵ or -OR¹⁵⁶; and R¹⁵¹, R¹⁵², R¹⁵³, R¹⁵⁴, R¹⁵⁵, and R¹⁵⁶ are the same or different, and each represent H, ammonium, an alkali metal, or an alkyl group, aryl group or sulfonyl-containing group optionally containing a fluorine atom. Examples of the monomer used in the electrolyte polymer precursor include the compound containing two fluorosulfonyl groups described in International Publication No. WO 2007/013532, and the perfluoromonomer having an -SO₂F group and a dioxolane ring described in International Publication No. WO 2014/175123. The electrolyte polymer precursor preferably has a monomer composition ratio (mol%) of TFE:vinyl ether = (50 to 99):(50 to 1), and more preferably TFE:vinyl ether = (50 to 93):(50 to 7).

The electrolyte polymer precursor may be modified with a third monomer within a range of 0 to 20% by mass of all monomers. Examples of the third monomer include multifunctional monomers such as CTFE, vinylidene fluoride, perfluoroalkyl vinyl ether, perfluorobutenyl vinyl ether; cyclic monomers such as perfluoro-2,2-dimethyl-1,3-dioxolane and perfluoro-2-methylene-4-methyl-1,3-dioxole; and divinylbenzene.

The electrolyte polymer precursor thereby obtained may be molded into a film, followed by hydrolysis using an alkali solution and a treatment using a mineral acid, and thereby used as a polymer electrolyte film for fuel cells, electrolysis devices, redox flow batteries, and the like.

The electrolyte polymer precursor may be hydrolyzed using an alkali solution while the dispersed state thereof is maintained, thereby providing an electrolyte polymer dispersion.

This dispersion may be then heated to 120°C or higher in a pressurized vessel and thereby dissolved in, for example, a solvent mixture of water and an alcohol, i.e., converted into a solution state.

The solution thereby obtained may be used as a binder for electrodes and, also, may be combined with a variety of additives and cast to form a film, and the film may be used for antifouling films, organic actuators, or the like.

### (5) TFE/VDF copolymer

In the production method of the present disclosure, the polymerization for the TFE/VDF copolymer may be performed at any polymerization temperature, such as 0 to 100°C. The polymerization pressure is determined as appropriate in accordance with the other polymerization conditions such as the polymerization temperature, and may be usually 0 to 9.8 MPaG.

The TFE/VDF copolymer preferably has a monomer composition ratio (mol%) of TFE:VDF = (5 to 90):(95 to 10). The TFE/VDF copolymer may be modified with a third monomer within a range of 0 to 50 mol% of all monomers. The composition ratio thereof is preferably TFE:ethylene:third monomer = (30 to 85) : (10 to 69.9) : (0.1 to 10) .

The third monomer is preferably a monomer represented by
the formula: CX¹¹X¹²-CX¹³(CX¹⁴X¹⁵)ₙ₁₁X¹⁶
   wherein X¹¹ to X¹⁶ are the same or different, and each represent H, F, or Cl; n11 represents an integer of 0 to 8, provided that TFE and VDF are excluded; or
a monomer represented by the formula: CX²¹X²²=CX²³-O(CX²⁴X²⁵)ₙ₂₁X²⁶
   wherein X²¹ to X²⁶ are the same as or different from each other, and each represent H, F, or Cl; and n21 represents an integer of 0 to 8.

The third monomer may be a fluorine-free ethylenic monomer. From the viewpoint of maintaining the heat resistance and the chemical resistance, the fluorine-free ethylenic monomer is preferably selected from ethylenic monomers having 6 or less carbon atoms. Examples include ethylene, propylene, 1-butene, 2-butene, vinyl chloride, vinylidene chloride, alkyl vinyl ethers (e.g., methyl vinyl ether, ethyl vinyl ether, and propyl vinyl ether), maleic acid, itaconic acid, 3-butenoic acid, 4-pentenoic acid, vinylsulfonic acid, acrylic acid, and methacrylic acid.

In the polymerization for the TFE/VDF copolymer, the polymer (I) can be used within the use range in the production method of the present disclosure, and is usually added in an amount of 0.0001 to 5% by mass based on 100% by mass of the aqueous medium.

The TFE/VDF copolymer obtained by polymerization may be amidated by being brought into contact with a nitrogen compound capable of generating ammonia water, ammonia gas, or ammonia.

The TFE/VDF copolymer obtained by the above-described method may also preferably be used as a material for providing TFE/VDF copolymer fibers by a spinning-drawing method. The spinning-drawing method is a method for obtaining a TFE/VDF copolymer fiber by melt spinning a TFE/VDF copolymer, cooling and solidifying it to obtain an undrawn yarn, and then running the undrawn yarn in a heating cylinder to draw the undrawn yarn.

The TFE/VDF copolymer may be dissolved in an organic solvent to provide a solution of the TFE/VDF copolymer. Examples of the organic solvent include nitrogen-containing organic solvents such as N-methyl-2-pyrrolidone, N,N-dimethyl acetamide, and dimethyl formamide; ketone-based solvents such as acetone, methyl ethyl ketone, cyclohexanone, and methyl isobutyl ketone; ester-based solvents such as ethyl acetate and butyl acetate; ether-based solvents such as tetrahydrofuran and dioxane; and general-purpose organic solvents having a low boiling point such as solvent mixtures thereof. The solution may be used as a binder for batteries.

The aqueous dispersion of the TFE/VDF copolymer may preferably be used to coat a porous substrate formed from a polyolefin resin to provide a composite porous film. The aqueous dispersion may also preferably contain inorganic particles and/or organic particles dispersed therein and be used to coat a porous substrate to provide a composite porous film. The composite porous film thereby obtained may be used as a separator for lithium secondary batteries.

The powder of the melt-fabricable fluororesin is suitably used as a powdery coating material. When applied to a substrate, the powdery coating material made of the melt-fabricable fluororesin powder can provide a film having a smooth surface. The melt-fabricable fluororesin powder having an average particle size of 1 µm or more and less than 100 µm is particularly suitable as a powdery coating material used for electrostatic coating. The melt-fabricable fluororesin powder having an average particle size of 100 µm or more and 1,000 µm or less is particularly suitable as a powdery coating material used for rotational coating or rotational molding.

When the fluoropolymer is subjected to coagulation, washing, drying, or the like, discharge water or off gas is generated. The polymer (I), decomposition products and by-products of the polymer (I) by-produced from the polymer (I), residual monomers, and the like may be collected from discharge water generated in the coagulation or the washing and/or from off gas generated in the drying, and then purified to reuse the polymer (I), the decomposition products and by-products of the polymer (I) by-produced from the polymer (I), the residual monomers, and the like. Although the method for carrying out the above collection and purification is not limited, it may be carried out by a known method. For example, they may be performed by the methods disclosed in National Publication of International Patent Application No. 2011-520020. Examples thereof further include the methods disclosed in U.S. Patent Application Publication No. 2007/15937, U.S. Patent Application Publication No. 2007/25902, and U.S. Patent Application Publication No. 2007/27251. Specific examples of the methods are as follows.

An example of the method of collecting the polymer (I), the decomposition products and by-products of the polymer (I) by-produced from the polymer (I), the residual monomers, and the like from discharge water is a method in which the discharge water is brought into contact with adsorbent particles formed of ion exchange resin, activated carbon, silica gel, clay, zeolite, or the like, so that the particles are allowed to adsorb the polymer (I) and the others, and the discharge water and the adsorbent particles are then separated. Incinerating the adsorbent particles having adsorbed the polymer (I) and the like can prevent emission of the polymer (I) and the like into the environment.

Alternatively, the polymer (I) and the others may be removed and eluted by a known method from the ion exchange resin particles having adsorbed the polymer (I) and the others, and collected. For example, in the case of using anion exchange resin particles as the ion exchange resin particles, the polymer (I) and the others can be eluted by bringing a mineral acid into contact with an anion exchange resin. When a water-soluble organic solvent is added to the resulting eluate, the mixture is usually separated into two phases. Since the lower phase contains the polymer (I) and the others, it is possible to collect the polymer (I) and the others by collecting and neutralizing the lower phase. Examples of the water-soluble organic solvent include polar solvents such as alcohols, ketones, and ethers.

Other methods of collecting the polymer (I) and the others from ion exchange resin particles include a method of using an ammonium salt and a water-soluble organic solvent and a method of using an alcohol and, if necessary, an acid. In the latter method, ester derivatives of the polymer (I) and the others are generated, and thus, they can easily be separated from the alcohol by distillation.

When the discharge water contains fluoropolymer particles and other solids, they are preferably removed before the discharge water and the adsorbent particles are brought into contact with each other. Examples of methods of removing the fluoropolymer particles and other solids include a method of adding an aluminum salt, for example, to deposit these components, and then separating the discharge water and the deposits, and an electrocoagulation method. The components may also be removed by a mechanical method, and examples thereof include a crossflow filtration method, a depth filtration method, and a precoat filtration method.

From the viewpoint of productivity, the discharge water preferably contains the fluoropolymer in a non-agglomerated form in a low concentration, more preferably less than 0.4% by mass, and particularly preferably less than 0.3% by mass.

An example of the method of collecting the polymer (I) and the others from the off gas is a method in which a scrubber is brought into contact with deionized water, an alkaline aqueous solution, an organic solvent such as a glycol ether solvent, or the like to provide a scrubber solution containing the polymer (I) and the others. When the alkaline aqueous solution used is a highly concentrated alkaline aqueous solution, the scrubber solution can be collected in a state where the polymer (I) and the others are phase-separated, and thus the polymer (I) and the others can be easily collected and reused. Examples of the alkali compound include alkali metal hydroxides and quaternary ammonium salts.

The scrubber solution containing the polymer (I) and the others may be concentrated using a reverse osmosis membrane, for example. The concentrated scrubber solution usually contains fluoride ions. Still, the fluoride ions may be removed by adding alumina after the concentration so that the polymer (I) and the others can easily be reused. Alternatively, the scrubber solution may be brought into contact with adsorbent particles so that the adsorbent particles can adsorb the polymer (I) and the others, and thereby the polymer (I) and the others may be collected by the aforementioned method.

The polymer (I) and the like collected by any of the methods may be reused in the production of fluoropolymer.

While embodiments have been described above, it will be understood that various changes in form and detail can be made without departing from the gist and scope of the claims.

### EXAMPLES

Next, embodiments of the present disclosure will now be described by way of Examples, but the present disclosure is not limited only to the Examples.

Various numerical values in the Examples were measured by the following methods.

### <Solid concentration>

In an air dryer, 1 g of an aqueous dispersion was dried at 150°C for 60 minutes, and the proportion of the mass of nonvolatile matter to the mass of the aqueous dispersion (1 g) was expressed in percentage and taken as the solid concentration thereof.

### <Average primary particle size>

The average primary particle size was measured by dynamic light scattering. In dynamic light scattering, an aqueous dispersion having a solid concentration that was regulated to about 1.0% by mass was prepared, and measurements were performed using ELSZ-1000S (manufactured by Otsuka Electronics Co., Ltd.) at 25°C with the number of scans being 70. The solvent (water) had a refractive index of 1.3328, and the solvent (water) had a viscosity of 0.8878 mPa·s.

### <Aspect ratio>

The aspect ratio was determined by observing the aqueous dispersion diluted to have a solid concentration of about 1% by mass with a scanning electron microscope (SEM), performing image processing on randomly selected 400 or more particles, and averaging the ratios of the major axis to the minor axis.

### <Standard specific gravity (SSG)>

Using a sample formed in accordance with ASTM D 4895-89, the SSG was determined by the water replacement method in accordance with ASTM D-792.

### <Peak temperature>

The temperature corresponding to the maximum value appearing in a differential thermal analysis (DTA) curve obtained by raising the temperature of PTFE powder at 10°C/min using TG-DTA (a thermogravimetric - differential thermal analyzer) was regarded as a peak temperature.

### <Content of modifying monomer>

The HFP content was determined by multiplying the ratio of the absorbance at 935 cm⁻¹/the absorbance at 982 cm⁻¹ by 0.3 from infrared absorbance obtained by producing a thin film disk by press-forming a PTFE powder and carrying out FT-IR measurement.

The content of CH₂=CF(CF₂OCFCF₃COONH₄) (hereinafter also referred to as a "modifying monomer a") was calculated from the amount of the entirety of the modifying monomer a charged.

In the Examples, a homopolymer (a number average molecular weight of 9 × 10⁴ and a weight average molecular weight of 19 × 10⁴) (hereinafter referred to as a "polymer A") of CH₂=CF(CF₂OCFCF₃COONH₄) (modifying monomer a) was used.

The number average molecular weight and the weight average molecular weight were determined by performing measurement by gel permeation chromatography (GPC) using GPC HLC-8020 manufactured by Tosoh Corporation, using Shodex columns manufactured by SHOWA DENKO K.K. (one GPC KF-801, one GPC KF-802, and two GPC KF-806M connected in series), and allowing tetrahydrofuran (THF) to flow at a flow rate of 1 ml/min as the solvent, and by calculating the molecular weights using monodisperse polystyrene as the standard.

### Comparative Example 1

To an SUS reactor having an internal volume of 6 L and equipped with a stirrer, 3,560 g of deionized water, 104 g of paraffin wax, 5.37 g of the polymer A, and 77.3 mg of the modifying monomer a were added. Aqueous ammonia was added to regulate the pH to 9.1. Then, the contents of the reactor were suctioned while being heated to 70°C and, at the same time, the reactor was purged with TFE to remove oxygen in the reactor, and the contents were stirred. After adding 0.8 g of HFP to the reactor, TFE was added until the pressure reached 0.73 MPaG. Then, 17.9 mg of an ammonium persulfate (APS) initiator dissolved in 20 g of deionized water was added to the reactor such that the pressure of the reactor was 0.83 MPaG. After the initiator was added, the pressure dropped, and the initiation of polymerization was observed. TFE was added to the reactor to maintain a constant pressure of 0.78 MPaG. When TFE consumed in the reaction reached about 180 g, the supply of TFE and stirring were stopped. Subsequently, the gas in the reactor was slowly released until the pressure of the reactor reached 0.02 MPaG. Thereafter, TFE was supplied until the pressure of the reactor was 0.78 MPaG, and stirring was started again to continue the reaction. When TFE consumed in the reaction reached about 540 g, 14.3 mg of hydroquinone dissolved in 20 g of deionized water was added to the reactor, and the reaction was continued. When TFE consumed in the reaction reached about 1,250 g, the supply of TFE was stopped, stirring was stopped, and the reaction was terminated. Thereafter, the reactor was evacuated until the pressure in the reactor reached normal pressure, and the contents (the aqueous PTFE dispersion) were taken out from the reactor and cooled. The supernatant paraffin wax was removed from the aqueous dispersion of PTFE. Various physical properties of the resulting aqueous dispersion of PTFE are shown below.
Solid concentration of aqueous PTFE dispersion: 25.7% by mass
Average primary particle diameter of PTFE: 249 nm
Aspect ratio of PTFE: 1.38

The resulting aqueous PTFE dispersion, diluted with deionized water so as to have a solid concentration of 13% by mass, was introduced in a total amount of 2,700 g into an SUS coagulation tank having an internal volume of 6 L and equipped with a stirring blade, regulated to 40°C, and then coagulated under a high-speed stirring condition. The coagulated wet powder was dried at 240°C for 18 hours. Various physical properties of the resulting PTFE powder are shown below.
Standard specific gravity of PTFE powder: 2.172
Peak temperature of PTFE powder: 343°C
HFP content of PTFE: 0.031% by mass
Content of modifying monomer a in PTFE: 0.006% by mass

The resulting PTFE powder was subjected to paste extrusion forming under the following conditions using an extrusion forming machine equipped with a thoroughly washed extrusion die, and then the forming to obtain a bead having a length of 5 m was repeated multiple times to measure the paste extrusion pressure.

### <Paste extrusion forming conditions>

The extruder (reduction ratio 100) was thoroughly washed.

First, 100 g of PTFE powder and 21.7 g of a lubricant (trade name: Isopar H (R), manufactured by Exxon) were mixed in a glass bottle and retained at room temperature (25±2°C) for 1 hour to give a mixture.

The cylinder of an extruder (reduction ratio 100) was filled with the mixture, and extruded from an orifice (a diameter of 2.5 mm, a land length of 11 mm, and an introduction angle of 30°) at a ram speed of 20 inches/min (51 cm/min) at room temperature (25°C). As for the extrusion pressure, a value obtained by dividing the load (N) attained when the pressure in an extrusion operation reaches an equilibrium state by the cross-sectional area of the cylinder was regarded as a paste extrusion pressure (MPa).

The results are shown below.
Paste extrusion pressure in first forming: 24.6 MPa
Paste extrusion pressure in fourth forming: 25.4 MPa

The paste extrusion pressure increased by 0.8 MPa, and thus the rate of increase in paste extrusion pressure was 3.3%.

### Example 1

PTFE powder was obtained in the same manner as Comparative Example 1 except that the diluted aqueous PTFE dispersion was regulated to 40°C, and 2.0 parts by mass of ammonium nitrate was added to the diluted aqueous dispersion per 100 parts by mass of PTFE, and then the mixture was coagulated under high-speed stirring conditions. Various physical properties of the resulting PTFE powder are shown below.
Standard specific gravity of PTFE powder: 2.172
Peak temperature of PTFE powder: 343°C
HFP content of PTFE: 0.031% by mass
Content of modifying monomer a in PTFE: 0.006% by mass

The paste extrusion pressure was measured in the same manner as Comparative Example 1. The results are shown below.
Paste extrusion pressure in first forming: 24.9 MPa
Paste extrusion pressure in fourth forming: 25.0 MPa

The paste extrusion pressure increased by 0.1 MPa, and thus the rate of increase in paste extrusion pressure was 0.4%.

### Example 2

PTFE powder was obtained in the same manner as Comparative Example 1 except that the diluted aqueous PTFE dispersion was regulated to 22°C, 0.5 parts by mass of ammonium nitrate was added to the diluted aqueous dispersion per 100 parts by mass of PTFE, further, 36 parts by mass of a 10% aqueous nitric acid solution was added, and then the mixture was coagulated under high-speed stirring conditions. Various physical properties of the resulting PTFE powder are shown below.
Standard specific gravity of PTFE powder: 2.172
Peak temperature of PTFE powder: 343°C
HFP content of PTFE: 0.031% by mass
Content of modifying monomer a in PTFE: 0.006% by mass

The paste extrusion pressure was measured in the same manner as Comparative Example 1. The results are shown below.
Paste extrusion pressure in first forming: 26.7 MPa
Paste extrusion pressure in fourth forming: 27.2 MPa

The paste extrusion pressure increased by 0.5 MPa, and thus the rate of increase in paste extrusion pressure was 1.9%.

## Claims

1. A method for producing a fluoropolymer composition, comprising bringing a fluoropolymer raw material into contact with an oxidizing agent, wherein the fluoropolymer raw material is obtained by polymerizing a fluoromonomer in an aqueous medium in the presence of a polymer (I) containing a polymerization unit (I) derived from a monomer (I) represented by the general formula (I):
CX¹X³=CX²R(-CZ¹Z²-A⁰)ₘ (I)
wherein X¹ and X³ are each independently F, Cl, H, or CF₃; X² is H, F, an alkyl group, or a fluorine-containing alkyl group; A° is an anionic group; R is a linking group; Z¹ and Z² are each independently H, F, an alkyl group, or a fluorine-containing alkyl group; and m is an integer of 1 or more.

2. The production method according to claim 1, wherein the oxidizing agent is at least one selected from the group consisting of an inorganic acid and a salt thereof.

3. The production method according to claim 1 or 2,
wherein the oxidizing agent is at least one selected from the group consisting of nitric acid and a salt thereof as well as perchloric acid and a salt thereof.

4. The production method according to any one of claims 1 to 3, wherein an amount of the oxidizing agent is 0.01 to 20% by mass based on the fluoropolymer in the fluoropolymer raw material.

5. The production method according to any one of claims 1 to 4, wherein a temperature at which the fluoropolymer raw material is brought into contact with the oxidizing agent is 5 to 90°C.

6. The production method according to any one of claims 1 to 5, the method comprises polymerizing the fluoromonomer in the aqueous medium in the presence of the polymer (I) to give the fluoropolymer raw material, adding an oxidizing agent to the fluoropolymer raw material to bring the fluoropolymer raw material into contact with the oxidizing agent, and heat-treating the fluoropolymer composition containing the oxidizing agent to give the fluoropolymer composition.

7. The production method according to any one of claims 1 to 6, wherein the fluoropolymer raw material is a fluoropolymer raw material dispersion or a fluoropolymer raw material slurry.

8. The production method according to any one of claim 6 or 7, wherein the fluoropolymer raw material is a fluoropolymer raw material dispersion, and the method comprises coagulating the fluoropolymer in the fluoropolymer raw material dispersion while bringing the fluoropolymer raw material dispersion into contact with the oxidizing agent.

9. The production method according to claim 8, the method comprises further adding a coagulating agent in addition to the oxidizing agent.

10. The production method according to any one of claims 1 to 9, wherein the fluoropolymer composition is a fluoropolymer fine powder.

11. The production method according to any one of claims 1 to 10, wherein the fluoropolymer composition is a molding material to be used to obtain a formed article by paste extrusion forming.

12. The production method according to any one of claims 1 to 11, wherein the fluoropolymer raw material is a polytetrafluoroethylene raw material, and the fluoropolymer composition is a polytetrafluoroethylene composition.

13. A fluoropolymer composition containing at least a fluoropolymer, wherein when forming to obtain a bead having a length of 5 m by subjecting the fluoropolymer composition to paste extrusion forming using an extrusion forming machine equipped with a thoroughly washed extrusion forming die is repeated multiple times, a rate of increase in paste extrusion pressure in the fourth forming based on the paste extrusion pressure in the first forming is 3.0% or less.
